# EUROPEAN PATENT SPECIFICATION

(11) **EP 3 804 284 B1**
(45) Date of publication and mention of the grant of the patent: **24.05.2023**
(21) Application number: 19815501.2
(22) Date of filing: 04.06.2019
(51) Int. Cl.: H04L 67/00, H04L 69/40

(54) **SYSTEMS AND METHODS FOR PROVIDING UNIFORM ACCESS IN A MULTI-TENANT SYSTEM**
SYSTEME UND VERFAHREN ZUR BEREITSTELLUNG EINES EINHEITLICHEN ZUGANGS IN EINEM MANDANTENFÄHIGEN SYSTEM
SYSTÈMES ET PROCÉDÉS POUR LA FOURNITURE D'UN ACCÈS UNIFORME DANS UN SYSTÈME MULTI-LOCATAIRE

(30) Priority: 04.06.2018 US 201862680559 P; 04.06.2018 US 201862680575 P; 04.06.2018 US 201862680572 P
(43) Date of publication of application: 14.04.2021
(73) Proprietor: Zuora, Inc., Redwood City, CA 94065 (US)
(72) Inventor: SCHMIEDEHAUSEN, Henning, Los Altos, California 94024 (US); FUSSEDER, Nicolas, San Diego, California 92117 (US); VASILEVSKIY, Alexander, Palo Alto, California 94306 (US)
(74) Representative: Marks & Clerk LLP
(86) International application number: PCT/US2019/035465
(87) International publication number: WO 2019/236634

(56) References cited:
- US-A1- 2003 191 677
- US-A1- 2006 235 831
- US-A1- 2012 130 973
- US-A1- 2013 097 204
- US-A1- 2014 075 239
- US-A1- 2016 308 963
- "Architecture for Managing Clouds A White Paper from the Open Cloud Standards Incubator;DSP-IS0102", ITU-T DRAFT ; STUDY PERIOD 2013-2016, INTERNATIONAL TELECOMMUNICATION UNION, GENEVA ; CH, vol. cloud, 9 September 2010 (2010-09-09), pages 1-57, XP044096122, [retrieved on 2010-09-09]

## Description

### TECHNICAL FIELD

This disclosure pertains to multi-tenant computing systems. More specifically, this disclosure pertains to providing uniform access in multi-tenant computing systems. Further, this disclosure pertains to multi-tenant systems for providing arbitrary query support. Further, this disclosure pertains to providing error recovery in data transmissions.

### BACKGROUND

Under conventional approaches, a data layer may provide different application programming interfaces (APIs) for accessing disparate data sources. For example, a data layer may include fifty different APIs for accessing fifty different data sources However, such conventional data layers are typically difficult to implement and/or maintain, and they do not effectively scale. For example, changes to the data sources typically breaks the layer and/or API(s) of the layer.

Under conventional approaches, data is stored in a monolithic datastore. Users may easily query the data by providing a query (e.g., an SQL query) directly to the monolithic datastore. However, such query methods are not effective for data stored in multiple datastores.

Under conventional approaches, data streams may experience transmission errors. For example, network devices (e.g., routers) may fail, open network connections may periodically time-out and/or close, and/or the like. Typically, a failed transmission of a data stream has to be restarted at the beginning of the data stream. This may, for example, result in the retransmission of large amounts of data. In some instances, data streams may have to be restarted from the beginning of the data stream multiple times, and/or may never be successfully completed (e.g., if the amount of data to be streamed is large).

Document US 2013/097204 A1 discloses a module which provides an interface between a multi-tenant database and a non-tenant-specific application instance such that the application instance sends data access commands to the module as if it is communicating with a single-tenant database.

### SUMMARY

A claimed solution rooted in computer technology overcomes problems specifically arising in the realm of computer technology. In various embodiments, a multi-tenant computing system (or, simply, multi-tenant system) is configured to receive a user request. The user request may be a request initiated by a tenant (e.g., Verizon) of the multi-tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to access the different services, and/or the data associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services, a format for data input to services, and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

Various embodiments of the present disclosure include systems, methods, and non-transitory computer readable media configured to receive, by a central controller engine, a user request to perform one or more operations associated with user data, wherein the user data includes first data and second data. Select, by the central controller engine based on the user request, a first service provider interface (SPI) integrated into a first service, the first SPI being configured to operate on the first data in a first datastore associated with the first service, the first SPI including a common interface component configured to facilitate communication between the central controller engine and the first SPI, and the first SPI including a first service interface component configured based on a uniform access specification. Obtain, by the first service using the first SPI, at least a portion of the first data from the first datastore associated with the first service, the at least a portion of the first data being formatted according to a first service data specification. Transform, by the first SPI based on the uniform access specification, the at least a portion of the first data, thereby generating transformed first data formatted according to the uniform access specification. Provide, by the first service using the first SPI, the transformed first data to a target service. Store, by the central controller engine, a first state of the first service. Determine, by the central controller engine, a failure of the first service. Relaunch, by the central controller engine, in response to determining the failure of the first service, the first service based on the stored first state of the first service.

In some embodiments, the systems, methods, and non-transitory computer readable media further configured to select, by the central controller engine based on the user request, a second service provider interface (SPI) integrated into a second service, the second SPI being configured to operate on the second data in a second datastore associated with the second service, the second SPI including the common interface component configured to facilitate communication between the central controller engine and the second SPI, and the second SPI including a second service interface component configured based on the uniform access specification; obtain, by the second service using the second SPI, at least a portion of the second data from the second datastore associated with the second service, the at least a portion of the second data being formatted according to a second service data specification; transform, by the second SPI based on the uniform access specification, the at least a portion of the second data, thereby generating transformed second data formatted according to the uniform access specification; and provide, by the second service using the second SPI, the transformed second data to the target service.

In some embodiments, the user data comprises tenant data, the first data comprises usage data, and the second data comprises subscription data

In some embodiments, the first service comprises a usage service, and the second service comprises a subscription service.

In some embodiments, the central controller engine comprises a different service from the target service.

In some embodiments, the central controller engine comprises the target service.

In some embodiments, the systems, methods, and non-transitory computer readable media are further configured to store, by the central controller engine, a second state of the second service.

In some embodiments, the systems, methods, and non-transitory computer readable media further configured to determine, by central controller engine, a failure of the second service; and relaunch, by the central controller engine in response to the determining the failure of the second service, the second service based on the stored second state of the second service.

In some embodiments, the providing, by the first service using the first SPI, the transformed first data to a target service, comprises streaming, by a common communication component of the first service using the first SPI, the transformed first data to the first target service; and wherein the providing, by the second service using the second SPI, the transformed second data to a second target service, comprises streaming, by a common communication component of the second service using the first SPI, the transformed second data to the second target service, the common communication component of the first service being the same as the common communication component of the second service.

A claimed solution rooted in computer technology overcomes problems specifically arising in the realm of computer technology. In various embodiments, a multi -tenant computing system (or, simply, multi-tenant system) is configured to receive a user request to perform a query. The user request may be a request initiated by a tenant (e.g., Verizon) of the multi -tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to query the different services, and/or the datastores associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services (e.g., query results), a format for data input to services (e.g., query format), and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

In some embodiments, the multi-tenant system includes an arbitrary query engine to query disparate services and/or disparate datastores in a manner that does not appear (e.g., to the user that initiated the user request) to be different from querying a monolithic datastore. For example, the user request supplied by the user to the arbitrary query engine may be the same request that the user can supply to a system that queries a monolithic datastore. In order to query disparate services and/or disparate datastores in such a manner, the arbitrary query engine may include query nodes, and each of the query nodes may be associated with a service connector node. The service connector nodes may allow the service provider interfaces of the various services to hook into the arbitrary query engine. Accordingly, the service connectors may be the arbitrary query engine's counterpart to the service provider interfaces of the services.

In some embodiments, a query node may handle a portion of a query. For example, a single query may relate to usage data and subscription data. The arbitrary query engine may partition the query into sub-queries, and send a usage sub-query (e.g., the portion of the query relating to usage data) to a first query node, and send a subscription sub-query (e.g., the portion of the query relating to subscription data) to a second query node. A usage service connector node may determine a usage service provider interface associated with the usage service, and then send the usage sub-query to the usage service provider interface for processing. A subscription connector node may determine a subscription service provider interface associated with the subscription service, and then send the usage sub-query to the usage service provider interface for processing. The service connector nodes may also handle the return output of the service provider interfaces. The arbitrary query engine may provide the results (e.g., the combined returned output) to the user.

In various embodiments, a computing system is configured to receive, by an arbitrary query user interface, a user request to perform a query associated with user data, wherein the user data includes first data and second data. Partition, by a coordinator node of an arbitrary query engine, the query into at least a first sub-query and a second sub-query. Assign, by the coordinator node of the arbitrary query engine, the first sub-query to a first query node of the arbitrary query engine. Identify, by a first service connector associated with the first query node of the arbitrary query engine, a first service provider interface (SPI) integrated into a first service, the first service being capable of processing the first sub-query, the first SPI being configured to operate on the first data in a first datastore associated with the first service, the first SPI including a common interface component configured to facilitate communication between the arbitrary query engine and the first SPI, and the first SPI including a first service interface component configured based on a uniform access specification. Provide, by the first service connector associated with the first query node of the arbitrary query engine, the first sub-query to the first service provider interface. Obtain, by the first service using the first SPI, at least a portion of the first data from the first datastore associated with the first service, the at least a portion of the first data being formatted according to a first service data specification. Transform, by the first SPI based on the uniform access specification, the at least a portion of the first data, thereby generating transformed first data formatted according to the uniform access specification. Provide, by the first service using the first SPI, the transformed first data to the arbitrary query engine

In some embodiments, the systems, methods, and non-transitory computer readable media are further configured to assign, by the coordinator node of the arbitrary query engine, the second sub-query to a second query node of the arbitrary query engine. Select, by a second service connector associated with the second query node of the arbitrary query engine, a second service provider interface (SPI) integrated into a second service, the second service being capable of processing the second sub-query, the second SPI being configured to operate on the second data in a second datastore associated with the second service, the second SPI including a common interface component configured to facilitate communication between the arbitrary query engine and the second SPI, and the second SPI including a second service interface component configured based on a uniform access specification. Provide, by the second service connector associated with the second query node of the arbitrary query engine, the second sub-query to the second service provider interface. Obtain, by the second service using the first SPI, at least a portion of the first data from the second datastore associated with the second service, the at least a portion of the second data being formatted according to a second service data specification. Transform, by the second SPI based on the uniform access specification, the at least a portion of the second data, thereby generating transformed second data formatted according to the uniform access specification. Provide, by the second service using the first SPI, the transformed second data to the arbitrary query engine.

In some embodiments, the user data comprises tenant data, the first data comprises usage data, and the second data comprises subscription data.

In some embodiments, the first service comprises a usage service, and the second service comprises a subscription service.

In some embodiments, the first and second service connectors select the first and second service provider interfaces based on a file that is stored in each of the first and second service connectors, the file storing the locations of the first and second service provider interfaces.

In some embodiments, the first and second service connectors select the first and second service provider interfaces based on querying a third service for the locations of the first and second service provider interfaces, the third service maintaining the locations of the first and second service provider interfaces.

In some embodiments, any of the query and the first and second sub-queries comprise SQL queries.

In some embodiments, the first and second service connectors are integrated into the arbitrary query engine as one or more linked libraries.

In some embodiments, the providing, by the first service using the first SPI, the transformed first data, comprises streaming, by a common communication component of the first service using the first SPI, the transformed first data; and the providing, by the second service using the second SPI, the transformed second data, comprises streaming, by a common communication component of the second service using the first SPI, the transformed second data, the common communication component of the first service being the same as the common communication component of the second service.

A claimed solution rooted in computer technology overcomes problems specifically arising in the realm of computer technology. In various embodiments, a multi-tenant computing system (or, simply, multi-tenant system) is configured to receive a user request. The user request may be a request initiated by a tenant (e.g., Verizon) of the multi-tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to access the different services, and/or the data associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services, a format for data input to services, and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

In some embodiments, the multi-tenant system is configured to perform real-time pagination. Real-time pagination may provide improved error recovery for a failed data transmission by allowing the data transmission to be reinitiated at a current page of the data transmission (e.g., page 55) as opposed to the beginning of the data transmission. In some embodiments, a service provider interface writes pages of data in real-time (e.g., as opposed to having pre-generated pages) by buffering data from the datastore of the service into a buffer of the service provider interface. The service may stream the data from the datastore of the service to the buffer of the service provider interface. A receiver (e.g., a central controller engine of the multi-tenant system) may pull (or, fetch) pages from the service provider interface. For example, the receiver may periodically provide a request to the service provider interface. If the buffer is full (e.g., the page has been completely written), and/or if the service request has been satisfied (e.g., all of the usage data has been obtained from the datastore, and all of the usage data amounts to less than a full page), the service provider interface may allow the data to be fetched from the buffer and stored in a datastore of the receiver. Once the receiver begins fetching the data from the service provider interface, the service provider interface may begin writing a second page of records into a second buffer of the service provider interface. When the receiver has received all of the records of the first page, it may send a request to fetch the records of the second page from the second buffer of the service provider interface. If an error occurs, for example, in the data transmission of a second page of records between the service provider interface and the receiver, the data transmission may be reinitiated at the second page, as opposed to the beginning of the data transmission (e.g., the first page of records).

The receiver may also begin streaming a page of records to a user (e.g., the tenant) when the receiver has successfully received the page of records. Accordingly, from the user's perspective, the user appears to be receiving a stream of data from the service, and the intermediate fetches are not apparent to the user.

Various embodiments of the present disclosure include systems, methods, and non-transitory computer readable media configured to receive, by a central controller engine, a user request to perform one or more service requests associated with user data, wherein the user data includes first data. Select, by the central controller engine based on the user request, a first service provider interface (SPI) integrated into a first service, the first SPI being configured to operate on the first data in a first datastore associated with the first service, the first SPI including a common pagination component configured to obtain and buffer the first data from the first datastore into a first buffer of the first service provider interface. Obtain, by the common pagination component of the first service provider interface based on a first service request of the one or more service requests, a first page of records of the first data from the first datastore. Buffer, by the common pagination component of the first service provider interface, the first page of records in the first buffer of the first service provider interface as the records of the first page of records are being obtained from the first datastore. Provide, by the common pagination component of the first service provider interface, the first page of records of the first data to the central controller engine. Store, by the central controller engine, the first page of records of the first data. Provide, by the central controller engine, the first page of records of the first data to a user.

In some embodiments, the first page of records of the first data is provided to the central controller engine by the common pagination component of the first service provider interface in response to a first fetch request from the central controller engine, and when the first buffer of the first service provider interface is full or when the first service request is satisfied.

In some embodiments, the systems, methods, and non-transitory computer readable media are further configured to obtain, by the common pagination component of the first service provider interface based on the first service request of the one or more service requests, a second page of records of the first data from the first datastore; buffer, by the common pagination component of the first service provider interface, the second page of records in the second buffer of the first service provider interface as the records of the second page of records are being obtained from the first datastore; provide, by the common pagination component of the first service provider interface, the second page of records of the first data to the central controller engine; store, by the central controller engine, the second page of records of the first data; and provide, by the central controller engine, the second page of records of the first data to the user.

In some embodiments, the second page of records of the first data is provided to the central controller engine by the common pagination component of the first service provider interface in response to a second fetch request from the central controller engine, and when the first buffer of the first service provider interface is full or when the first service request is satisfied.

In some embodiments, the second fetch is based on an identifier of the second buffer of the first service provider interface, the identifier being included in the first page of records.

In some embodiments, the obtaining, by the common pagination component of the first service provider interface based on a first service request of the one or more service requests, the first page of records of the first data from the first datastore comprises pushing, by the first service, the first page of records of the first data from the first datastore to the first buffer of the first service provider interface. In some embodiments, the pushing comprises streaming.

In some embodiments, the providing, by the common pagination component of the first service provider interface, the first page of records of the first data to the central controller engine comprises pulling, by the central controller engine, the first page of records of the first data from the first buffer of the first service provider interface to a datastore of the central controller engine.

In some embodiments, the providing, by the common pagination component of the first service provider interface, the first page of records of the first data to the central controller engine comprises pulling, by the central controller engine, the first page of records of the first data from the first buffer of the first service provider interface to a datastore of the central controller engine.

In some embodiments, the systems, methods, and non-transitory computer readable media are further configured to detect an error associated with the first service request; and reinitiate the providing, by the common pagination component of the first service provider interface, the second page of records of the first data to the central controller engine.

In some embodiments, the systems, methods, and non-transitory computer readable media are further configured to select, by the central controller engine based on the user request, a second service provider interface (SPI) integrated into a second service, the second SPI being configured to operate on the second data in a second datastore associated with the second service, the second SPI including the common pagination component configured to obtain and buffer the second data from the second datastore into a second buffer of the second service provider interface; obtain, by the common pagination component of the second service provider interface based on a second service request of the one or more service requests, a first page of records of the second data from the second datastore; buffer, by the common pagination component of the second service provider interface, the first page of records of the second data in the first buffer of the second service provider interface as the records of the first page of records are being obtained from the second datastore; provide, by the common pagination component of the first service provider interface, the first page of records of the second data to the central controller engine; store, by the central controller engine, the first page of records of the second data; and provide, by the central controller engine, the first page of records of the first data to the user.

These and other features of the systems, methods, and non-transitory computer readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as a definition of the limits of the invention.

The invention is defined by the appended claims.

### BRIEF DESCRIPTION OF THE DRAWINGS

FIG. 1 depicts a diagram of an example network system for providing cloud-based software-as-a-service (SAAS) services of a multi-tenant system to multiple tenants according to some embodiments of the present invention.
FIG. 2 depicts a diagram of an example portion of a multi-tenant system for enabling uniform access to data in disparate datastores and/or disparate services according to some embodiments.
FIG. 3 depicts a diagram of an example service provider interface (SPI) according to some embodiments.
FIG. 4A depicts a diagram of an example export process using an example central controller engine and an example service provider interface (SPI) of an example portion of a multi-tenant system according to some embodiments.
FIG. 4B depicts a diagram of an example import process using an example central controller engine and an example service provider interface (SPI) of an example portion of a multi-tenant system according to some embodiments.
FIG. 5A-B depict a flowchart of an example of a method of providing uniform access in a multi-tenant system according to some embodiments.
FIG. 6 is a diagram of an example computer system for implementing the features disclosed herein according to some embodiments.
FIG. 7 depicts a diagram of an example network system for providing cloud-based software-as-a-service (SAAS) services of a multi-tenant system to multiple tenants according to some embodiments of the present invention.
FIG. 8 depicts a diagram of an example portion of a multi-tenant system for managing arbitrary queries across distributed datastores according to some embodiments.
FIG. 9 depicts a diagram of an example service provider interface (SPI) according to some embodiments.
FIG. 10 depicts a diagram of example portion of a multi-tenant system for managing arbitrary queries across distributed datastores according to some embodiments
FIGS. 11A-B depict a flowchart of an example of a method of querying distributed datastores according to some embodiments.
FIG. 12 is a diagram of an example computer system for implementing the features disclosed herein according to some embodiments.
FIG. 13 depicts a diagram of an example network system for providing cloud-based software-as-a-service (SAAS) services of a multi-tenant system to multiple tenants according to some embodiments of the present invention.
FIG. 14 depicts a diagram of an example portion of a multi-tenant system for enabling uniform access to data in disparate datastores and/or disparate services according to some embodiments.
FIG. 15 depicts a diagram of an example service provider interface (SPI) according to some embodiments.

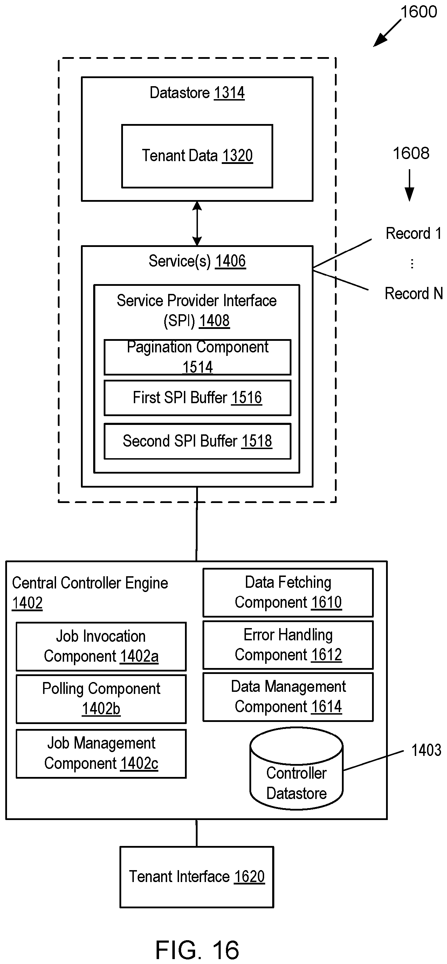

FIG. 16 depicts a diagram of an example portion of a multi-tenant system enabling real-time pagination and error recovery in a data transmission according to some embodiments.
FIG. 17A depicts a diagram of example paginated record sets ready for transmission to a central controller engine of a multi-tenant system according to some embodiments.
FIG. 17B depicts a flowchart of an example of a method of real-time paginated record transmission in a multi-tenant system according to some embodiments.

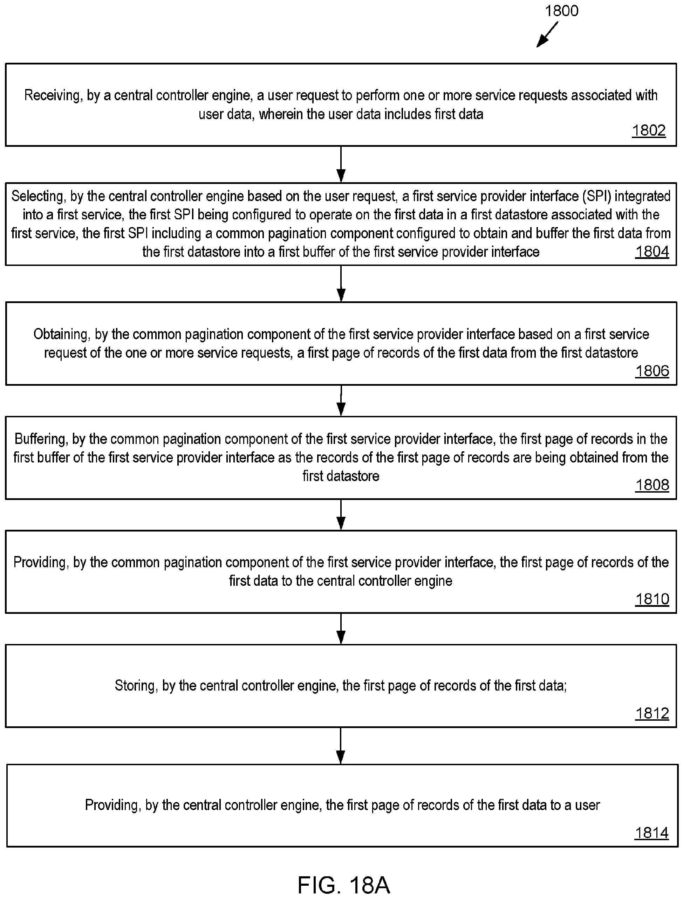

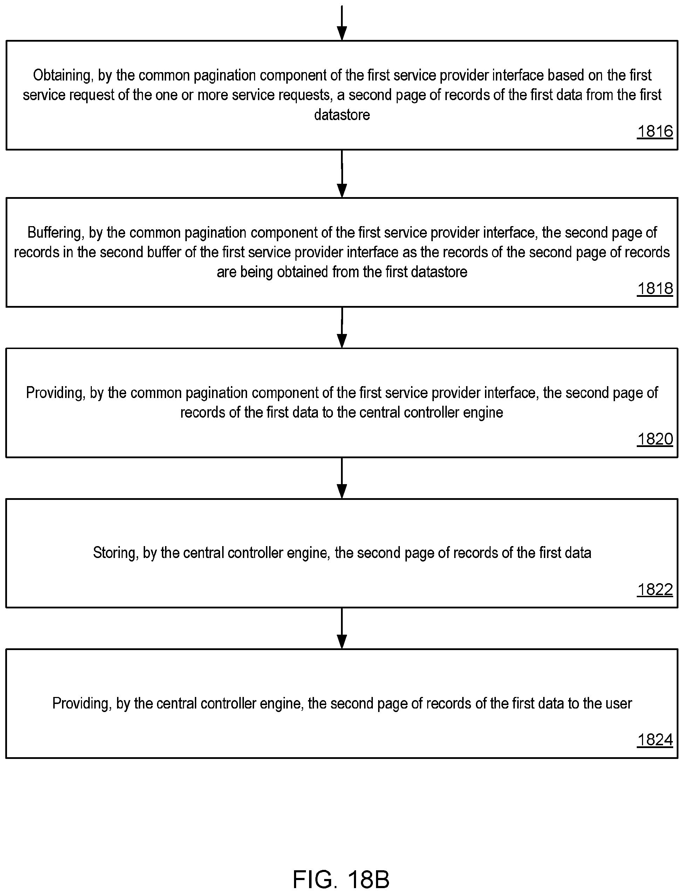

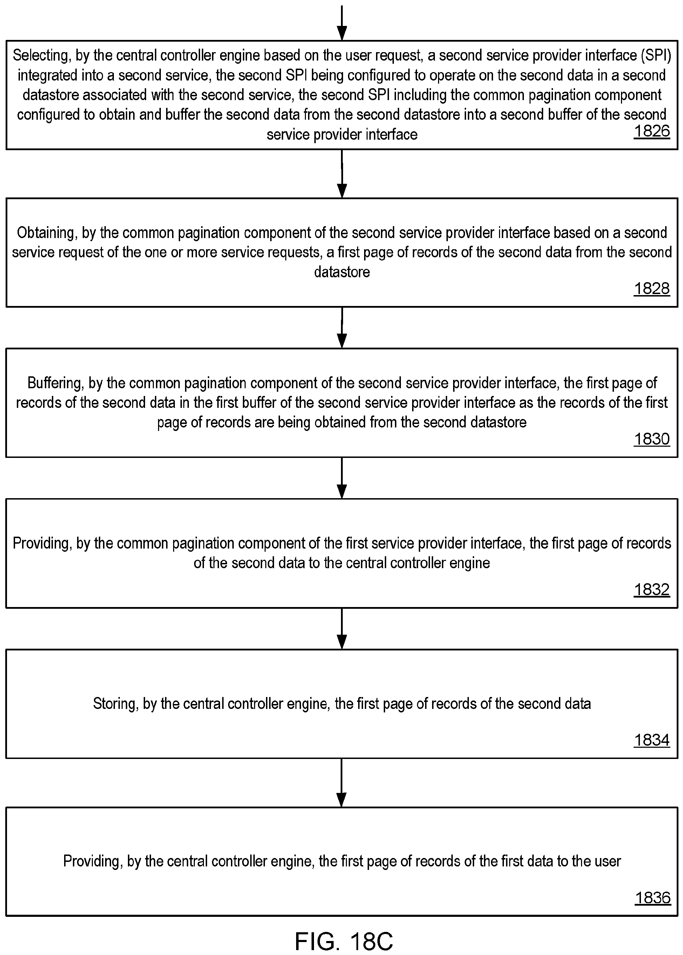

FIGS. 18A-C depict a flowchart of an example of a method of real-time paginated record transmission in a multi-tenant system according to some embodiments.
FIG. 19 is a diagram of an example computer system for implementing the features disclosed herein according to some embodiments.

### DETAILED DESCRIPTION

A claimed solution rooted in computer technology overcomes problems specifically arising in the realm of computer technology. In various embodiments, a multi-tenant computing system (or, simply, multi-tenant system) is configured to receive a user request. The user request may be a request initiated by a tenant (e.g., Verizon) of the multi-tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to access the different services, and/or the data associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services, a format for data input to services, and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

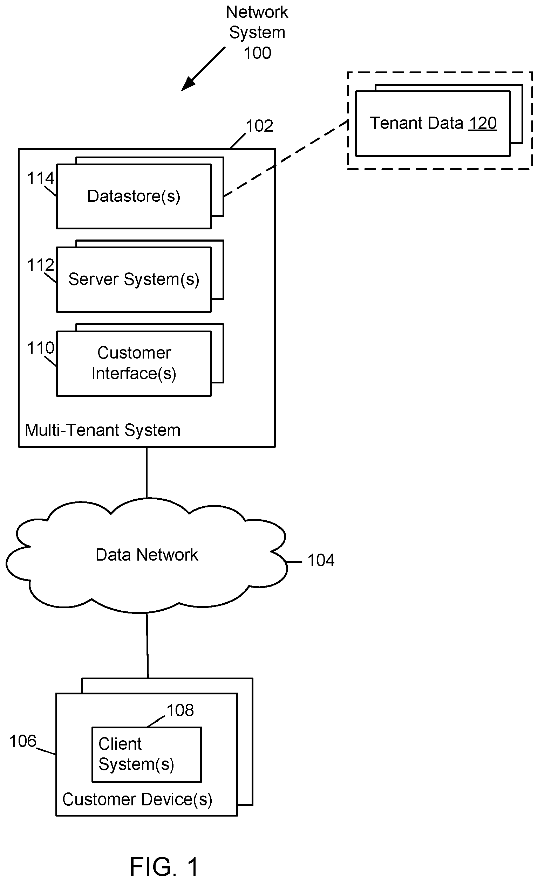

FIG. 1 depicts a diagram of an example network system 100 for providing cloud-based software-as-a-service (SAAS) services of a multi-tenant system 102 to multiple tenants according to some embodiments. Examples of the cloud-based SAAS services include data storage, data processing, and business-oriented applications. In some embodiments, each tenant may be a subscription-based entity or provider (e.g., an internet service provider, a home security system and service provider, a cellular phone service provider, or entertainment content provider). Each tenant may include a group of one or more users (e.g., individuals, business entities, customers of the business entities, systems) who share access to the cloud-based services. In one embodiment, a tenant includes a service entity such as AT&T, Netflix, Verizon, and/or the like. A tenant may include one or more products or services of an entity. For example, AT&T internet products may be a particular tenant, and AT&T security products may be another tenant. In some embodiments, the cloud-based SAAS services relate to managing subscriber records, product and/or service consumption information, billing information, payment information, and/or the like.

The network system 100 includes the multi-tenant system 102 coupled via a data network 104 (e.g., a set of one or more public and/or private, wired and/or wireless networks) to client devices 106. The multi-tenant system 102 includes shared resources to host the cloud-based SAAS services to the tenants. The shared resources may include processors, memory, virtual systems, services, application programs, load balancers, firewalls, and/or the like. As shown, the multi-tenant system 102 includes tenant interfaces 110, server systems 112, and datastores 114. Each of the client devices 106 includes a client system 108 that accesses the cloud-based SAAS services hosted by the multi-tenant system 102. In some embodiments, the client systems 108 may be operated by employees (e.g., administrator users) of the provider of the provider of the multi-tenant system 102. In some embodiments, the client systems 108 may be operated by employees of the tenant. In some embodiments, the client systems 108 may be operated by end users of the tenant's services.

Each client device 106 may include a desktop, laptop, notebook, tablet, personal digital assistant, smart phone, or other consumer electronic devices incorporating one or more computer components. The client system 108 on each client device 106 may include hardware, software and/or firmware for communicating with the multi-tenant system 102 and accessing the cloud-based services it hosts. Examples of the client systems 108 may include web browsers, client engines, drivers, user interface components, proprietary interfaces, and/or the like.

The multi-tenant system 102 includes hardware, software and/or firmware to host the cloud-based services for the tenants. It will be appreciated that the typical multi-tenant system 102 may offer access to shared resources including systems and applications on shared devices and offer each tenant the same quality or varying qualities of service. In some embodiments, the multi-tenant system 102 does not use virtualization or instantiation processes. In some embodiments, a multi-tenant system 102 integrates several business computing systems into a common system with a view toward streamlining business processes and increasing efficiencies on a business-wide level.

In some embodiments, the multi-tenant system 102 includes a user interface tier of multiple tenant interfaces 110, a server tier of multiple server systems 112, and a datastore tier of multiple datastores 114 for the multiple tenants. In some embodiments, the tenant interfaces 110 includes graphical user interfaces and/or web-based interfaces to enable tenants to access the shared services hosted by the multi-tenant system 102. The tenant interfaces 110 may support load balancing when multiple tenants (and/or multiple customers of the tenants) try to access the multi-tenant system 102 concurrently. The tenant interfaces 110 may additionally or alternatively include an operator interface for use by a systems operator to configure or otherwise manage the multi-tenant system 102. In some embodiments, each tenant may be associated with a subset of the total tenant interfaces 110 for load balancing.

In some embodiments, the server systems 112 include hardware, software and/or firmware to host the shared services for tenants. The hosted services may include tenant-specific business services or functions, including enterprise resource planning (ERP), customer relationship management (CRM), eCommerce, Human Resources (HR) management, payroll, financials, accounting, calendaring, order processing, subscription billing, inventory management, supply chain management (SCM), collaboration, sales force automation (SFA), marketing automation, contact list management, call-center support, web-based customer support, partner and vendor management systems, product lifecycle management (PLM), financial, reporting and analysis, and/or the like. Similar to the tenant interfaces 110, in some embodiments, the server systems 110 may support load balancing when multiple tenants (and/or multiple customers of tenants) try to access the multi-tenant system 102 concurrently. Further, in some embodiments, each tenant may be associated with a subset of the total server systems 112 for load balancing.

In some embodiments, tenant data 120 for each tenant may be stored in a logical store across one or more datastores 114. In some embodiments, each tenant uses a logical store that is not assigned to any predetermined datastores 114. Each logical store may contain tenant data 120 that is used, generated and/or stored as part of providing tenant-specific business services or functions. In some embodiments, the datastores 114 may include relational database management systems (RDBMS), object-based database systems, and/or the like. In some embodiments, tenant data 120 may be stored across multiple datastores 114, with each datastore dedicated to a particular service (e.g., managing customer records, managing product and/or service consumption information, managing billing information, managing payment information, and/or the like).

In some embodiments, the tenant data 120 may include subscription information, such as billing data and/or subscription status (e.g., active, canceled, suspended, re-activated). Billing data may include billing invoice data (e.g., date of invoices and invoice amounts, overage charge dates and overage charge amounts), payment transaction data (e.g., date of payments, amount of payments), payment methods (e.g., credit card, debit card), payment plan (e.g., annual billing, monthly billing), and/or service plan information (e.g., the name of a service plan). Subscription information may also include a geographic region and/or location associated with a tenant, service, and/or subscriber. In some embodiments, the tenant data 120 may include usage data (e.g., account activity data), such as new subscriptions, changes to subscribed products and/or services, cancellation of one or more products and/or services, subscriptions to new products and/or services, application of discounts, loyalty program package changes (e.g., additional programs and/or services, special rates, and/or the like for loyal customers), reduction or increase of rates for products and/or services, and/or cancellation of the application. In some embodiments, account activity may include usage of a product and/or product of a subscriber (e.g., what channels the subscriber actually watches, what services and what level of consumption the subscriber receives, quality of the product and/or services, and/or the like).

In some embodiments, the tenant data 120 may be stored in one or more data formats (or, simply, formats). For example, subscription tenant data may be stored in a particular format, and usage tenant data may be stored in another format. As used herein, formats may include data types, variable types, protocols (e.g., protocols for accessing, storing, and/or transmitting data), programming languages, scripting languages, data value parameters (e.g., date formats, string lengths), endpoint locations and/or types, and/or the like.

In some embodiments, the multi-tenant system 102 functions to provide uniform access to disparate services (e.g., microservices) and/or disparate datastores. For example, different services of the multi-tenant system 102 may manage (e.g., create, read, update, delete) tenant data 120 stored in different datastores 114. It will be appreciated that as used herein, a "service" may be single service and/or a set of services (e.g., a cluster of services). The datastores 114 may store data in different formats, and/or the services may handle data differently. The services may each include a service provider interface (SPIs) that provides data from the service, and/or receives data at the service, in a common (or, uniform) format, regardless of the original format that may be used by the service and/or datastores 114. In some embodiments, the multi-tenant system 102 may define a uniform access specification that defines the common format that the services must comport with when receiving and/or providing data. For example, each service may include a service provider interface, and communication with the service may be performed through the service provider interface. Accordingly, each of the services may be accessed in a uniform manner, and data may be consumed from the services in a uniform manner, regardless of the internal specifications and/or operations of the service.

The data network (or, communication network) 104 may represent one or more computer networks (e.g., LAN, WAN, or the like) or other transmission mediums. The data network 104 may provide communication between the systems, engines, datastores, components, and/or devices described herein. In some embodiments, the data network 104 includes one or more computing devices, routers, cables, buses, and/or other network topologies (e.g., mesh, and the like). In some embodiments, the data network 104 may be wired and/or wireless. In various embodiments, the data network 104 may include the Internet, one or more wide area networks (WANs) or local area networks (LANs), one or more networks that may be public, private, IP-based, non-IP based, and so forth.

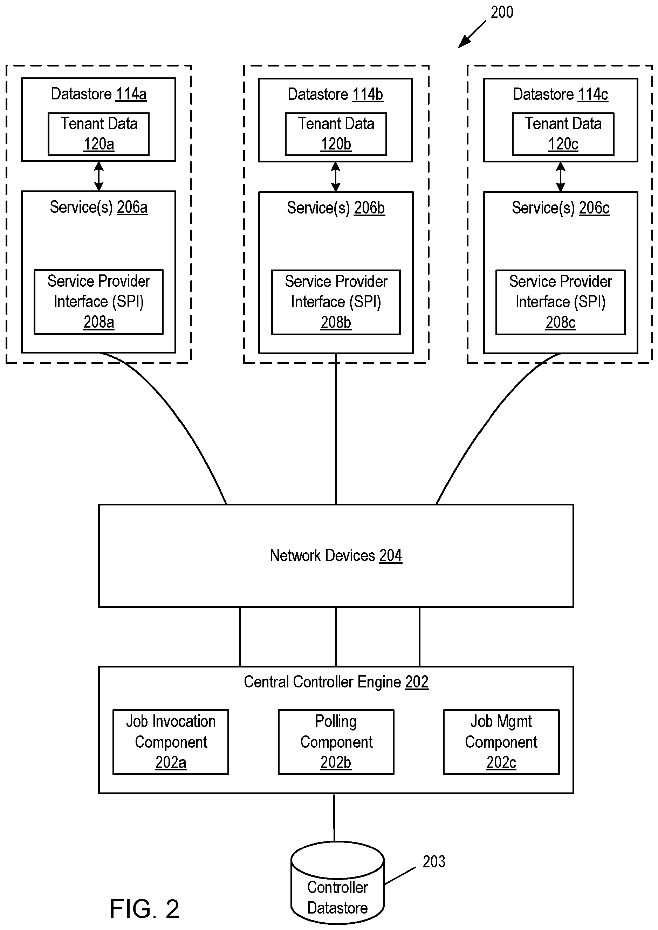

FIG. 2 depicts a diagram of an example portion 200 of a multi-tenant system 102 for enabling uniform access to data in disparate datastores 114 and/or disparate services 206 according to some embodiments. In the example of FIG. 2, the example portion 200 of the multi-tenant system 102 includes a central controller engine 202, network devices 204, services 206a to 206c (individually, the service 206, collectively, the services 206), service provider interfaces (SPIs) 208 (individually, the service provider interface 208, collectively, the service provider interfaces 208), and datastores 114a to 114c (individually, the datastore 114, collectively, the service provider datastores 114). The three datastores 114 may each be respectively managed by the three sets of one or more services 206, and each respectively made accessible in a uniform manner by the service provider interfaces (SPIs) 208. In some embodiments, the central controller engine 202, which may support internal or tenant communications, is coupled via network devices 204 with the datastores 114. The network devices 204 may include routers, load balancers, firewalls, and/or the like. Although only three services 206, three service provider interfaces 208, and three datastores 114 are shown here, it will be appreciated that the multi-tenant system 102 may support a greater or lesser number of such services 206, service provider interfaces 208, and/or datastores 114.

As discussed herein, the multi-tenant system 102 distributes tenant data across multiple datastores 114 at multiple locations. As shown, the multi-tenant system distributes tenant data across at least datastores 114a, 114b and 114c. The multi-tenant system 102 may include one or more services, shown as services 206a, 206b and 206c, to respectively manage the tenant data at each datastore 114 through one or more application program interfaces (APIs). APIs are typically designed to be specific to the purpose of the service it supports and may differ widely in the exposed capabilities and performance. For example, in some systems, each of the different datastores 114 and each of the different services 206 may be developed independently of one another and possibly by different development teams. Accordingly, it is common that the API calls are non-uniform.

To solve the nonuniformity, the system could incorporate a "glue" layer, e.g., an enterprise service bus or a service-oriented architecture (SOA layer) that access data via the APIs and exposes it to the consumers. Glue layers typically access data directly from the datastore, bypassing the services with their different APIs. Glue layers have been found to be brittle, needing to be matched continuously to changing APIs that the services expose. Further, direct database access often violates data integrity guarantees or service level agreements that a service is trying to offer. Further, data exposed directly from the database often has a different shape than the data exposed at API level. Data exposed directly from the database therefore requires extensive transformation to match the data shape of that received at the API level. API enforcement through code or process is often inconsistent, which often results in multiple incompatible implementations. By putting these requirements on the software development process, the resulting APIs may only be "lowest common denominator" APIs instead of matching the desired use cases for the services.

To enable uniform access to the services 206 and the tenant data 120 stored in the datastores 114, in some embodiments, the multi-tenant system 102 includes a software component embedded directly (or, integrated) into the services 206. In other embodiments, the software component may be hooked into the services 206, as opposed to embedded directly into the services 206. This software component, referred to herein as a service provider interface (SPI) 208a, 208b and 208c respectively, may be delivered as a library to a service development team for integration into the services 206 to make their services compatible, without having to change their APIs or expose internal details of their database. With the service provider interface 208 integrated into the services 206, the multi-tenant system 102 enables access to diverse data services in a uniform manner without having to build extensive glue layers between services, the consumers, and/or other features of the multi-tenant system 102. Each of the services 206 may enable access to the diverse data services without exposing their internal data organization and/or without bypassing the services 206. Development teams can use the service provider interfaces 208 to allow access to the data exposed by the services 206 in a uniform manner, and also provide data in a uniform manner, regardless of the internal formats and specification used by the service.

In the example of FIG. 2, the central controller engine 202 includes a job invocation component 202a, a polling component 202b, a job management component 202c. The job invocation component 202a may function to receive user requests (or, tenant requests). User requests may include export requests, import requests, and/or the like. For example, a request may include a request from a tenant to obtain some or all of the their tenant data 120. User requests may be received in a variety of different formats. For example, requests may be obtained in tenant formats (e.g., a Verizon format, an AT& format).

In some embodiments, the job invocation component 202a may function to identify and/or select service provider interfaces 208. In some embodiments, the job invocation component 202a may function to identify and/or select service provider interfaces 208 based on user requests. For example, the job invocation component 202a may store a topology of the services (e.g., in a file stored in the controller datastore 203). The topology of the services may also be maintained by another service, and the job invocation component 202a may query that other service for a current topology. The topology may indicate locations (e.g., an endpoint location) of service provider interfaces 208 and/or services 206. In some embodiments, the job invocation component 202a may parse a user request, and identify the services 206 to process the request based on the topology. For example, the job invocation component 202a may parse an extract request for usage data and subscription data, and identify the location of the service provider interface 208 for the usage service based on the topology, and the location of the service provider interface 208 for the subscription service based on the topology.

In some embodiments, the job invocation component 202a functions to provide (e.g., generate and/or transmit) service requests. For example, the job invocation component 202a may provide a service request based on a user request and a selected service provider interface 208. In some embodiments, the service request may be in a common format. For example, the job invocation component 202a may provide service requests based on a uniform access specification. The uniform access specification may define one or more common protocols, data formats, programming languages, endpoints, and/or the like, for communication between the services 206, the central controller engine 202, and/or other elements of the multi-tenant system 102. For example, the uniform access specification may define output format requirements for data output from the services 206, and input format requirement for the services 206.

In some embodiments, the job invocation component 202a functions to receive and/or provide information (e.g., in addition to user requests and/or service requests). For example, the job invocation component 202a may receive a request result, and provide the request results to another system and/or user (e.g., a tenant user). The request results may be in a common format (e.g., based on the service provider interface 208 and/or uniform access specification), regardless of which service 206 provided to the data. For example, a request result may include usage data and subscription data in a common format.

The polling component 202b may function to query services 206 to determine a status of jobs (e.g., service requests) and/or services 206. A status may include a completion status (e.g., 56% complete) of a job, and/or whether the service 206 is responsive or has timed-out. For example, the polling component 202b may query (e.g., poll) a usage service 206 to the determine the status of a request to obtain (e.g., fetch, pull, push) usage data for a particular tenant of the multi-tenant system 102. The polling component 202b may determine if a service has failed if query attempt fail.

The job management component 202c may function to maintain state information (or, simply, "state") of jobs, services 206, and/or the central controller engine 202. This may be more resilient than maintaining states at each of the services, and avoid having to perform state reconciliation. In some embodiments, the job management component 202c may store state information in the controller datastore 203. For example, state information may include the associated service request, a status of the service status, a status of the service request, and/or the like. If a service has failed (e.g., as determined by the polling component 202b), the job management component 202c may relaunch the failed according to the state information. Similarly, if the central controller engine 202 has recently relaunched (e.g., in response to failure of the central controller engine 102), the job management component 202c may relaunch services based on the state information.

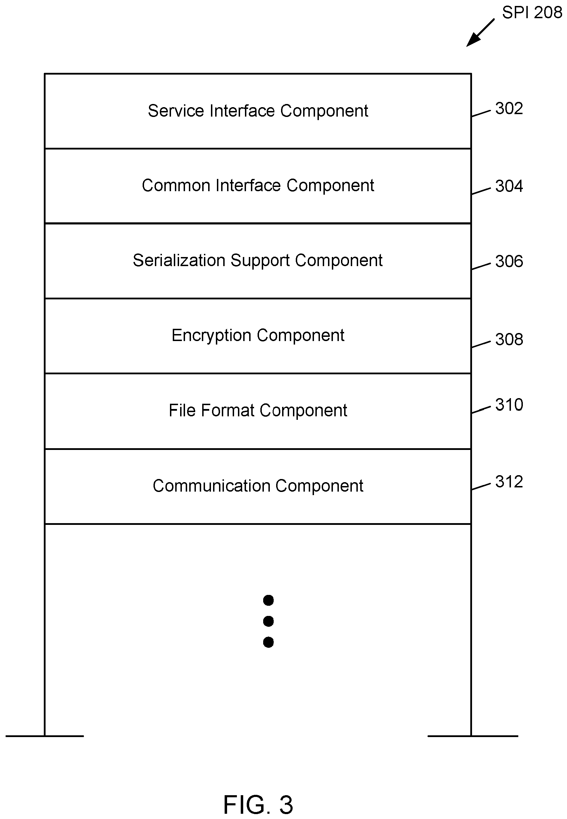

FIG. 3 depicts a diagram of an example service provider interface (SPI) 208 according to some embodiments. Generally, under some approaches (e.g., approaches that do not use service provider interfaces 208), services typically needed to receive information (e.g., service requests) in a format native to the particular service and/or associated datastores. Accordingly, information typically had to be provided in different formats for different services. Alternatively, under other approaches that do not use service provider interfaces 208, the entity providing the request for information, and/or receiving a response to the request for information, had to translate the requests prior to sending the request, and/or translate the responses after they have been sent from the service. The service provider interface 208 may allow information to be provided (e.g., from the requesting entity) to different services in a common format (e.g., based on a uniform access specification and/or service data specifications of the services), and/or may allow information to be provided from the different services in a common format (e.g., based on a uniform access specification and/or service data specifications of the services).

In the example of FIG. 3, the service provider interface 208 includes a service interface component 302, a common interface component 304, a serialization support component 308, an encryption component 310, a file format component 312, and a communication component 314. The service interface component 302 may function to facilitate implementation of uniform access for a particular service 208. While the other components (e.g., components 304-312) of the service provider interface 208 may be common across all of the service provider interfaces 208, the service interface component 302 may be modified for the particular service 208. In some embodiments, services 208 may be implemented and/or managed by different development teams. For example, a usage service 208 may be managed by a usage development team, a subscription service 208 may be managed by a subscription development team, and so forth. The different services 208 may adhere to different service data specifications. For example, a usage service 208 may store and/or access data according to a first format (e.g., data format, access protocols), and a subscription service 208 may store and/or access data according to another format (e.g., another data format, another access protocol). The service interface component 302 may provide the instructions for processing requests received in a common format, and/or providing responses to such requests in a common format. For example, the service interface component 302 may translate requests received according to a common format into a request that can be processed by a service that is formatted according to a specific data specification of that service. More specifically, for example, the common request may include variable for various parameters (e.g., access protocol types, data format types, endpoint locations, and/or the like), and the service interface component 302 may define the values for those variables.

In some embodiments, the service interface component 302 of a service provider interface may be deployed (e.g., to a particular service) with a template service interface component, which may be modified (e.g., by the particular service) based on the service data specification of the particular service.

The common interface component 304 may function to receive information (e.g., service requests) in a common format, and/or provide information (e.g., services request results) in a common format (e.g., to the central controller engine 202). The common interface component 304 may be the same (e.g., having the same source code, object code, machine code, and/or the like) as the common interface components 304 of the other service provider interfaces 208 of the other services 206. In some embodiments, the common interface component 304 may comprise a REST interface. The common interface component 304 may be defined and/or function according to the uniform access specification.

The serialization support component 306 may function to provide serialization and/or deserialization support. The serialization support component 306 may include instructions (e.g., code) to convert one or more objects (e.g., one or more data records, between a sequence of bytes that can be sent through streams). The serialization support component 306 may be the same (e.g., having the same source code, object code, machine code, and/or the like) as the serialization support components 306 of the other service provider interfaces 208 of the other services 206, and may not require any modification (e.g., by the service development team) to function with the associated service 206. The serialization support component 306 may be defined and/or function according to the uniform access specification.

The encryption component 308 may function to encrypt communication with other elements in the multi-tenant system 102. For example, the encryption component 208 may encrypt data imported in the service provider interface 208 and/or data exported from the service provider interface 208. For example, a target location for exported data may require a particular encryption, and the encryption component 308 may ensure data is encrypted properly prior to exporting to the target location. The encryption component 308 may be the same (e.g., having the same source code, object code, machine code, and/or the like) as the encryption components 308 of the other service provider interfaces 208 of the other services 206, and may not require any modification (e.g., by the service development team) to function with the associated service 206. The encryption component 308 may be defined and/or function according to the uniform access specification.

The file format component 310 may function to facilitate data record formatting. For example, the file format component 310 may format data as JSON objects, CSV files, and/or custom types. The file format component 310 may be the same (e.g., having the same source code, object code, machine code, and/or the like) as the file format component 310 of the other service provider interfaces 208 of the other services 206, and may not require any modification (e.g., by the service development team) to function with the associated service 206. The file format component 310 may be defined and/or function according to the uniform access specification.

The communication component 312 may function to provide (e.g., stream, upload) data. For example, the communication component 312 may function to provide data to an S3 bucket. The communication component 312 may be the same (e.g., having the same source code, object code, machine code, and/or the like) as the communication components 312 of the other service provider interfaces 208 of the other services 206, and may not require any modification (e.g., by the service development team) to function with the associated service 206. The communication component 312 may be defined and/or function according to the uniform access specification.

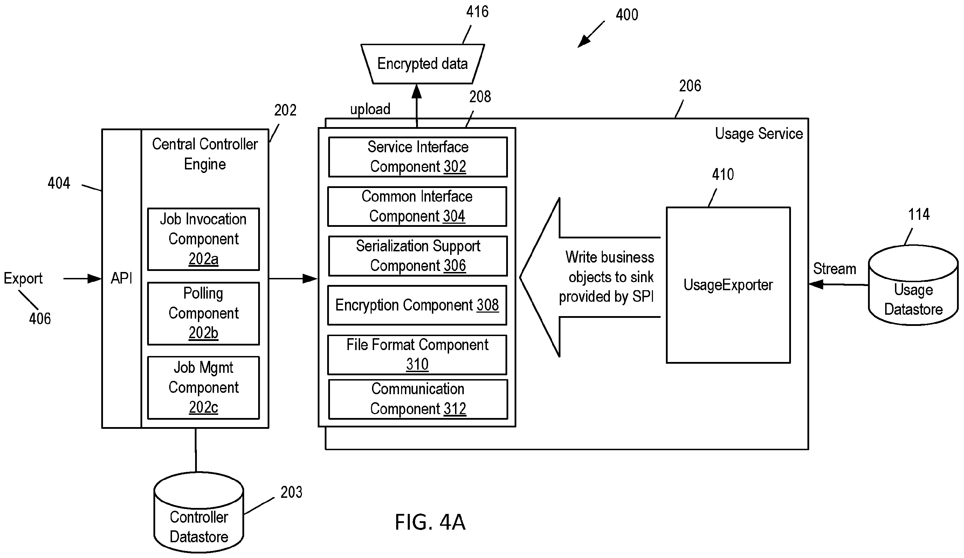

FIG. 4A depicts a diagram of an example export process 400 using an example central controller engine 202 and an example service provider interface (SPI) 208 of an example portion of a multi-tenant system 102 according to some embodiments. As shown, an export request 406 is provided to the central controller engine 202 via its API 404. The central controller engine 202 generates a uniform export request using a uniform call to the common interface component 304 of the SPI 208. The SPI 208 generates the SPI-level export request, which the UsageExporter module 418 of the usage service 414 manages by reading tenant data 120 from the usage database 114 and exporting data 416 (e.g., encrypted and/or otherwise formatted/transformed according to the service provider interface 208 and/or associated uniform access specification). Because the usage service 208 includes a usage service provider interface 208, the export request can be uniform (e.g., having the same format as requests to other services), and/or the exported data can be uniform (e.g., having the same format as data exported from other services).

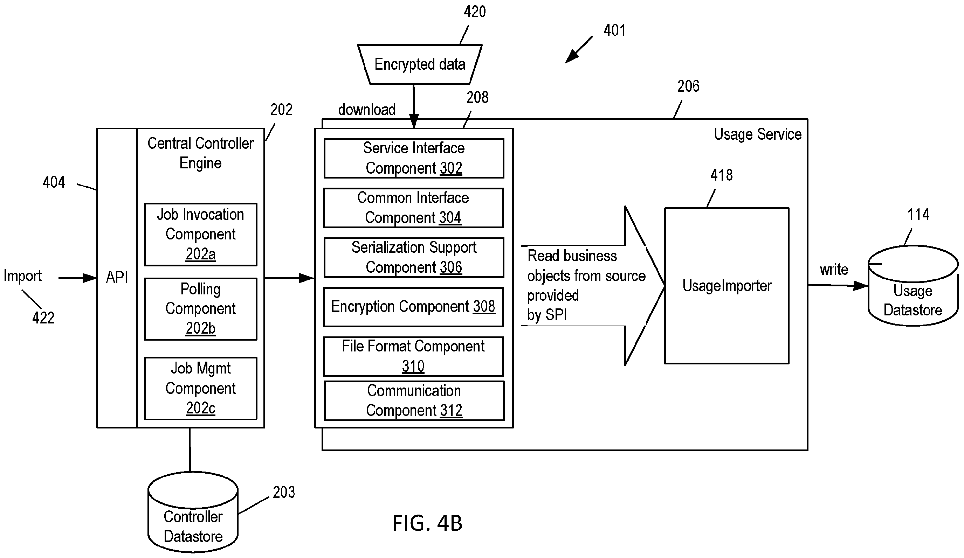

FIG. 4B depicts a diagram of an example import process 401 using an example central controller engine and an example service provider interface (SPI) of an example portion of a multi-tenant system 102 according to some embodiments. As shown, an import request 422 is provided to the central controller engine 202 via its API 404. The central controller engine 202 generates a uniform import request using a uniform call to the common interface component 204 of the SPI 208. The SPI 208 generates the SPI-level import request, which the UsageImporter module 410 of the usage service 208 manages by writing tenant data 120 to the usage database 114 in a format of the datastore 112 and/or the usage service 208. Because the usage service includes an SPI 208, the import request can be uniform (e.g., having the same format as requests to other services), and/or the imported data can be uniform (e.g., having the same format as data exported from other services) when received by the service provider interface 208, but stored in the datastore 112 in the format of the datastore 112.

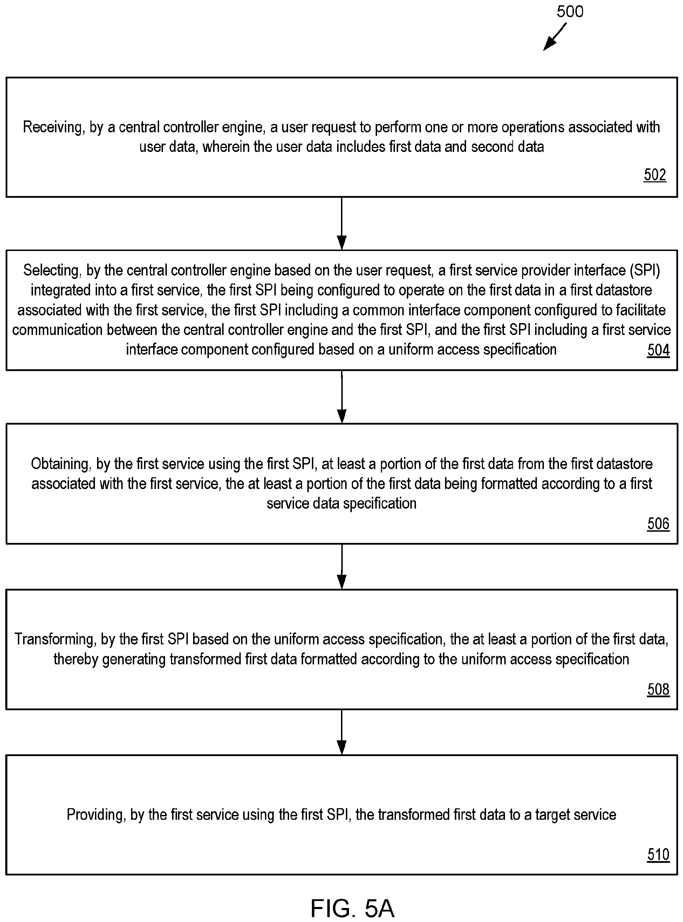

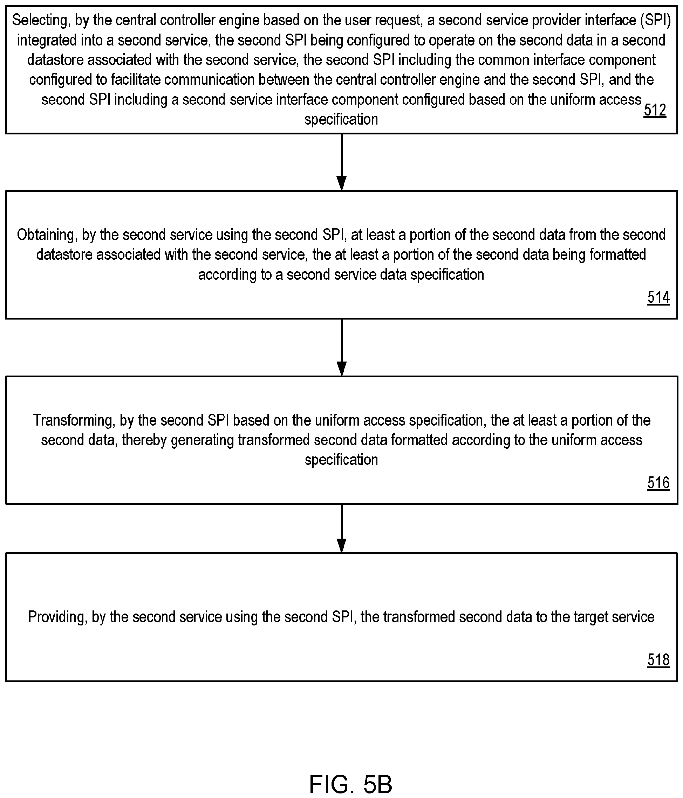

FIG. 5A-B depict a flowchart of an example of a method 500 of providing uniform access in a multi-tenant system according to some embodiments. In this and other flowcharts and/or sequence diagrams, the flowchart illustrates by way of example a sequence of steps. It should be understood the steps may be reorganized for parallel execution, or reordered, as applicable. Moreover, some steps that could have been included may have been removed to avoid providing too much information for the sake of clarity and some steps that were included could be removed, but may have been included for the sake of illustrative clarity.

In step 502, an multi-tenant system (e.g., multi-tenant system 102) receives a user request (e.g., export request 406) to perform one or more operations (e.g., export operations) associated with user data (e.g., tenant data 120). The user request may be received in a first format (e.g., a propriety format, such as a Verizon format). The user data may include first data (e.g., usage data) and second data (e.g., subscription data). In some embodiments, a central controller engine (e.g., central controller engine) receives the user request. In some embodiments, an application programming interface (e.g., API 404) of the central controller engine receives the user request.

In step 504, the multi-tenant system selects a first service provider interface (e.g., service provider interface 208a) integrated into a first service (e.g., service 208a). The first service may be a usage service. The first service provider interface may be configured to operate on the first data in a first datastore (e.g., datastore 114a) associated with the first service. The first service provider interface may include a common interface component (e.g., common interface component 304) configured to facilitate communication between the central controller engine and the first service provider interface. The first service provider interface may include a first service interface component (e.g., service interface component 302) configured based on a uniform access specification. In some embodiments, the central controller engine selects the first service provider interface. In some embodiments, a job invocation component (e.g., job invocation component 202a) of the central controller engine selects the first service provider interface.

In some embodiments, the central controller engine 202 provides (e.g., generates, transmits) a service request to the first service provider interface based on the user request. For example, the job invocation component may generate a service request in a second format (e.g., a common format) from the user request. The job invocation component may transmit the service request to the common interface component of the service provider interface.

In step 506, the multi-tenant system obtains at least a portion of the first data from the first datastore associated with the first service. The at least a portion of the first data may be formatted according to a first service data specification. In some embodiments, the first service may use the first service provider interface to obtain the data from the first datastore.

In step 508, the multi-tenant system transforms the at least a portion of the first data, thereby generating transformed first data (e.g., encrypted data 416) formatted according to the uniform access specification. In some embodiments, one or more components of the first service provider interface transforms the data, such as the service interface component, an encryption component (e.g., encryption component 308), a serialization support component (e.g., serialization support component 304), and/or a file format component (e.g., file format component 310). In some embodiments, the data is transformed based on the uniform access specification.

In step 510, the multi-tenant system provides the transformed first data to a target service. For example, the target service may be part of the central controller engine and/or it may be another service. In some embodiments, a common communication component (e.g., communication component 312) of the first service provider interface streams the transformed data to the target service.

In step 512, the multi-tenant system selects a second service provider interface (e.g., service provider interface 208b) integrated into a second service (e.g., service 206b). The second service may be a subscription service. The second service provider interface may be configured to operate on the second data in a second datastore (e.g., datastore 114b) associated with the second service. The second service provider interface may include the common interface component configured to facilitate communication between the central controller engine and the second service provider interface. In other words, the common interface component of the second service provider interface may be the same (e.g., having the same source code, object code, machine code, and/or the like) as the common interface component of the first service provider interface. The second service provider interface may include a second service interface component configured based on the uniform access specification. In other words, the second service interface component may different same (e.g., having different source code, object code, machine code, and/or the like) from the first service provider interface. For example, the first service interface component may be based on a first service data specification, and the second service interface component may be based on the second service data specification. In some embodiments, the central controller engine of the multi-tenant system selects the second service provider interface. In some embodiments, the job invocation component of the central controller engine selects the second service provider interface.

In some embodiments, the central controller engine 202 provides (e.g., generates, transmits) a second service request to the second service provider interface based on the user request. For example, the job invocation component may generate a second service request in a second format (e.g., a common format) from the user request. The job invocation component may transmit the second service request to the common interface component of the second service provider interface.

In step 514, the multi-tenant system obtains at least a portion of the second data from the second datastore associated with the second service. The at least a portion of the second data may be formatted according to a second service data specification. In some embodiments, the second service obtains the second data using the second service provider interface.

In step 516, the multi-tenant system transforms the at least a portion of the second data, thereby generating transformed second data formatted according to the uniform access specification. In some embodiments, one or more components of the second service provider interface transforms the second data, such as the service interface component of the second service provider interface, an encryption component (e.g., encryption component 308) of the second service provider interface, a serialization support component (e.g., serialization support component 304) of the second service provider interface, and/or a file format component (e.g., file format component 310) of the second service provider interface. In some embodiments, the data is transformed based on the uniform access specification.

In step 518, the multi-tenant system provides the transformed second data to the target service. For example, as discussed above, the target service may be part of the central controller engine and/or it may be another service. In some embodiments, a common communication component (e.g., communication component 312) of the second service provider interface streams the transformed data to the target service.

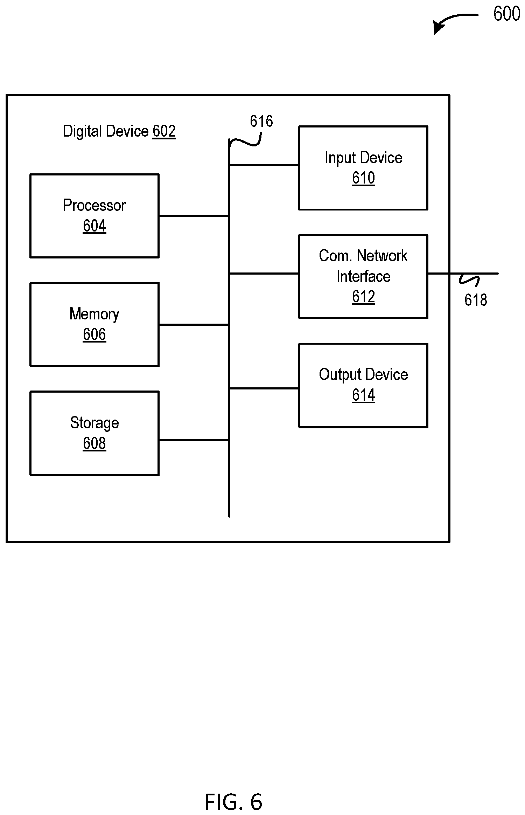

FIG. 6 depicts a diagram 600 of an example of a computing device 602. Any of the systems, engines, datastores, and/or networks described herein may comprise an instance of one or more computing devices 602. In some embodiments, functionality of the computing device 602 is improved to the perform some or all of the functionality described herein. The computing device 602 comprises a processor 604, memory 606, storage 608, an input device 610, a communication network interface 612, and an output device 614 communicatively coupled to a communication channel 616. The processor 604 is configured to execute executable instructions (e.g., programs). In some embodiments, the processor 604 comprises circuitry or any processor capable of processing the executable instructions.

The memory 606 stores data. Some examples of memory 606 include storage devices, such as RAM, ROM, RAM cache, virtual memory, etc. In various embodiments, working data is stored within the memory 606. The data within the memory 606 may be cleared or ultimately transferred to the storage 608.

The storage 608 includes any storage configured to retrieve and store data. Some examples of the storage 608 include flash drives, hard drives, optical drives, cloud storage, and/or magnetic tape. Each of the memory system 606 and the storage system 608 comprises a computer-readable medium, which stores instructions or programs executable by processor 604.

The input device 610 is any device that inputs data (e.g., mouse and keyboard). The output device 614 outputs data (e.g., a speaker or display). It will be appreciated that the storage 608, input device 610, and output device 614 may be optional. For example, the routers/switchers may comprise the processor 604 and memory 606 as well as a device to receive and output data (e.g., the communication network interface 612 and/or the output device 614).

The communication network interface 612 may be coupled to a network (e.g., network 108) via the link 618. The communication network interface 612 may support communication over an Ethernet connection, a serial connection, a parallel connection, and/or an ATA connection. The communication network interface 612 may also support wireless communication (e.g., 802.11 a/b/g/n, WiMax, LTE, WiFi). It will be apparent that the communication network interface 612 may support many wired and wireless standards.

It will be appreciated that the hardware elements of the computing device 602 are not limited to those depicted in FIG. 6. A computing device 602 may comprise more or less hardware, software and/or firmware components than those depicted (e.g., drivers, operating systems, touch screens, biometric analyzers, and/or the like). Further, hardware elements may share functionality and still be within various embodiments described herein. In one example, encoding and/or decoding may be performed by the processor 604 and/or a co-processor located on a GPU (i.e., NVidia).

A claimed solution rooted in computer technology overcomes problems specifically arising in the realm of computer technology. In various embodiments, a multi-tenant computing system (or, simply, multi-tenant system) is configured to receive a user request to perform a query. The user request may be a request initiated by a tenant (e.g., Verizon) of the multi-tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to query the different services, and/or the datastores associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services (e.g., query results), a format for data input to services (e.g., query format), and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

In some embodiments, the multi-tenant system includes an arbitrary query engine to query disparate services and/or disparate datastores in a manner that does not appear (e.g., to the user that initiated the user request) to be different from querying a monolithic datastore. For example, the user request supplied by the user to the arbitrary query engine may be the same request that the user can supply to a system that queries a monolithic datastore. In order to query disparate services and/or disparate datastores in such a manner, the arbitrary query engine may include query nodes, and each of the query nodes may be associated with a service connector node. The service connector nodes may allow the service provider interfaces of the various services to hook into the arbitrary query engine. Accordingly, the service connectors may be the arbitrary query engine's counterpart to the service provider interfaces of the services.

In some embodiments, a query node may handle a portion of a query. For example, a single query may relate to usage data and subscription data. The arbitrary query engine may partition the query into sub-queries, and send a usage sub-query (e.g., the portion of the query relating to usage data) to a first query node, and send a subscription sub-query (e.g., the portion of the query relating to subscription data) to a second query node. A usage service connector node may determine a usage service provider interface associated with the usage service, and then send the usage sub-query to the usage service provider interface for processing. A subscription connector node may determine a subscription service provider interface associated with the subscription service, and then send the usage sub-query to the usage service provider interface for processing. The service connector nodes may also handle the return output of the service provider interfaces. The arbitrary query engine may provide the results (e.g., the combined returned output) to the user.

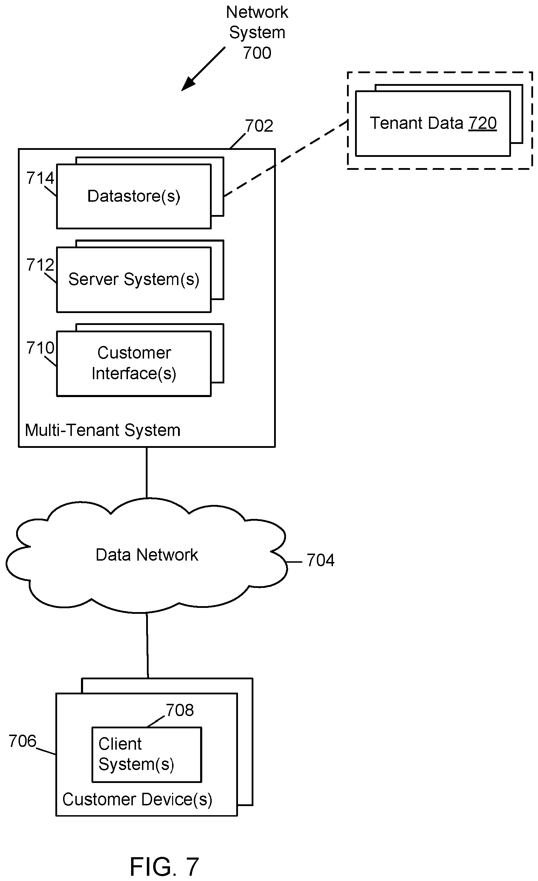

FIG. 7 depicts a diagram of an example network system 700 for providing cloud-based software-as-a-service (SAAS) services of a multi-tenant system 702 to multiple tenants according to some embodiments. Examples of the cloud-based SAAS services include data storage, data processing, and business-oriented applications. In some embodiments, each tenant may be a subscription-based entity or provider (e.g., an internet service provider, a home security system and service provider, a cellular phone service provider, or entertainment content provider). Each tenant may include a group of one or more users (e.g., individuals, business entities, customers of the business entities, systems) who share access to the cloud-based services. In one embodiment, a tenant includes a service entity such as AT&T, Netflix, Verizon, and/or the like. A tenant may include one or more products or services of an entity. For example, AT&T internet products may be a particular tenant, and AT&T security products may be another tenant. In some embodiments, the cloud-based SAAS services relate to managing subscriber records, product and/or service consumption information, billing information, payment information, and/or the like.

The network system 700 includes the multi-tenant system 702 coupled via a data network 704 (e.g., a set of one or more public and/or private, wired and/or wireless networks) to client devices 706. The multi-tenant system 702 includes shared resources to host the cloud-based SAAS services to the tenants. The shared resources may include processors, memory, virtual systems, services, application programs, load balancers, firewalls, and/or the like. As shown, the multi-tenant system 702 includes tenant interfaces 710, server systems 712, and datastores 714. Each of the client devices 106 includes a client system 108 that accesses the cloud-based SAAS services hosted by the multi-tenant system 702. In some embodiments, the client systems 108 may be operated by employees (e.g., administrator users) of the provider of the provider of the multi-tenant system 702. In some embodiments, the client systems 108 may be operated by employees of the tenant. In some embodiments, the client systems 108 may be operated by end users of the tenant's services.

Each client device 706 may include a desktop, laptop, notebook, tablet, personal digital assistant, smart phone, or other consumer electronic devices incorporating one or more computer components. The client system 708 on each client device 706 may include hardware, software and/or firmware for communicating with the multi-tenant system 702 and accessing the cloud-based services it hosts. Examples of the client systems 708 may include web browsers, client engines, drivers, user interface components, proprietary interfaces, and/or the like.

The multi-tenant system 702 includes hardware, software and/or firmware to host the cloud-based services for the tenants. It will be appreciated that the typical multi-tenant system 702 may offer access to shared resources including systems and applications on shared devices and offer each tenant the same quality or varying qualities of service. In some embodiments, the multi-tenant system 702 does not use virtualization or instantiation processes. In some embodiments, a multi-tenant system 702 integrates several business computing systems into a common system with a view toward streamlining business processes and increasing efficiencies on a business-wide level.

In some embodiments, the multi-tenant system 702 includes a user interface tier of multiple tenant interfaces 710, a server tier of multiple server systems 712, and a datastore tier of multiple datastores 714 for the multiple tenants. In some embodiments, the tenant interfaces 710 includes graphical user interfaces and/or web-based interfaces to enable tenants to access the shared services hosted by the multi-tenant system 702. The tenant interfaces 710 may support load balancing when multiple tenants (and/or multiple customers of the tenants) try to access the multi-tenant system 702 concurrently. The tenant interfaces 710 may additionally or alternatively include an operator interface for use by a systems operator to configure or otherwise manage the multi-tenant system 702. In some embodiments, each tenant may be associated with a subset of the total tenant interfaces 710 for load balancing.

In some embodiments, the server systems 712 include hardware, software and/or firmware to host the shared services for tenants. The hosted services may include tenant-specific business services or functions, including enterprise resource planning (ERP), customer relationship management (CRM), eCommerce, Human Resources (HR) management, payroll, financials, accounting, calendaring, order processing, subscription billing, inventory management, supply chain management (SCM), collaboration, sales force automation (SFA), marketing automation, contact list management, call-center support, web-based customer support, partner and vendor management systems, product lifecycle management (PLM), financial, reporting and analysis, and/or the like. Similar to the tenant interfaces 710, in some embodiments, the server systems 712 may support load balancing when multiple tenants (and/or multiple customers of tenants) try to access the multi-tenant system 702 concurrently. Further, in some embodiments, each tenant may be associated with a subset of the total server systems 712 for load balancing.

In some embodiments, tenant data 720 for each tenant may be stored in a logical store across one or more datastores 714. In some embodiments, each tenant uses a logical store that is not assigned to any predetermined datastores 714. Each logical store may contain tenant data 720 that is used, generated and/or stored as part of providing tenant-specific business services or functions. In some embodiments, the datastores 714 may include relational database management systems (RDBMS), object-based database systems, and/or the like. In some embodiments, tenant data 720 may be stored across multiple datastores 714, with each datastore dedicated to a particular service (e.g., managing customer records, managing product and/or service consumption information, managing billing information, managing payment information, and/or the like).

In some embodiments, the tenant data 720 may include subscription information, such as billing data and/or subscription status (e.g., active, canceled, suspended, re-activated). Billing data may include billing invoice data (e.g., date of invoices and invoice amounts, overage charge dates and overage charge amounts), payment transaction data (e.g., date of payments, amount of payments), payment methods (e.g., credit card, debit card), payment plan (e.g., annual billing, monthly billing), and/or service plan information (e.g., the name of a service plan). Subscription information may also include a geographic region and/or location associated with a tenant, service, and/or subscriber. In some embodiments, the tenant data 720 may include usage data (e.g., account activity data), such as new subscriptions, changes to subscribed products and/or services, cancellation of one or more products and/or services, subscriptions to new products and/or services, application of discounts, loyalty program package changes (e.g., additional programs and/or services, special rates, and/or the like for loyal customers), reduction or increase of rates for products and/or services, and/or cancellation of the application. In some embodiments, account activity may include usage of a product and/or product of a subscriber (e.g., what channels the subscriber actually watches, what services and what level of consumption the subscriber receives, quality of the product and/or services, and/or the like).

In some embodiments, the tenant data 720 may be stored in one or more data formats (or, simply, formats). For example, subscription tenant data may be stored in a particular format, and usage tenant data may be stored in another format. As used herein, formats may include data types, variable types, protocols (e.g., protocols for accessing, storing, and/or transmitting data), programming languages, scripting languages, data value parameters (e.g., date formats, string lengths), endpoint locations and/or types, and/or the like.

In some embodiments, the multi-tenant system 702 functions to provide uniform queries to disparate services (e.g., microservices) and/or disparate datastores. For example, different services of the multi-tenant system 702 may manage (e.g., create, read, update, delete) tenant data 720 stored in different datastores 714. It will be appreciated that as used herein, a "service" may be single service and/or a set of services (e.g., a cluster of services). The datastores 714 may store data in different formats, and/or the services may handle data differently. The services may each include a service provider interface (SPIs) that provides data from the service, and/or receives data (e.g., queries) at the service, in a common (or, uniform) format, regardless of the original format that may be used by the service and/or datastores 714. In some embodiments, the multi-tenant system 702 may define a uniform access specification that defines the common format that the services must comport with when receiving and/or providing data. For example, each service may include a service provider interface, and communication with the services may be performed through the service provider interfaces and corresponding connector services of the multi-tenant system 702. For example, the connector services may include the locations of the service provider interfaces and/or services. Accordingly, each of the services may be queried in a uniform manner, and query results may be consumed from the services in a uniform manner, regardless of the internal specifications and/or operations of the services and/or datastores.

The data network (or, communication network) 704 may represent one or more computer networks (e.g., LAN, WAN, or the like) or other transmission mediums. The data network 704 may provide communication between the systems, engines, datastores, components, and/or devices described herein. In some embodiments, the data network 704 includes one or more computing devices, routers, cables, buses, and/or other network topologies (e.g., mesh, and the like). In some embodiments, the data network 704 may be wired and/or wireless. In various embodiments, the data network 704 may include the Internet, one or more wide area networks (WANs) or local area networks (LANs), one or more networks that may be public, private, IP-based, non-IP based, and so forth.

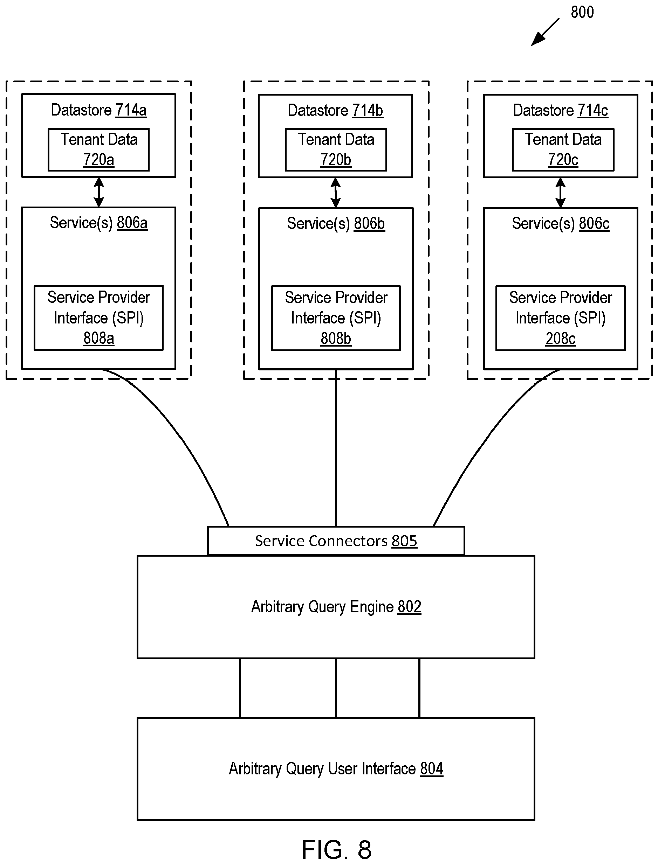

FIG. 8 depicts a diagram of an example portion 800 of a multi-tenant system 702 for managing arbitrary queries across distributed datastores according to some embodiments. In the example of FIG. 8, the example portion 800 of the multi-tenant system 702 includes an arbitrary query engine 802, an arbitrary query user interface 804, service connectors 805, services 806a to 806c (individually, the service 806, collectively, the services 806), service provider interfaces (SPIs) 808 (individually, the service provider interface 808, collectively, the service provider interfaces 808), and datastores 714a to 714c (individually, the datastore 714, collectively, the service provider datastores 714). The three datastores 714 may each be respectively managed by the three sets of one or more services 806, and each respectively made accessible in a uniform manner by the service provider interfaces (SPIs) 808. In some embodiments, the central controller engine 802, which may support internal or tenant communications, is coupled via network devices with the datastores 714. The network devices may include routers, load balancers, firewalls, and/or the like. Although only three services 806, three service provider interfaces 808, and three datastores 714 are shown here, it will be appreciated that the multi-tenant system 702 may support a greater or lesser number of such services 806, service provider interfaces 808, and/or datastores 714.

As discussed herein, the multi-tenant system 702 distributes tenant data 720 across multiple datastores 714 at multiple locations. As shown, the multi-tenant system distributes tenant data 720 across at least datastores 714a, 714b and 714c. The multi-tenant system 702 may include one or more services, shown as services 806a, 806b and 806c, to respectively manage the tenant data 720 at each datastore 714 through one or more application program interfaces (APIs). APIs are typically designed to be specific to the purpose of the service it supports and may differ widely in the exposed capabilities and performance. For example, in some systems, each of the different datastores 714 and each of the different services 806 may be developed independently of one another and possibly by different development teams. Accordingly, it is common that the API calls are non-uniform.

To solve the nonuniformity, the system could incorporate a "glue" layer, e.g., an enterprise service bus or a service-oriented architecture (SOA layer) that access data via the APIs and exposes it to the consumers. Glue layers typically access data directly from the datastore, bypassing the services with their different APIs. Glue layers have been found to be brittle, needing to be matched continuously to changing APIs that the services expose. Further, direct database access often violates data integrity guarantees or service level agreements that a service is trying to offer. Further, data exposed directly from the database often has a different shape than the data exposed at API level. Data exposed directly from the database therefore requires extensive transformation to match the data shape of that received at the API level. API enforcement through code or process is often inconsistent, which often results in multiple incompatible implementations. By putting these requirements on the software development process, the resulting APIs may only be "lowest common denominator" APIs instead of matching the desired use cases for the services.

To enable uniform access to the services 806 and the tenant data 720 stored in the datastores 714, in some embodiments, the multi-tenant system 702 includes a software component embedded directly (or, integrated) into the services 806. In other embodiments, the software component may be hooked into the services 806, as opposed to embedded directly into the services 806. This software component, referred to herein as a service provider interface (SPI) 808a, 808b and 808c respectively, may be delivered as a library to a service development team for integration into the services 806 to make their services compatible, without having to change their APIs or expose internal details of their database. With the service provider interface 808 integrated into the services 806, the multi-tenant system 702 enables access to diverse data services in a uniform manner without having to build extensive glue layers between services, the consumers, and/or other features of the multi-tenant system 702. Each of the services 806 may enable access to the diverse data services without exposing their internal data organization and/or without bypassing the services 806. Development teams can use the service provider interfaces 808 to allow access to the data exposed by the services 806 in a uniform manner, and also provide data in a uniform manner, regardless of the internal formats and specification used by the service.

By having multiple datastores 714 and multiple services 806 instead of a monolithic database, the multi-tenant system 702 may no longer be able to employ a common query layer (e.g., data source export) that can go back to the monolithic database. Accordingly, a solution is needed to enable arbitrary queries to be executed with minimal time delay against the tenant data 720 that is distributed across the multiple datastores 714. Notably, the tenant data 720 may include different business objects that can be queried separately or put into relationships (e.g., by "joins").

Some solutions may include time-delayed or continuous replication into a data warehouse, fixing the set of queries available, or custom coding. Time-delayed or continuous replication into a data warehouse introduces significant time delay that is typically unacceptable for many use cases. Further, data warehouses often organize data in different ways than the source system. Accordingly, substantial effort would be needed to deal with data organization. A fixed set of queries that can be executed limits the ability of customers to fetch data specific to their needs. Custom coding of query limitations on the types of queries possible (e.g., only one object type) is very labor intensive and does not scale for an organization with many customers with different needs. Each new query would take substantial time to develop, which would make ad-hoc querying impractical or impossible. Further, limitations on the types of queries (e.g., not supporting JOIN operations) would also limit the abilities of customers to fetch data specific to their needs.

In the example of FIG. 8, the multi-tenant system 702 uses the arbitrary query engine 802 to query (e.g., access) the service provider interfaces 808 of the services 806 using service connectors 805. The arbitrary query engine 802 may comprise a modified Presto analytics engine. The arbitrary query engine 802 may be configured to maintain the purpose of each of the services 806, the general location of data belonging to each tenant, and associations therebetween. Thus, for example, a user may submit a user request via the arbitrary query user interface 804 to perform a query. The arbitrary query engine 802 may generate an arbitrary query (or, simply, query) based on the user request, and use the arbitrary query and corresponding metadata (e.g., a tenant identifier) to assist the arbitrary query engine 802 in identifying the relevant datastores 714 and relevant services 806 capable of generating the data results to the query. The arbitrary query engine 802 is capable of issuing the service provider interface calls to the service provider interfaces of the respective services 806, which may be based on the user request. More specifically, the arbitrary query engine 802 includes service connectors 805 which connect the arbitrary query engine 802 to the service provider interfaces 808, the services 806 and/or the datastores 714, as discussed elsewhere herein.

In some embodiments, the multi-tenant system 702 leverages the ability of the arbitrary query engine 802 to execute arbitrary queries in a standard query language (e.g., SQL) against the tenant data 720 stored in the multiple datastores 714 and put it into relation in the same way that a monolithic data system would do. Exposing the tenant data through the service provider interfaces 808 and not as files on a file system (e.g., as HDFS or Hive would do) allows for integration of many different data services 806 and underlying storage technologies, thus enabling the multi-tenant system 702 to distribute tenant data 720 across many services 806 and still to provide a uniform presentation to customers for their needs. The arbitrary query engine 802 enables every query to access the service provider interfaces 808 directly and fetch the most current data from the services 806, and therefore to provide a view of the current tenant data 720 as of the moment of the query (unlike a replicated or data warehouse system, which could have stale data). Thus, data access is not time-delayed. Accordingly, arbitrary queries (e.g., as opposed to pre-defined queries) may be generated and provided to disparate service provider interfaces 808, services 808, and/or datastores 714.

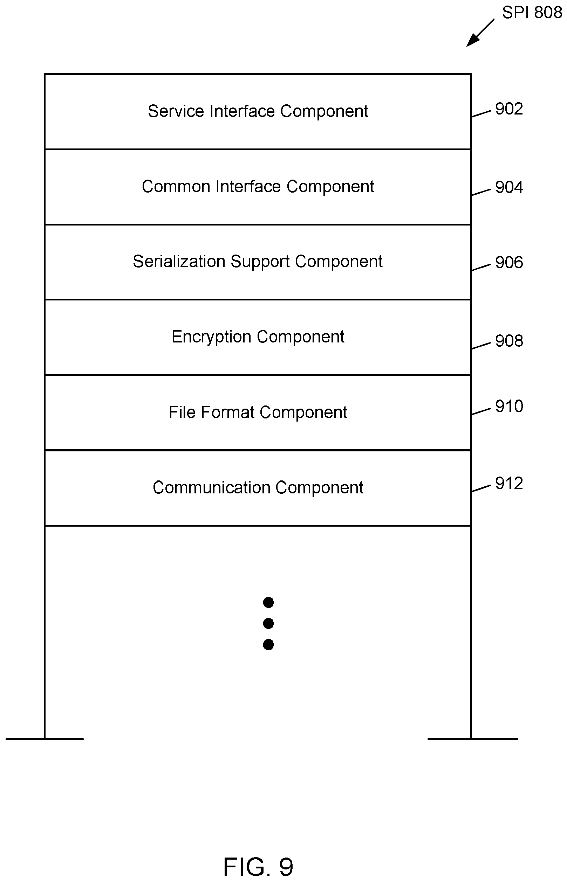

FIG. 9 depicts a diagram of an example service provider interface (SPI) 808 according to some embodiments. Generally, under some approaches (e.g., approaches that do not use service provider interfaces 808), services typically needed to receive information (e.g., queries and/or other service requests) in a format native to the particular service and/or associated datastores. Accordingly, information typically had to be provided in different formats for different services. Alternatively, under other approaches that also do not use service provider interfaces 808, the entity providing the request for information, and/or receiving a response to the request for information, had to translate the requests prior to sending the request, and/or translate the responses after they have been sent from the service. The service provider interface 808 may allow information to be provided (e.g., from the requesting entity) to different services in a common format (e.g., based on a uniform access specification and/or service data specifications of the services), and/or may allow information to be provided from the different services in a common format (e.g., based on a uniform access specification and/or service data specifications of the services).

In the example of FIG. 9, the service provider interface 808 includes a service interface component 902, a common interface component 904, a serialization support component 906, an encryption component 908, a file format component 910, and a communication component 912. The service interface component 902 may function to facilitate implementation of uniform access for a particular service 808. While the other components (e.g., components 904-912) of the service provider interface 808 may be common across all of the service provider interfaces 808, the service interface component 902 may be modified for the particular service 808. In some embodiments, services 808 may be implemented and/or managed by different development teams. For example, a usage service 808 may be managed by a usage development team, a subscription service 808 may be managed by a subscription development team, and so forth. The different services 808 may adhere to different service data specifications. For example, a usage service 808 may store and/or access data according to a first format (e.g., data format, access protocols), and a subscription service 808 may store and/or access data according to another format (e.g., another data format, another access protocol). The service interface component 902 may provide the instructions for processing requests received in a common format, and/or providing responses to such requests in a common format. For example, the service interface component 902 may translate requests received according to a common format into a request that can be processed by a service that is formatted according to a specific data specification of that service. More specifically, for example, the common request may include variable for various parameters (e.g., access protocol types, data format types, endpoint locations, and/or the like), and the service interface component 902 may define the values for those variables.

In some embodiments, the service interface component 902 of a service provider interface may be deployed (e.g., to a particular service) with a template service interface component, which may be modified (e.g., by the particular service) based on the service data specification of the particular service.

The common interface component 904 may function to receive information (e.g., service requests) in a common format, and/or provide information (e.g., services request results) in a common format (e.g., to the central controller engine 802). As used herein, a query (or, arbitrary query) may be a type of service request. The common interface component 904 may be the same (e.g., having the same source code, object code, machine code, and/or the like) as the common interface components 904 of the other service provider interfaces 808 of the other services 806. In some embodiments, the common interface component 904 may comprise a REST interface. The common interface component 904 may be defined and/or function according to the uniform access specification.

The serialization support component 906 may function to provide serialization and/or deserialization support. The serialization support component 906 may include instructions (e.g., code) to convert one or more objects (e.g., one or more data records, between a sequence of bytes that can be sent through streams). The serialization support component 906 may be the same (e.g., having the same source code, object code, machine code, and/or the like) as the serialization support components 906 of the other service provider interfaces 808 of the other services 806, and may not require any modification (e.g., by the service development team) to function with the associated service 806. The serialization support component 906 may be defined and/or function according to the uniform access specification.

The encryption component 908 may function to encrypt communication with other elements in the multi-tenant system 702. For example, the encryption component 908 may encrypt data imported in the service provider interface 808 and/or data exported from the service provider interface 808. For example, a target location for exported data may require a particular encryption, and the encryption component 908 may ensure data is encrypted properly prior to exporting to the target location. The encryption component 908 may be the same (e.g., having the same source code, object code, machine code, and/or the like) as the encryption components 908 of the other service provider interfaces 808 of the other services 806, and may not require any modification (e.g., by the service development team) to function with the associated service 806. The encryption component 908 may be defined and/or function according to the uniform access specification.

The file format component 910 may function to facilitate data record formatting. For example, the file format component 910 may format data as JSON objects, CSV files, and/or custom types. The file format component 910 may be the same (e.g., having the same source code, object code, machine code, and/or the like) as the file format component 910 of the other service provider interfaces 808 of the other services 806, and may not require any modification (e.g., by the service development team) to function with the associated service 806. The file format component 910 may be defined and/or function according to the uniform access specification.

The communication component 912 may function to provide (e.g., stream, upload) data. For example, the communication component 912 may function to provide data to an S3 bucket. The communication component 912 may be the same (e.g., having the same source code, object code, machine code, and/or the like) as the communication components 912 of the other service provider interfaces 808 of the other services 806, and may not require any modification (e.g., by the service development team) to function with the associated service 806. The communication component 912 may be defined and/or function according to the uniform access specification.

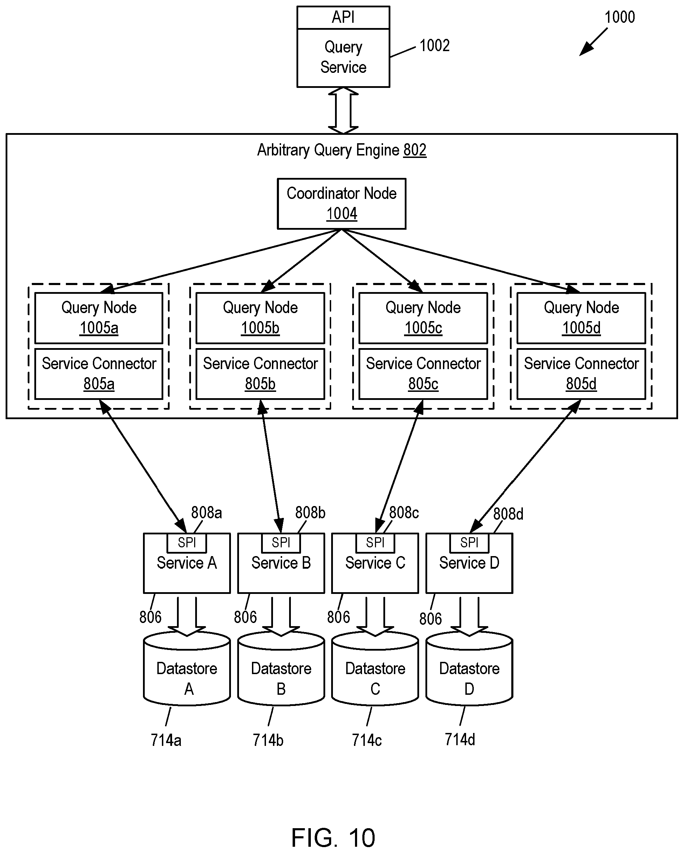

FIG. 10 depicts a diagram of example portion 1000 of a multi-tenant system 702 for managing arbitrary queries across distributed datastores 714 according to some embodiments. In the example of FIG. 10, the example portion 1000 of the multi-tenant system 702 includes datastores 714a to 714d (for services A, B, C and D respectively), each respectively managed by services 806a to 806d (for services A, B, C and D respectively), each respectively made accessible in a uniform manner by a service provider interface 808 (for services A, B, C and D respectively). A query service 1002 is coupled via an arbitrary query engine 802 with the data stores 714. The query service 1002 may receive user requests (e.g., input via arbitrary query user interface 804), and provide queries (e.g., SQL queries) to the arbitrary query engine 802. The query service 1002 may also receive output from the arbitrary query engine 802 (e.g., query results), and then provide the query results to a user via the arbitrary query user interface 804. For example, the query service 1002 may reformat the data according to the format of the original user request (e.g., a Verizon format).

In the example of FIG. 10, the arbitrary query engine 802 includes a coordinator node 1004, query nodes 1005a to 1005d (individually, the query node 1005, collectively, the query nodes 1005), and service connectors 805 (individually, the service connector 805, collectively, the service connectors 805) to connect the arbitrary query engine 802 to the service provider interfaces 808, services 806, and/or the data stores 714.

The coordinator node 1004 may function to receive user requests to perform queries (e.g., a particular type of service request) associated with user data. For example, the user request may be to perform a query for tenant data 720 associated with a particular subscriber (e.g., John Smith). The user data may include usage data, subscription data, and/or the like. The user request and/or the query may be received in a particular format (e.g., a propriety Verizon format).

The coordinator node 1004 may function to partition the query into sub-queries. As discussed elsewhere herein, queries and/or sub-queries may be SQL queries. For example, the coordinator node 1004 may partition queries into sub-queries based on the services 806 required to handle the query (e.g., a usage service 806, a subscription service 806). In some embodiments, the coordinator node 1004 may function to assign sub-queries to query nodes 1005. For example, the coordinator node 1004 may assign sub-queries to query nodes 1005 based on geographic location of the query nodes 1005, load balancing, and/or the like.

The query nodes 1005 may function to handle and/or process sub-queries, communicate with the coordinator node 1004, and/or communication with an associated service connector 805. The service connectors 805 may function to identify and/or select service provider interface 808 for handling sub-queries at the service-level. For example, each service connector 805 may store a file including the locations (e.g., URIs) of the service provider interfaces 808. In another example, the service connectors 805 may query another service that maintains the locations of the locations of the service provider interfaces 808. The service connector 805 may store other metadata associated with the service provider interfaces 808 and/or services 806. For example, the service connectors 805 may store features and/or capabilities of the services 806 associated with the service provider interfaces 808. This may, for example, allow the service connectors 805 to select the best service provider interface 808 (and corresponding service 806) for handling various sub-queries. Like the service provider interfaces 808, the service connectors 805 may be configured according the uniform access specification. Accordingly, the service connectors 805 may provide queries in a common format to the service provider interfaces 808, and receive query results from the service provider interfaces 808 in a common format. The service connectors 805 may allow the arbitrary query engine 802 to provide queries (e.g., SQL queries) to the services 806 (e.g., via the service provider interfaces 808) as if the services 806 themselves were datastores (e.g., relational datastores).

In some embodiments, the service connectors 805 may each be the same. In other embodiments, some or all of the service connectors 805 may be different. For example, a particular set of query nodes 1005 may be associated with a particular set of services 806, and the service connectors 805 for that particular set of query nodes 1005 may include information associated with the service provider interfaces 808 of the particular set of services 806.

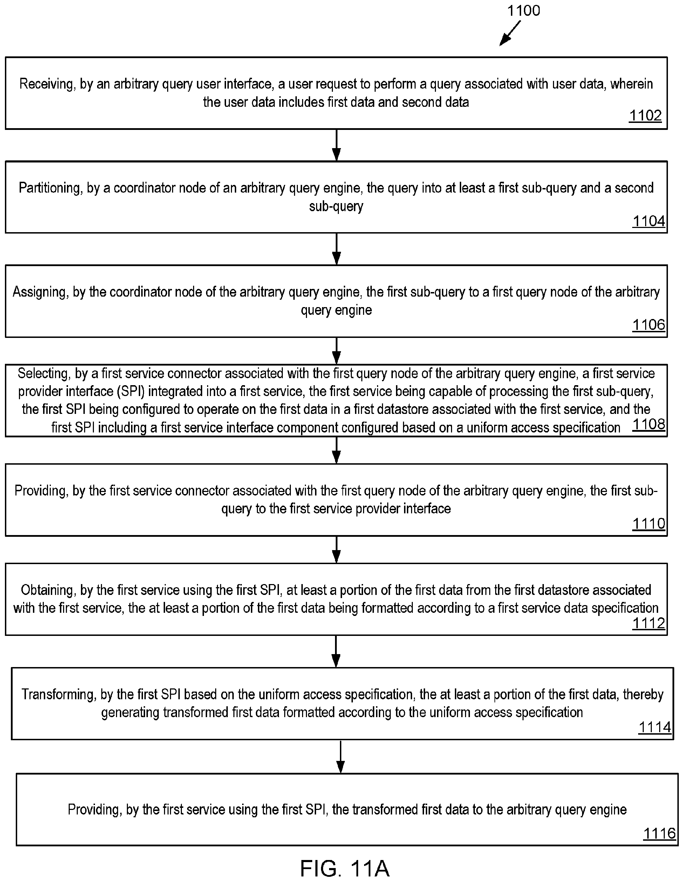

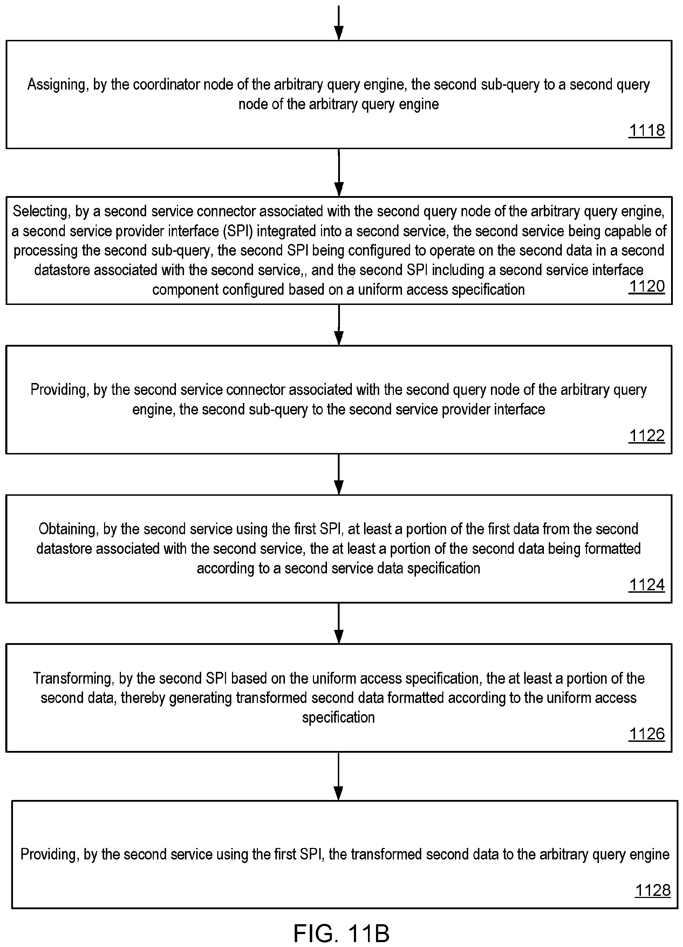

FIGS. 11A-B depict a flowchart of an example of a method 1100 of querying distributed datastores according to some embodiments. In this and other flowcharts and/or sequence diagrams, the flowchart illustrates by way of example a sequence of steps. It should be understood the steps may be reorganized for parallel execution, or reordered, as applicable. Moreover, some steps that could have been included may have been removed to avoid providing too much information for the sake of clarity and some steps that were included could be removed, but may have been included for the sake of illustrative clarity.

In step 1102, a multi-tenant system (e.g., multi-tenant system 702) receives a user request to perform a query (e.g., a particular type of service request) associated with user data. For example, the user request may be to perform query for tenant data (e.g., tenant data 720) associated with a particular subscriber (e.g., John Smith). The user data may include first data (e.g., usage data) and second data (e.g., subscription data). The user request and/or query may be received in a first format (e.g., a propriety format). In some embodiments, an arbitrary query user interface (e.g., arbitrary query user interface 804) and/or an arbitrary query engine (e.g., arbitrary query engine 802) receives the query.

In step 1104, the multi-tenant system partitions the query into at least a first sub-query and a second sub-query. Queries and/or sub-queries may be SQL queries. In some embodiments, a coordinator node (e.g., coordinator node 1004) of the arbitrary query engine partitions the query.

In step 1106, the multi-tenant system assigns the first sub-query to a first query node (e.g., query node 1005a) of the arbitrary query engine. In some embodiments, the coordinator node assigns the first sub-query to the first query node. In some embodiments, the coordinator node may assign sub-queries based on load-balancing and/or geographic location of the query nodes.

In step 1108, the multi-tenant system selects a first service provider interface (e.g., service provider interface 808a) integrated into a first service (e.g., service 806a). For example, the first service may be a usage service. The first service may be capable of processing the first sub-query, and the first SPI may be configured to operate on the first data in a first datastore (e.g., datastore 714a) associated with the first service. The first SPI may include a common interface component (e.g., common interface component 904) configured to facilitate communication between the arbitrary query engine and the first SPI, and the first SPI may include a first service interface component (e.g., first service interface component 902) configured based on a uniform access specification and/or a first data specification of the first service. In some embodiments, a first service connector (e.g., service connector 1006a) of the arbitrary query engine selects the first service provider interface.

In step 1110, the multi-tenant system provides the first sub-query to the first service provider interface. In some embodiments, the first service interface component provides the first sub-query to the first service provider interface. In some embodiments, the first service interface component provides (e.g., generates, transmits) a service request to the first service provider interface based on the first sub-query. For example, the first service interface component may generate a service request in a second format (e.g., a common format) from the sub-query. The first service interface component may transmit the service request to the common interface component of the first service provider interface.

In step 1112, the multi-tenant system obtains at least a portion of the first data from the first datastore associated with the first service. The at least a portion of the first data may be formatted according to a first service data specification of the first service. In some embodiments, the first service may use the first service provider interface to obtain the data from the first datastore.

In step 1114, the multi-tenant system transforms the at least a portion of the first data, thereby generating transformed first data formatted according to the uniform access specification. In some embodiments, one or more components of the first service provider interface transforms the data, such as the service interface component, an encryption component (e.g., encryption component 908), a serialization support component (e.g., serialization support component 904), and/or a file format component (e.g., file format component 910). In some embodiments, the data is transformed based on the uniform access specification.

In step 1116, the multi-tenant system provides the transformed first data to the arbitrary query engine. For example, the first service interface component of the arbitrary query engine may receive the transformed first data. In some embodiments, a common communication component (e.g., communication component 912) of the first service provider interface provides the transformed data to arbitrary query engine.

In step 1118, the multi-tenant system assigns the second sub-query to a second query node (e.g., query node 1005b) of the arbitrary query engine. In some embodiments, the coordinator node assigns the second sub-query to the second query node.

In step 1120, the multi-tenant system selects a second service provider interface (e.g., service provider interface 808b) integrated into a second service (e.g., service 806b). The second service may be a subscription service. The second service may be capable of processing the second sub-query, and the second SPI may be configured to operate on the second data in a second datastore (e.g., datastore 714b) associated with the second service. The second service provider interface may include a common interface component (e.g., the same common interface component that is used in the first service provider interface) configured to facilitate communication between the arbitrary query engine and the second service provider interface. The second service provider interface may include a second service interface component (e.g., an service interface component 902, albeit as modified for the second service) configured based on a uniform access specification and/or second data specification of the second service. In some embodiments, a second service connector (e.g., service connector 1006b) of the arbitrary query engine selects the second service provider interface.

In some embodiments, the first and second service connectors select the first and second service provider interfaces based on a file that is stored in each of the first and second service connectors. The file may, for example, store the locations of the first and second service provider interfaces (and other locations of other service provider interfaces of the multi-tenant system).

In some embodiments, the first and second service connectors select the first and second service provider interfaces based on querying a third service for the locations of the first and second service provider interfaces, the third service maintaining the locations of the first and second service provider interfaces.

In step 1122, the multi-tenant system provides the second sub-query to the second service provider interface. In some embodiments, the second service connector provides the second sub-query to the second service provider interface. For example, the second service connector may generate a second service request in a second format (e.g., a common format) from the second sub-query. The second service connector may transmit the second service request to the common interface component of the second service provider interface.

In step 1124, the multi-tenant system obtains at least a portion of the second data from the second datastore associated with the second service. The at least a portion of the second data may be formatted according to a second service data specification. In some embodiments, the second service obtains the second data using the second service provider interface.

In step 1126, the multi-tenant system transforms the at least a portion of the second data, thereby generating transformed second data formatted according to the uniform access specification. In some embodiments, one or more components of the second service provider interface transforms the second data, such as the service interface component of the second service provider interface, an encryption component (e.g., encryption component 908) of the second service provider interface, a serialization support component (e.g., serialization support component 904) of the second service provider interface, and/or a file format component (e.g., file format component 910) of the second service provider interface. In some embodiments, the data is transformed based on the uniform access specification.

In step 1128, the multi-tenant system provides the transformed second data to the arbitrary query engine. In some embodiments, a common communication component (e.g., communication component 912) of the second service provider interface provides the transformed data to the second service connector of the arbitrary query engine.

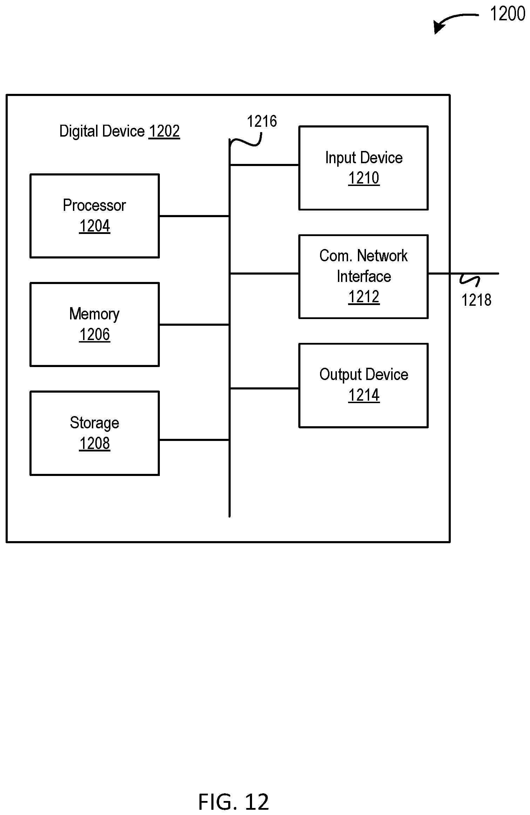

FIG. 12 depicts a diagram 1200 of an example of a computing device 1202. Any of the systems, engines, datastores, and/or networks described herein may comprise an instance of one or more computing devices 1202. In some embodiments, functionality of the computing device 1202 is improved to the perform some or all of the functionality described herein. The computing device 1202 comprises a processor 1204, memory 1206, storage 1208, an input device 1210, a communication network interface 1212, and an output device 1214 communicatively coupled to a communication channel 1216. The processor 1204 is configured to execute executable instructions (e.g., programs). In some embodiments, the processor 1204 comprises circuitry or any processor capable of processing the executable instructions.

The memory 1206 stores data. Some examples of memory 1206 include storage devices, such as RAM, ROM, RAM cache, virtual memory, etc. In various embodiments, working data is stored within the memory 1206. The data within the memory 1206 may be cleared or ultimately transferred to the storage 1208.

The storage 1208 includes any storage configured to retrieve and store data. Some examples of the storage 1208 include flash drives, hard drives, optical drives, cloud storage, and/or magnetic tape. Each of the memory system 1206 and the storage system 1208 comprises a computer-readable medium, which stores instructions or programs executable by processor 1204.

The input device 1210 is any device that inputs data (e.g., mouse and keyboard). The output device 1214 outputs data (e.g., a speaker or display). It will be appreciated that the storage 1208, input device 1210, and output device 1214 may be optional. For example, the routers/switchers may comprise the processor 1204 and memory 1206 as well as a device to receive and output data (e.g., the communication network interface 1212 and/or the output device 1214).

The communication network interface 1212 may be coupled to a network (e.g., network 708) via the link 1218. The communication network interface 1212 may support communication over an Ethernet connection, a serial connection, a parallel connection, and/or an ATA connection. The communication network interface 1212 may also support wireless communication (e.g., 802.11 a/b/g/n, WiMax, LTE, WiFi). It will be apparent that the communication network interface 1212 may support many wired and wireless standards.

It will be appreciated that the hardware elements of the computing device 1202 are not limited to those depicted in FIG. 12. A computing device 1202 may comprise more or less hardware, software and/or firmware components than those depicted (e.g., drivers, operating systems, touch screens, biometric analyzers, and/or the like). Further, hardware elements may share functionality and still be within various embodiments described herein. In one example, encoding and/or decoding may be performed by the processor 1204 and/or a co-processor located on a GPU (i.e., NVidia).

A claimed solution rooted in computer technology overcomes problems specifically arising in the realm of computer technology. In various embodiments, a multi-tenant computing system (or, simply, multi-tenant system) is configured to receive a user request. The user request may be a request initiated by a tenant (e.g., Verizon) of the multi-tenant system to obtain some or all of their tenant data. For example, the tenant data may include usage data stored in a usage datastore managed by a usage service of the multi-tenant system. The tenant data may also include subscription data stored in a subscription datastore managed by a subscription service of the multi-tenant system. The "services" described herein may be microservices, and/or the services may function and/or be defined differently. For example, the usage service may store and/or access data in one manner (e.g., as defined by a specification for the usage service), and the subscription service may store and/or access data in another manner (e.g., as defined by a specification for the subscription service). In order for the multi-tenant system to access the different services, and/or the data associated with those services, in a uniform manner, each of the services may include a service provider interface. In some embodiments, the multi-tenant system may provide the same service provider interface to each of the different services, and the service provider interfaces may only require minimal modification to function with a particular service. For example, the modification may include defining locations of datastores and/or data formats for the datastore (e.g., object-based, relational, flat-file). Accordingly, modifying the service provider interface for a particular service may only include adding or modifying two or three lines of code within the service provider interface. The remaining portions of the service provider interface may be common across all of the service provider interface for the various services of the multi-tenant system.

In some embodiments, each of the service provider interfaces may be defined by the multi-tenant system according to a uniform access specification. For example, the uniform access specification may define a format for data output from services, a format for data input to services, and/or the like. In this manner, requests may be provided to services in a uniform manner, and data may be consumed from services in a uniform manner, regardless of how the services handle that data within the services themselves (and/or the datastores associated with the services). This solution may be more scalable than traditional solutions, for example, at least because the service provider interfaces may be maintained by their respective services and/or associated development teams. The multi-tenant system may provide requests and consume data in a uniform manner, without having to maintain a large "glue layer" that is implemented independent of the services. As more services are added, the same service provider interfaces may be deployed, and then implemented by the added services with minimal modification.

In some embodiments, the multi-tenant system is configured to perform real-time pagination. Real-time pagination may provide improved error recovery for a failed data transmission by allowing the data transmission to be reinitiated at a current page of the data transmission (e.g., page 55) as opposed to the beginning of the data transmission. In some embodiments, a service provider interface writes pages of data in real-time (e.g., as opposed to having pre-generated pages) by buffering data from the datastore of the service into a buffer of the service provider interface. The service may stream the data from the datastore of the service to the buffer of the service provider interface. A receiver (e.g., a central controller engine of the multi-tenant system) may pull (or, fetch) pages from the service provider interface. For example, the receiver may periodically provide a request to the service provider interface. If the buffer is full (e.g., the page has been completely written), and/or if the service request has been satisfied (e.g., all of the usage data has been obtained from the datastore, and all of the usage data amounts to less than a full page), the service provider interface may allow the data to be fetched from the buffer and stored in a datastore of the receiver. Once the receiver begins fetching the data from the service provider interface, the service provider interface may begin writing a second page of records into a second buffer of the service provider interface. When the receiver has received all of the records of the first page, it may send a request to fetch the records of the second page from the second buffer of the service provider interface. If an error occurs, for example, in the data transmission of a second page of records between the service provider interface and the receiver, the data transmission may be reinitiated at the second page, as opposed to the beginning of the data transmission (e.g., the first page of records).

The receiver may also begin streaming a page of records to a user (e.g., the tenant) when the receiver has successfully received the page of records. Accordingly, from the user's perspective, the user appears to be receiving a stream of data from the service, and the intermediate fetches are not apparent to the user.

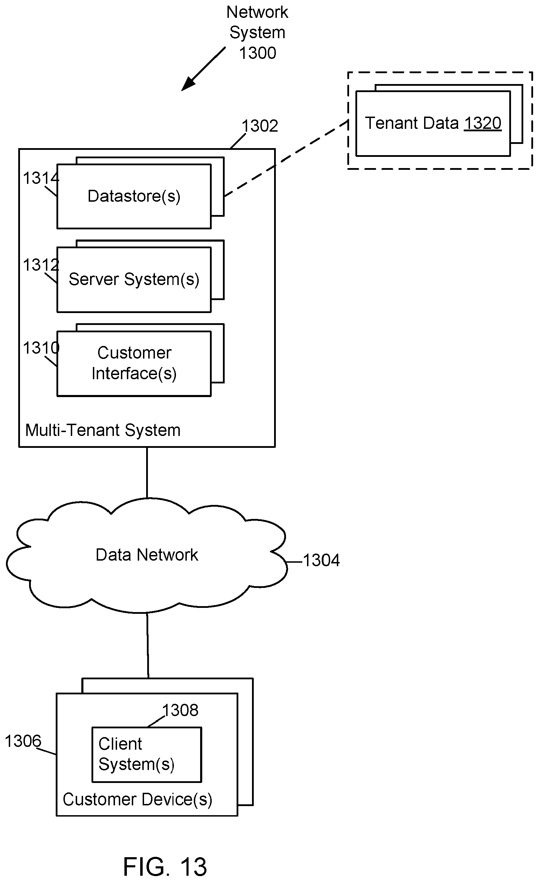

FIG. 13 depicts a diagram of an example network system 1300 for providing cloud-based software-as-a-service (SAAS) services of a multi-tenant system 1302 to multiple tenants according to some embodiments. Examples of the cloud-based SAAS services include data storage, data processing, and business-oriented applications. In some embodiments, each tenant may be a subscription-based entity or provider (e.g., an internet service provider, a home security system and service provider, a cellular phone service provider, or entertainment content provider). Each tenant may include a group of one or more users (e.g., individuals, business entities, customers of the business entities, systems) who share access to the cloud-based services. In one embodiment, a tenant includes a service entity such as AT&T, Netflix, Verizon, and/or the like. A tenant may include one or more products or services of an entity. For example, AT&T internet products may be a particular tenant, and AT&T security products may be another tenant. In some embodiments, the cloud-based SAAS services relate to managing subscriber records, product and/or service consumption information, billing information, payment information, and/or the like.

The network system 1300 includes the multi-tenant system 1302 coupled via a data network 1304 (e.g., a set of one or more public and/or private, wired and/or wireless networks) to client devices 1306. The multi-tenant system 1302 includes shared resources to host the cloud-based SAAS services to the tenants. The shared resources may include processors, memory, virtual systems, services, application programs, load balancers, firewalls, and/or the like. As shown, the multi-tenant system 1302 includes tenant interfaces 1310, server systems 1312, and datastores 1314. Each of the client devices 1306 includes a client system 1308 that accesses the cloud-based SAAS services hosted by the multi-tenant system 1302. In some embodiments, the client systems 1308 may be operated by employees (e.g., administrator users) of the provider of the provider of the multi-tenant system 1302. In some embodiments, the client systems 1308 may be operated by employees of the tenant. In some embodiments, the client systems 1308 may be operated by end users of the tenant's services.

Each client device 1306 may include a desktop, laptop, notebook, tablet, personal digital assistant, smart phone, or other consumer electronic devices incorporating one or more computer components. The client system 1308 on each client device 1306 may include hardware, software and/or firmware for communicating with the multi-tenant system 1302 and accessing the cloud-based services it hosts. Examples of the client systems 1308 may include web browsers, client engines, drivers, user interface components, proprietary interfaces, and/or the like.

The multi-tenant system 1302 includes hardware, software and/or firmware to host the cloud-based services for the tenants. It will be appreciated that the typical multi-tenant system 1302 may offer access to shared resources including systems and applications on shared devices and offer each tenant the same quality or varying qualities of service. In some embodiments, the multi-tenant system 1302 does not use virtualization or instantiation processes. In some embodiments, a multi-tenant system 1302 integrates several business computing systems into a common system with a view toward streamlining business processes and increasing efficiencies on a business-wide level.

In some embodiments, the multi-tenant system 1302 includes a user interface tier of multiple tenant interfaces 1310, a server tier of multiple server systems 1312, and a datastore tier of multiple datastores 1314 for the multiple tenants. In some embodiments, the tenant interfaces 1310 includes graphical user interfaces and/or web-based interfaces to enable tenants to access the shared services hosted by the multi-tenant system 1302. The tenant interfaces 1310 may support load balancing when multiple tenants (and/or multiple customers of the tenants) try to access the multi-tenant system 1302 concurrently. The tenant interfaces 1310 may additionally or alternatively include an operator interface for use by a systems operator to configure or otherwise manage the multi-tenant system 1302. In some embodiments, each tenant may be associated with a subset of the total tenant interfaces 1310 for load balancing.

In some embodiments, the server systems 1312 include hardware, software and/or firmware to host the shared services for tenants. The hosted services may include tenant-specific business services or functions, including enterprise resource planning (ERP), customer relationship management (CRM), eCommerce, Human Resources (HR) management, payroll, financials, accounting, calendaring, order processing, subscription billing, inventory management, supply chain management (SCM), collaboration, sales force automation (SFA), marketing automation, contact list management, call-center support, web-based customer support, partner and vendor management systems, product lifecycle management (PLM), financial, reporting and analysis, and/or the like. Similar to the tenant interfaces 1310, in some embodiments, the server systems 1310 may support load balancing when multiple tenants (and/or multiple customers of tenants) try to access the multi-tenant system 1302 concurrently. Further, in some embodiments, each tenant may be associated with a subset of the total server systems 1312 for load balancing.

In some embodiments, tenant data 1320 for each tenant may be stored in a logical store across one or more datastores 1314. In some embodiments, each tenant uses a logical store that is not assigned to any predetermined datastores 1314. Each logical store may contain tenant data 1320 that is used, generated and/or stored as part of providing tenant-specific business services or functions. In some embodiments, the datastores 1314 may include relational database management systems (RDBMS), object-based database systems, and/or the like. In some embodiments, tenant data 1320 may be stored across multiple datastores 1314, with each datastore dedicated to a particular service (e.g., managing customer records, managing product and/or service consumption information, managing billing information, managing payment information, and/or the like).

In some embodiments, the tenant data 1320 may include subscription information, such as billing data and/or subscription status (e.g., active, canceled, suspended, re-activated). Billing data may include billing invoice data (e.g., date of invoices and invoice amounts, overage charge dates and overage charge amounts), payment transaction data (e.g., date of payments, amount of payments), payment methods (e.g., credit card, debit card), payment plan (e.g., annual billing, monthly billing), and/or service plan information (e.g., the name of a service plan). Subscription information may also include a geographic region and/or location associated with a tenant, service, and/or subscriber. In some embodiments, the tenant data 1320 may include usage data (e.g., account activity data), such as new subscriptions, changes to subscribed products and/or services, cancellation of one or more products and/or services, subscriptions to new products and/or services, application of discounts, loyalty program package changes (e.g., additional programs and/or services, special rates, and/or the like for loyal customers), reduction or increase of rates for products and/or services, and/or cancellation of the application. In some embodiments, account activity may include usage of a product and/or product of a subscriber (e.g., what channels the subscriber actually watches, what services and what level of consumption the subscriber receives, quality of the product and/or services, and/or the like).

In some embodiments, the tenant data 1320 may be stored in one or more data formats (or, simply, formats). For example, subscription tenant data may be stored in a particular format, and usage tenant data may be stored in another format. As used herein, formats may include data types, variable types, protocols (e.g., protocols for accessing, storing, and/or transmitting data), programming languages, scripting languages, data value parameters (e.g., date formats, string lengths), endpoint locations and/or types, and/or the like.

In some embodiments, the multi-tenant system 1302 functions to provide uniform access to disparate services (e.g., microservices) and/or disparate datastores. For example, different services of the multi-tenant system 1302 may manage (e.g., create, read, update, delete) tenant data 1320 stored in different datastores 1314. It will be appreciated that as used herein, a "service" may be single service and/or a set of services (e.g., a cluster of services). The datastores 1314 may store data in different formats, and/or the services may handle data differently. The services may each include a service provider interface (SPIs) that provides data from the service, and/or receives data at the service, in a common (or, uniform) format, regardless of the original format that may be used by the service and/or datastores 1314. In some embodiments, the multi-tenant system 1302 may define a uniform access specification that defines the common format that the services must comport with when receiving and/or providing data. For example, each service may include a service provider interface, and communication with the service may be performed through the service provider interface. Accordingly, each of the services may be accessed in a uniform manner, and data may be consumed from the services in a uniform manner, regardless of the internal specifications and/or operations of the service.

In some embodiments, the multi-tenant system 1302 functions to provide real-time pagination (or, simply, pagination) of tenant data 1320. Pagination may provide improved error recovery for a failed data transmission by allowing the data transmission to be reinitiated at a current page of the data transmission (e.g., page 55) as opposed to the beginning of the data transmission.

The data network (or, communication network) 1304 may represent one or more computer networks (e.g., LAN, WAN, or the like) or other transmission mediums. The data network 1304 may provide communication between the systems, engines, datastores, components, and/or devices described herein. In some embodiments, the data network 1304 includes one or more computing devices, routers, cables, buses, and/or other network topologies (e.g., mesh, and the like). In some embodiments, the data network 1304 may be wired and/or wireless. In various embodiments, the data network 1304 may include the Internet, one or more wide area networks (WANs) or local area networks (LANs), one or more networks that may be public, private, IP-based, non-IP based, and so forth.

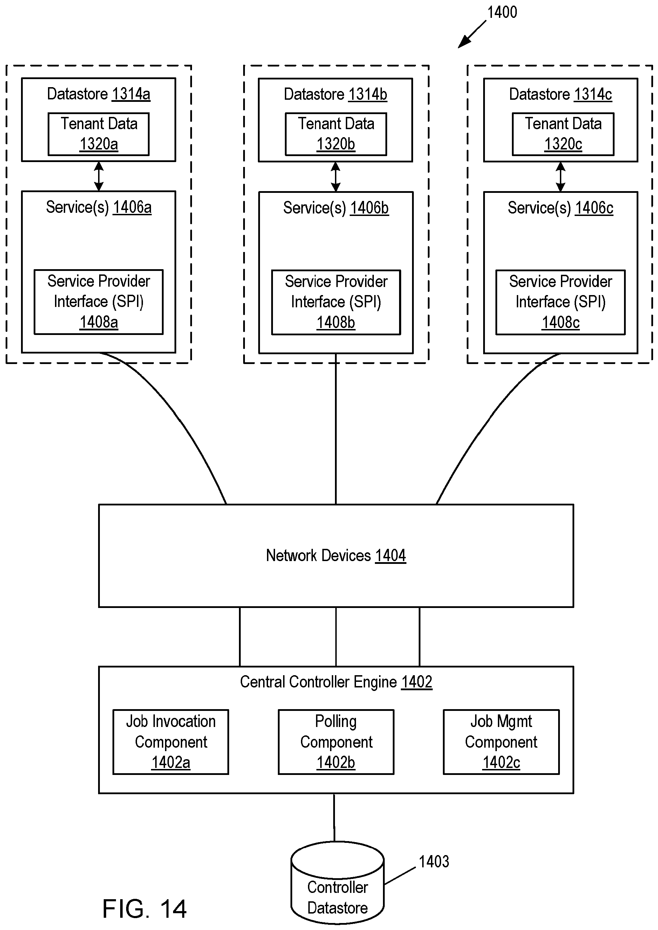

FIG. 14 depicts a diagram of an example portion 1400 of a multi-tenant system 1302 for enabling uniform access to data in disparate datastores 1314 and/or disparate services 1406 according to some embodiments. In the example of FIG. 14, the example portion 1400 of the multi-tenant system 1302 includes a central controller engine 1402, network devices 1404, services 1406a to 1406c (individually, the service 1406, collectively, the services 1406), service provider interfaces (SPIs) 1408 (individually, the service provider interface 1408, collectively, the service provider interfaces 1408), and datastores 1314a to 1314c (individually, the datastore 1314, collectively, the service provider datastores 1314). The three datastores 1314 may each be respectively managed by the three sets of one or more services 1406, and each respectively made accessible in a uniform manner by the service provider interfaces (SPIs) 1408. In some embodiments, the central controller engine 1402, which may support internal or tenant communications, is coupled via network devices 1404 with the datastores 1314. The network devices 1404 may include routers, load balancers, firewalls, and/or the like. Although only three services 1406, three service provider interfaces 1408, and three datastores 1314 are shown here, it will be appreciated that the multi-tenant system 1302 may support a greater or lesser number of such services 1406, service provider interfaces 1408, and/or datastores 1314.

As discussed herein, the multi-tenant system 1302 distributes tenant data across multiple datastores 1314 at multiple locations. As shown, the multi-tenant system distributes tenant data across at least datastores 1314a, 1314b and 1314c. The multi-tenant system 1302 may include one or more services, shown as services 1406a, 1406b and 1406c, to respectively manage the tenant data at each datastore 1314 through one or more application program interfaces (APIs). APIs are typically designed to be specific to the purpose of the service it supports and may differ widely in the exposed capabilities and performance. For example, in some systems, each of the different datastores 1314 and each of the different services 1406 may be developed independently of one another and possibly by different development teams. Accordingly, it is common that the API calls are non-uniform.

To solve the nonuniformity, the system could incorporate a "glue" layer, e.g., an enterprise service bus or a service-oriented architecture (SOA layer) that access data via the APIs and exposes it to the consumers. Glue layers typically access data directly from the datastore, bypassing the services with their different APIs. Glue layers have been found to be brittle, needing to be matched continuously to changing APIs that the services expose. Further, direct database access often violates data integrity guarantees or service level agreements that a service is trying to offer. Further, data exposed directly from the database often has a different shape than the data exposed at API level. Data exposed directly from the database therefore requires extensive transformation to match the data shape of that received at the API level. API enforcement through code or process is often inconsistent, which often results in multiple incompatible implementations. By putting these requirements on the software development process, the resulting APIs may only be "lowest common denominator" APIs instead of matching the desired use cases for the services.

To enable uniform access to the services 1406 and the tenant data 1320 stored in the datastores 1314, in some embodiments, the multi-tenant system 1302 includes a software component embedded directly (or, integrated) into the services 1406. In other embodiments, the software component may be hooked into the services 1406, as opposed to embedded directly into the services 1406. This software component, referred to herein as a service provider interface (SPI) 1408a, 1408b and 1408c respectively, may be delivered as a library to a service development team for integration into the services 1406 to make their services compatible, without having to change their APIs or expose internal details of their database. With the service provider interface 1408 integrated into the services 1406, the multi-tenant system 1302 enables access to diverse data services in a uniform manner without having to build extensive glue layers between services, the consumers, and/or other features of the multi-tenant system 1302. Each of the services 1406 may enable access to the diverse data services without exposing their internal data organization and/or without bypassing the services 1406. Development teams can use the service provider interfaces 1408 to allow access to the data exposed by the services 1406 in a uniform manner, and also provide data in a uniform manner, regardless of the internal formats and specification used by the service.

In the example of FIG. 14, the central controller engine 1402 includes a job invocation component 1402a, a polling component 1402b, a job management component 1402c. The job invocation component 1402a may function to receive user requests (or, tenant requests). User requests may include export requests, import requests, and/or the like. For example, a request may include a request from a tenant to obtain some or all of the their tenant data 1320. User requests may be received in a variety of different formats. For example, requests may be obtained in tenant formats (e.g., a Verizon format, an AT& format).

In some embodiments, the job invocation component 1402a may function to identify and/or select service provider interfaces 1408. In some embodiments, the job invocation component 1402a may function to identify and/or select service provider interfaces 1408 based on user requests. For example, the job invocation component 1402a may store a topology of the services (e.g., in a file stored in the controller datastore 1403). The topology of the services may also be maintained by another service, and the job invocation component 1402a may query that other service for a current topology. The topology may indicate locations (e.g., an endpoint location) of service provider interfaces 1408 and/or services 1406. In some embodiments, the job invocation component 1402a may parse a user request, and identify the services 1406 to process the request based on the topology. For example, the job invocation component 1402a may parse an extract request for usage data and subscription data, and identify the location of the service provider interface 1408 for the usage service based on the topology, and the location of the service provider interface 1408 for the subscription service based on the topology.

In some embodiments, the job invocation component 1402a functions to provide (e.g., generate and/or transmit) service requests. For example, the job invocation component 1402a may provide a service request based on a user request and a selected service provider interface 1408. In some embodiments, the service request may be in a common format. For example, the job invocation component 1402a may provide service requests based on a uniform access specification. The uniform access specification may define one or more common protocols, data formats, programming languages, endpoints, and/or the like, for communication between the services 1406, the central controller engine 1402, and/or other elements of the multi-tenant system 1302. For example, the uniform access specification may define output format requirements for data output from the services 1406, and input format requirement for the services 1406.

In some embodiments, the job invocation component 1402a functions to receive and/or provide information (e.g., in addition to user requests and/or service requests). For example, the job invocation component 1402a may receive a request result, and provide the request results to another system and/or user (e.g., a tenant user). The request results may be in a common format (e.g., based on the service provider interface 1408 and/or uniform access specification), regardless of which service 1406 provided to the data. For example, a request result may include usage data and subscription data in a common format.

The polling component 1402b may function to query services 1406 to determine a status of jobs (e.g., service requests) and/or services 1406. A status may include a completion status (e.g., 56% complete) of a job, and/or whether the service 1406 is responsive or has timed-out. For example, the polling component 1402b may query (e.g., poll) a usage service 1406 to the determine the status of a request to obtain (e.g., fetch, pull, push) usage data for a particular tenant of the multi-tenant system 1302. The polling component 1402b may determine if a service has failed if query attempt fail.

The job management component 1402c may function to maintain state information (or, simply, "state") of jobs, services 1406, and/or the central controller engine 1402. This may be more resilient than maintaining states at each of the services, and avoid having to perform state reconciliation. In some embodiments, the job management component 1402c may store state information in the controller datastore 1403. For example, state information may include the associated service request, a status of the service status, a status of the service request, and/or the like. If a service has failed (e.g., as determined by the polling component 1402b), the job management component 1402c may relaunch the failed according to the state information. Similarly, if the central controller engine 1402 has recently relaunched (e.g., in response to failure of the central controller engine 1402), the job management component 1402c may relaunch services based on the state information.

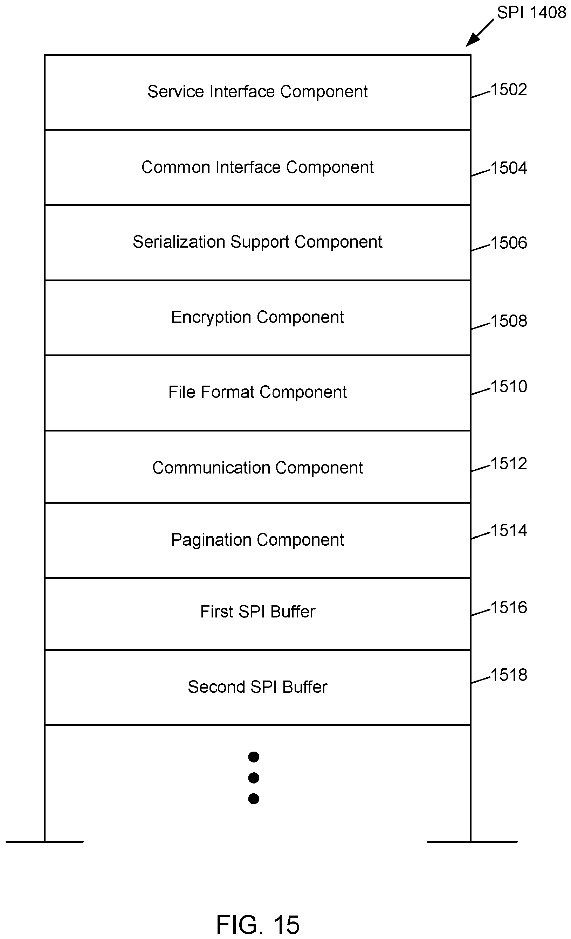

FIG. 15 depicts a diagram of an example service provider interface (SPI) 1408 according to some embodiments. Generally, under some approaches (e.g., approaches that do not use service provider interfaces 1408), services typically needed to receive information (e.g., service requests) in a format native to the particular service and/or associated datastores. Accordingly, information typically had to be provided in different formats for different services. Alternatively, under other approaches that do not use service provider interfaces 1408, the entity providing the request for information, and/or receiving a response to the request for information, had to translate the requests prior to sending the request, and/or translate the responses after they have been sent from the service. The service provider interface 1408 may allow information to be provided (e.g., from the requesting entity) to different services in a common format (e.g., based on a uniform access specification and/or service data specifications of the services), and/or may allow information to be provided from the different services in a common format (e.g., based on a uniform access specification and/or service data specifications of the services).

In the example of FIG. 15, the service provider interface 1408 includes a service interface component 1502, a common interface component 1504, a serialization support component 1508, an encryption component 1510, a file format component 1512, and a communication component 1514. The service interface component 1502 may function to facilitate implementation of uniform access for a particular service 1408. While the other components (e.g., components 1504-1512) of the service provider interface 1408 may be common across all of the service provider interfaces 1408, the service interface component 1502 may be modified for the particular service 1408. In some embodiments, services 1408 may be implemented and/or managed by different development teams. For example, a usage service 1408 may be managed by a usage development team, a subscription service 1408 may be managed by a subscription development team, and so forth. The different services 1408 may adhere to different service data specifications. For example, a usage service 1408 may store and/or access data according to a first format (e.g., data format, access protocols), and a subscription service 1408 may store and/or access data according to another format (e.g., another data format, another access protocol). The service interface component 1502 may provide the instructions for processing requests received in a common format, and/or providing responses to such requests in a common format. For example, the service interface component 1502 may translate requests received according to a common format into a request that can be processed by a service that is formatted according to a specific data specification of that service. More specifically, for example, the common request may include variable for various parameters (e.g., access protocol types, data format types, endpoint locations, and/or the like), and the service interface component 1502 may define the values for those variables.

In some embodiments, the service interface component 1502 of a service provider interface may be deployed (e.g., to a particular service) with a template service interface component, which may be modified (e.g., by the particular service) based on the service data specification of the particular service.

The common interface component 1504 may function to receive information (e.g., service requests) in a common format, and/or provide information (e.g., services request results) in a common format (e.g., to the central controller engine 1402). The common interface component 1504 may be the same (e.g., having the same source code, object code, machine code, and/or the like) as the common interface components 1504 of the other service provider interfaces 1408 of the other services 1406. In some embodiments, the common interface component 1504 may comprise a REST interface. The common interface component 1504 may be defined and/or function according to the uniform access specification.

The serialization support component 1506 may function to provide serialization and/or deserialization support. The serialization support component 1506 may include instructions (e.g., code) to convert one or more objects (e.g., one or more data records, between a sequence of bytes that can be sent through streams). The serialization support component 1506 may be the same (e.g., having the same source code, object code, machine code, and/or the like) as the serialization support components 1506 of the other service provider interfaces 1408 of the other services 1406, and may not require any modification (e.g., by the service development team) to function with the associated service 1406. The serialization support component 1506 may be defined and/or function according to the uniform access specification.

The encryption component 1508 may function to encrypt communication with other elements in the multi-tenant system 1302. For example, the encryption component 1408 may encrypt data imported in the service provider interface 1408 and/or data exported from the service provider interface 1408. For example, a target location for exported data may require a particular encryption, and the encryption component 1508 may ensure data is encrypted properly prior to exporting to the target location. The encryption component 1508 may be the same (e.g., having the same source code, object code, machine code, and/or the like) as the encryption components 1508 of the other service provider interfaces 1408 of the other services 1406, and may not require any modification (e.g., by the service development team) to function with the associated service 1406. The encryption component 1508 may be defined and/or function according to the uniform access specification.

The file format component 1510 may function to facilitate data record formatting. For example, the file format component 1510 may format data as JSON objects, CSV files, and/or custom types. The file format component 1510 may be the same (e.g., having the same source code, object code, machine code, and/or the like) as the file format component 1510 of the other service provider interfaces 1408 of the other services 1406, and may not require any modification (e.g., by the service development team) to function with the associated service 1406. The file format component 1510 may be defined and/or function according to the uniform access specification.

The communication component 1512 may function to receiving and/or provide (e.g., stream, upload) data. For example, the communication component 1512 may function to provide data to an S3 bucket. The communication component 1512 may be the same (e.g., having the same source code, object code, machine code, and/or the like) as the communication components 1512 of the other service provider interfaces 1408 of the other services 1406, and may not require any modification (e.g., by the service development team) to function with the associated service 1406. The communication component 1512 may be defined and/or function according to the uniform access specification.

The pagination component 1514 may function to generate (or, "write") pages of data records on-the-fly (e.g., in real-time) in response to one or more service requests (e.g., an export request to obtain usage data and/or subscription data). Pages may have a predetermined size-limit (e.g., 4000 records). The pagination component 1514 may obtain tenant data 1320 from an associated service datastore 1314. For example, the service 1406 may provide the tenant data 1320 as a data stream from the datastore 1314 to a service provider interface buffer 1516 or 1518 in response to a request from the pagination component 1514. When a service provider interface buffer 1516 or 1518 is full, and/or when the service request is satisfied, the pagination component 1514 may provide the data from the service provider interface buffer 1516 or 1518 to the central controller engine 1402 (e.g., in response to a fetch request from the central controller engine 1402). Data records may be removed from the service provider interface buffers 1516 or 1518 as they are provided from the service provider interface buffers 1516 or 1518, and/or they may be removed when receipt is acknowledged by the central controller engine 1402.

In some embodiments, the pagination component 1514 functions to generate subsequent pages of data records on-the-fly (e.g., in real-time). In some embodiments, the pagination component 1514 generates subsequent pages upon acknowledgement that the previous page was successfully received. Acknowledgements may be explicit or implicit. For example, the central controller engine 1402 may send a message indicating that the previous page has been successfully received. In another example, a request for a next page may function as an implicit acknowledgement. In some embodiments, an acknowledgement is not needed, and the pagination component 1514 generates subsequent pages when a service provider interface buffer 1516 or 1518 is full and/or if the service provider interface 1408 is transmitting the data records to the central controller engine 1402.

In some embodiments, the pagination component 1514 may adjust a rate that pages are written. For example, depending on a rate that a receiver (e.g., central controller engine 1402) is consuming a first page from a first service provider interface buffer 1516, the rate that a second page is written to a second service provider interface buffer 1516 may be adjusted. For example, if the receiver is consuming the first page at a relatively slow rate (e.g., based on one or more thresholds), then a stream of data from the datastore 1314 of the service 1406 to the second service provider interface buffer 1516 may be reduced and/or stopped. Alternatively, for example, if the receiver is consuming the first page at a relatively fast rate (e.g., based on one or more thresholds), then the stream of data from the datastore 1314 of the service 1406 to second service provider interface buffer 1516 may be increased.

In some embodiments, the pagination component 1514 may adjust the rate of writing pages based on a rate that page(s) are being consumed by a receiver. For example, a writing rate may be initially set based on an expected consumption rate. The pagination component 1514 may monitor the actual consumption rate, and adjust the writing rate based on the actual consumption rate. For example, if the actual consumption rate is 20% slower than the expected consumption rate, then the pagination component 1514 may reduce the writing rate by 20%.

In some embodiments, the pagination component 1514 functions to provide data. For example, the pagination component 1514 may provide data in response to a pull (or, fetch) request (e.g., from the central controller engine 1402). The pagination component 1514 may function to deny requests for data if the requested data is not ready (e.g., the corresponding page is still being written to the service provider interface buffer 1516 or 1518). If the data is not ready, the pagination component 1514 may send a response indicating that the data is not ready for transmission, and/or other status (e.g., indicating a percentage of completion for the page and/or an estimated time until the page is completed).

The pagination component 1514 may be the same (e.g., having the same source code, object code, machine code, and/or the like) as the pagination components 1514 of the other service provider interfaces 1408 of the other services 1406, and may not require any modification (e.g., by the service development team) to function with the associated service 1406. The pagination component 1514 may be defined and/or function according to the uniform access specification.

FIG. 4 depicts a diagram of an example portion 1600 of a multi-tenant system 1302 enabling real-time pagination and error recovery in a data transmission according to some embodiments. In the example of FIG. 4, the example portion of the multi-tenant system 1302 includes a service 1406, a service provider interface 1408, a datastore 1314, a central controller engine 1402, and a tenant interface 1620. Although only the service 1406, the service provider interface 1408, and the datastore 1314 are shown here, the multi-tenant system 1302 may support any number of such services 1406, service provider interfaces 1408, and/or datastores 1314.

The example portion 1600 of the multi-tenant system 1302 includes a tenant interface 1620 coupled to the central controller engine 1402, and the central controller engine 1402 coupled to the service 1406 (e.g., via one or more network devices 1404). As stated above, the service 1406 manages the one or more datastores 1314. The service 1406 includes a service provider interface 1408 that enables uniform data access and real-time pagination.

The tenant interface 1620 may receive a user request (e.g., query) from a user (e.g., tenant administrator). The tenant interface 1620 may provide one or more graphical user interfaces (GUIs) for receiving and presenting information (e.g., tenant data 1320). In one example, the service 1406 may receive a query via the service provider interface 1408. The service 1406 may generate resulting records 1608 (e.g., Records 1 to Record N) in response to the query. The service provider interface 1408 may then send the resulting records 1608 to the tenant interface 1620 via the central controller engine 1402.

In a system without the pagination component 1514 and the central controller engine 1402, the resulting records 1608 would be sent to the tenant interface 1620 as a continuous data stream. When transferring large amounts of structured data (e.g., lists of records) from a source to a destination, any transfer error (e.g., a lost record or an I/O error) would lead to the continuous data stream being interrupted and restarted from scratch. For large numbers of data records, restarting is a laborious process that is time and resource consuming. Further, at times when the continuous data stream pauses for too long, any associated network devices (e.g., routers, load balancers, firewalls, etc.) may close the connection, causing transmission errors, again requiring the system to restart the data stream.

Some approaches to address this problem may include storing the results in a stable store (e.g., a file system) and giving the requesting tenant interface 1620 access (e.g., WebDav). Another approach may be not to stream the data but instead to use store-and-forward process. Another alternative may be to use a reliable transport layer (e.g., a messaging system) and block the server until a record has been stored and acknowledged by the transport layer. These approaches are either extremely resource consuming (storing on file system), difficult to implement (reliable transport layer), and/or operate on a physical data level (e.g., "byte level").

In some embodiments, the pagination component 1514 and the central controller engine 1402 operate in a manner that effectively splits the data transmission into sets of records on the fly (e.g., in real-time). The pagination component 1514 and the central controller engine 1402 may reverse the responsibility for the data transmission from a push (e.g., where a server sends the resulting records to a client) to a pull (e.g., where a client fetches each record set from a server). Accordingly, the pagination component 1514 may make each record set available (e.g., in the first service provider interface buffer 1516) until the central controller engine 1402 signals successful transfer of the record set, and then readies the next record set (e.g., in the second service provider interface buffer 1518), and so forth, until the entire data transmission is exhausted. This process is resource efficient because, for example, only a single record may need to be held available at any given time. The multi-tenant system 1302 may leverage structured data to provide each record set over an arbitrary low-level byte count. This approach can be resilient to transmission (or, transport) errors, for example, because any error can cause the current record set to be re-sent until transmission succeeds (e.g., without having to re-start the entire data transmission). Furthermore, because the resulting records may be sent in smaller chunks (or, pages), any associated network devices are less apt to close the network connections.

In the example of FIG. 4, the central controller engine 1402 includes a data fetching component 1610, an error handling component 1612 and a data management component 1614. In some embodiments, the pagination component 1514 informs the central controller engine 1402 that a first record set is available. The data fetching component 1610 may initiate a pull of the first record set. The error handling component 1612 may monitor for errors. In some embodiments, the error handling component 1612 may identify errors dynamically (e.g., as it is being received). In some embodiments, the error handling component 1612 may identify errors upon completion of receipt of the first record set. If the error handling component 1612 identifies an error, the error handling component 1612 may inform the data fetching component 1610 to reinitiate transfer of the first record set. If the error handling component 1612 identifies no error, the error handling component 1612 may inform the data fetching component 1610 that it may initiate pulling the second record set and may inform the data management component 1614 to forward the data to the tenant interface 1620. The data management component 1614 may clean the data (e.g., remove any headers or footers) and may forward the data to the tenant interface 1620 as a continuous data stream.

In some embodiments, while the data management component 1614 is forwarding the data transmission (e.g., data stream) to the tenant interface 1620 or, in other embodiments, after the data management component 1614 has completed providing the data transmission to the tenant interface 1620, the data fetching component 1610 may inform the pagination component 1514 that it is ready to pull the next record set. The pagination component 1514 may replace the first record set (e.g., in a service provider interface buffer 1516 or 1518) with the second set of records. In some embodiments, the data fetching component 1610 may obtain some information from the first record set to inform the pagination component 1514 which record set is next. The data fetching component 1610 may then begin to receive the next (e.g., second) record set. The process may repeat until the last record set of the resulting records 1608 is received. Notably, the data fetching component 1610 may detect that it has received the last record set either from information the pagination component 1514 placed in the last record set (e.g., in the header or footer), or because the pagination component 1514 informs the data fetching component 1610 in response to a success flag the pagination component 1514 receives from the data fetching component 1610 indicating that the last record set was successfully received or in response to a request from the data fetching component 1610 for another record set.

In some embodiments, the data fetching component 1610 functions to pull (or, fetch) pages from the service provider interface. For example, the central controller engine 1402 may periodically provide a request to the service provider interface 1408. If a service provider interface buffer 1516 or 1518 is full (e.g., the page has been completely written), and/or if the service request has been satisfied (e.g., all of the usage data has been obtained from the datastore, and all of the usage data amounts to less than a full page), the service provider interface 1408 may provide the data from the service provider interface buffer 1516 or 1518 to the central controller engine 1402 for storage (e.g., in the controller datastore 1403).

In some embodiments, the data fetching component 1610 may provide a fetch request to the service provider interface 1408 based on a previously received page. For example, a previously received page may include an identifier, such as a uniform resource identifier (URI), that identifies a particular of the next page location (e.g., a URI of the second service provider interface buffer 1518). The request to receive the next page may function as the acknowledgement (e.g., an implicit acknowledgement) that the previous page was successfully received.

In some embodiments, the error handling component 1612 functions to identify errors in a data transmission. If an error occurs, for example, in the data transmission of a second page of records between the service provider interface 1408 and the central controller engine 1402, the error handling component 1612 may reinitiate transmission of the second page of records, as opposed to the beginning of the data transmission (e.g., the first page of records). This may be allowed, for example, because the pages are written in real-time (e.g., as opposed to pre-generated).

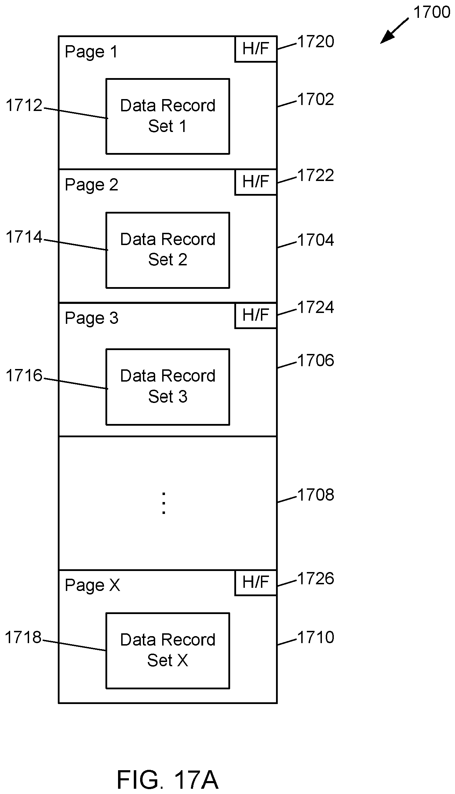

FIG. 17A depicts a diagram of example paginated record sets 1700 ready for transmission to a central controller engine 1402 of a multi-tenant system 1302 according to some embodiments.

The paginated record sets 1700 include a first page 1702, a second page 1704, a third page 1706, additional pages 1708, and a last page ("Page X") 1710. Each page includes a data record set. For example, the first page 1702 includes a first data record set 1712, the second page 1704 includes a second data record set 1714, the third page 1706 includes a third data record set 1716, and the last page ("Page X") 1710 includes a last data record set 1718 ("Data Record Set X"). Each page may also include a header and/or footer that provides additional information for supporting paginated data transmission. For example, the first page 1702 includes a first header 1720, the second page 1704 includes a second header 1722, the third page 1706 includes a third header 1724, and the last page ("Page X") 1710 includes a last header 1726. In some embodiments, no header or footer is needed. The headers and/or footers may include identifiers for obtaining a next page. For example, the page 1702 may include a footer 1720 including a URI of a first service provider interface buffer 1516, the page 1712 may include a footer 1722 including a URI of a second service provider interface buffer 1518, the page 1706 may include a footer 1724 including a URI of the first service provider interface buffer 1516, and so forth.

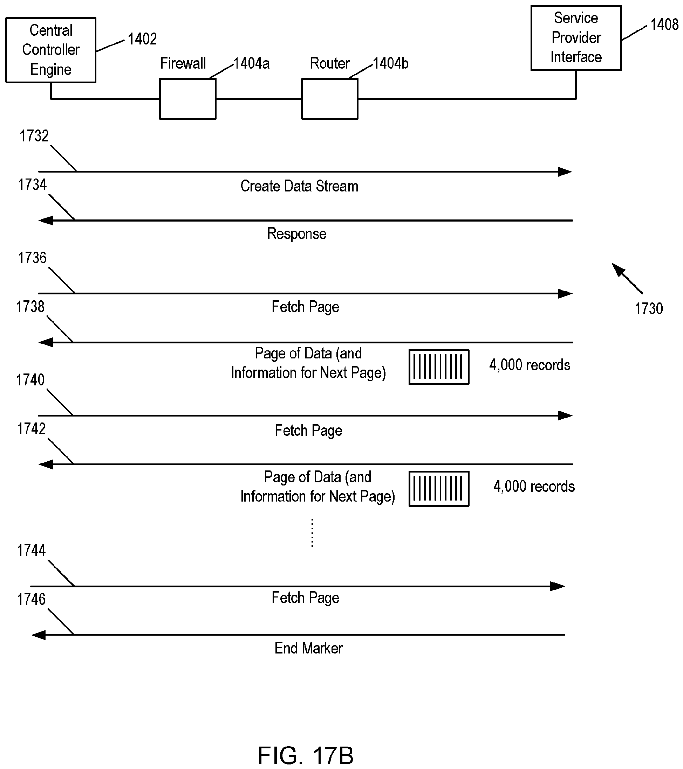

FIG. 17B depicts a flowchart of an example of a method 1730 of real-time paginated record transmission in a multi-tenant system according to some embodiments. In this and other flowcharts and/or sequence diagrams, the flowchart illustrates by way of example a sequence of steps. It should be understood the steps may be reorganized for parallel execution, or reordered, as applicable. Moreover, some steps that could have been included may have been removed to avoid providing too much information for the sake of clarity and some steps that were included could be removed, but may have been included for the sake of illustrative clarity.

The central controller engine 1402 is coupled to a service provider interface 1408 via network devices, (e.g., a firewall 1404a and router a 1404b). The flowchart 1730 begins in step 1732 with the central controller engine 1402 sending a request to create a data transmission (e.g., a data stream). The service provider interface 1408 in step 1734 prepares a ready response. The central controller engine 1402 in step 1736 requests a first page be fetched. The service provider interface 1408 in step 1738 sends a first page of data (e.g., 16000 records) and sends information for the next page. The central controller engine 1402 in step 1740 requests the next page (e.g., which may be an indication that no errors occurred in the transmission of the first page, and/or an acknowledgement of successful receipt of the first page). The service provider interface 1408 in step 1742 sends the next page of data (e.g., 4000 records) and sends information for the next page. The central controller engine 1402 in step 1744 requests another page be fetched. The service provider interface 1408 in step 1746 sends an end marker (e.g., which is an indication that no more pages are in the data stream).

FIGS. 6A-C depict a flowchart of an example of a method 1800 of real-time paginated record transmission in a multi-tenant system according to some embodiments. In this and other flowcharts and/or sequence diagrams, the flowchart illustrates by way of example a sequence of steps. It should be understood the steps may be reorganized for parallel execution, or reordered, as applicable. Moreover, some steps that could have been included may have been removed to avoid providing too much information for the sake of clarity and some steps that were included could be removed, but may have been included for the sake of illustrative clarity.

In step 1802, a multi-tenant system (e.g., multi-tenant system 1302) receives a user request (e.g., export request, import request) to perform one or more service requests (e.g., export usage data, export subscription data) associated with user data (e.g., tenant data 1320). The user data may include first data (e.g., usage data of the tenant data 1320). In some embodiments, a tenant interface (e.g., tenant interface 1320) receives the user request from a user (e.g., a tenant user), and provides the request to a central controller engine (e.g., central controller engine 1402). In some embodiments, a data management component (e.g., data management component 1614) of the central controller engine receives the user request from the tenant interface.

In step 1804, the multi-tenant system selects, based on the user request, a first service provider interface (e.g., first service provider interface 1408) integrated into a first service (e.g., a usage service 1406). The first service provider interface may be configured to operate on the first data in a first datastore (e.g., a usage service datastore 1314) associated with the first service. The first SPI may include a common pagination component (e.g., pagination component 1514) configured to obtain and buffer the first data from the first datastore into a first buffer (e.g., first service provider interface buffer 1516) of the first service provider interface. As used herein, a "common" component may be a component that is the same for each of the service provider interfaces of the different services of the multi-tenant system 1302. In some embodiments, the central controller engine selects the first service provider interface. In some embodiments, a job invocation component (e.g., job invocation component 1402a) of the central controller engine selects the first service provider interface.

In step 1806, the multi-tenant system obtains, based on a first service request (e.g., export usage data of the tenant data 1320) of the one or more service requests, a first page (e.g., page 1702) of records (e.g., first set of data records 1712) of the first data from the first datastore. As used herein, "pages" may be structures (e.g., data structures, logical structures) generated by the common pagination component. In some embodiments, the first service pushes (e.g., streams) the first data from the first datastore to the first service provider interface (e.g., in response to a request from the first service provider interface, and/or in response to the first data being written to the first datastore). In some embodiments, the common pagination component of the first service provider interface obtains the first page of records.

In step 1808, the multi-tenant system buffers the first page of records in the first buffer of the first service provider interface as the records of the first page of records are being obtained from the first datastore (e.g., in real-time). Buffered data may be temporarily stored (e.g., until receipt of that data by the central controller engine is acknowledged). In some embodiments, the common pagination component of the first service provider interface buffers the first page of records.

In step 1810, the multi-tenant system provides the first page of records of the first data to the central controller engine. In some embodiments, the common pagination component provides the first page of records from the first service provider interface buffer to a datastore (e.g., controller datastore 1403) of the central controller engine in response to a pull (or, fetch) request initiated by the central controller engine. For example, the common pagination component of the first service provider interface may satisfy the fetch request if the first buffer of the first service provider interface is full (e.g., the first page has been written) and/or the first service request has been fulfilled. Otherwise, the first service provider interface may return a response indicating that the page is not ready to be sent.

In step 1812, the multi-tenant system stores the first page of records of the first data. In some embodiments, the central controller engine stores the first page of records of the first data in the datastore of the central controller engine. In some embodiments, a data management component (e.g., data management component 1614) of the central controller engine stores the first page of records of the first data in the datastore of the central controller engine.

In step 1814, the multi-tenant system provides the first page of records of the first data to a user (e.g., tenant user). In some embodiments, the data management component provides (e.g., streams, uploads, downloads) the first page of records of the first data to a user (e.g., via the tenant interface).

In step 1816, the multi-tenant system obtains, based on the first service request of the one or more service requests, a second page (e.g., second page 1704) of records (e.g., second data record set 1714) of the first data from the first datastore. In some embodiments, the common pagination component of the first service provider interface obtains the second page of records of the first data. In some embodiments, the first service pushes (e.g., streams) the first data from the first datastore to the first service provider interface (e.g., in response to a request from the first service provider interface, and/or in response to the first data being written to the first datastore). In some embodiments, the common pagination component of the first service provider interface obtains the second page of records.

In step 1818, the multi-tenant system buffers the second page of records in a second buffer of the first service provider interface as the records of the second page of records are being obtained from the first datastore (e.g., in real-time). As used herein, buffered data may be temporarily stored (e.g., until receipt of that data by the central controller engine is acknowledged). In some embodiments, the common pagination component of the first service provider interface buffers the second page of records.

In step 1818, the multi-tenant system provides the second page of records of the first data to the central controller engine. In some embodiments, the common pagination component provides the second page of records from the first service provider interface buffer to the datastore of the central controller engine in response to a pull (or, fetch) request initiated by the central controller engine. In some embodiments, the fetch is based on an identifier (e.g., a URI) of the second service provider interface buffer. The identifier may be included in the first page records. The first page of records may include a URI of the second service provider interface buffer. For example, the last entry in the first page of records may be the identifier.

In step 1822, the multi-tenant system stores the second page of records of the first data. In some embodiments, the central controller engine stores the second page of records of the first data in the datastore of the central controller engine. In some embodiments, the data management component stores the second page of records of the first data in the datastore of the central controller engine.

In step 1824, the multi-tenant system provides the second page of records of the first data to the user. In some embodiments, the communication component of the central controller engine provides (e.g., streams, uploads, downloads) the second page of records of the first data to the user (e.g., via the tenant interface).

In step 1826, the multi-tenant system selects, based on the user request, a second service provider interface (e.g., a second service provider interface 1408) integrated into a second service (e.g., a subscription service 1406). The second service provider interface may be configured to operate on the second data in a second datastore (e.g., a subscription service datastore 1314) associated with the second service. The second service provider interface may include the common pagination component configured to obtain and buffer the second data from the second datastore into a second buffer (e.g., second service provider interface buffer 1516) of the second service provider interface. In some embodiments, the central controller engine selects the second service provider interface. In some embodiments, the job invocation component of the central controller engine selects the second service provider interface.

In step 1828, the multi-tenant system obtains, based on a second service request (e.g., export subscription data of the tenant data 1320) of the one or more service requests, a first page of records of second data of the user data from the second datastore. In some embodiments, the second service pushes (e.g., streams) the second data from the second datastore to the second service provider interface (e.g., in response to a request from the second service provider interface, and/or in response to the second data being written to the second datastore). In some embodiments, the common pagination component of the second service provider interface obtains the first page of records of the second data.

In step 1830, the multi-tenant system buffers the first page of records of the second data in the first buffer of the second service provider interface as the records of the first page of records of the second data are being obtained from the second datastore (e.g., in real-time). In some embodiments, the common pagination component of the second service provider interface buffers the first page of records of the second data in the first buffer of the second service provider interface.

In step 1832, the multi-tenant system provides the first page of records of the second data to the central controller engine. In some embodiments, the common pagination component of the second service provider interface provides the first page of records of the second data from the first buffer of the second service provider interface to the datastore of the central controller engine in response to a pull (or, fetch) request initiated by the central controller engine. For example, the common pagination component of the second service provider interface may satisfy the fetch request if the first buffer of the second service provider interface is full (e.g., the first page has been written) and/or the second service request has been fulfilled. Otherwise, the second service provider interface may return a response indicating that the page is not ready to be sent.

In step 1834, the multi-tenant system stores the first page of records of the second data. In some embodiments, the data management component of the central controller engine stores the first page of records of the second data in the datastore of the central controller engine.

In step 1836, the multi-tenant system provides the first page of records of the first data to the user. In some embodiments, the data management component of the central controller engine provides (e.g., streams, uploads, downloads) the first page of records of the second data to the user (e.g., via the tenant interface).

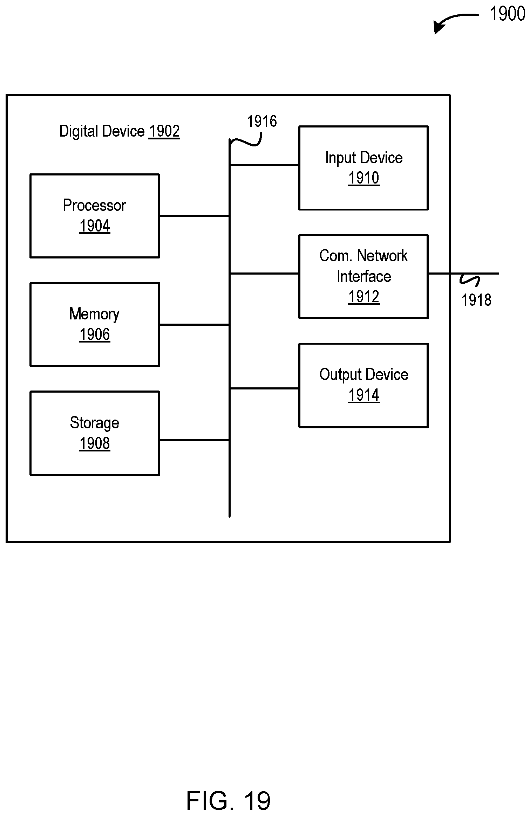

FIG. 19 depicts a diagram 1900 of an example of a computing device 1902. Any of the systems, engines, datastores, and/or networks described herein may comprise an instance of one or more computing devices 1902. In some embodiments, functionality of the computing device 1902 is improved to the perform some or all of the functionality described herein. The computing device 1902 comprises a processor 1904, memory 1906, storage 1908, an input device 1910, a communication network interface 1912, and an output device 1914 communicatively coupled to a communication channel 1916. The processor 1904 is configured to execute executable instructions (e.g., programs). In some embodiments, the processor 1904 comprises circuitry or any processor capable of processing the executable instructions.

The memory 1906 stores data. Some examples of memory 1906 include storage devices, such as RAM, ROM, RAM cache, virtual memory, etc. In various embodiments, working data is stored within the memory 1906. The data within the memory 1906 may be cleared or ultimately transferred to the storage 1908.

The storage 1908 includes any storage configured to retrieve and store data. Some examples of the storage 1908 include flash drives, hard drives, optical drives, cloud storage, and/or magnetic tape. Each of the memory system 1906 and the storage system 1908 comprises a computer-readable medium, which stores instructions or programs executable by processor 1904.

The input device 1910 is any device that inputs data (e.g., mouse and keyboard). The output device 1914 outputs data (e.g., a speaker or display). It will be appreciated that the storage 1908, input device 1910, and output device 1914 may be optional. For example, the routers/switchers may comprise the processor 1904 and memory 1906 as well as a device to receive and output data (e.g., the communication network interface 1912 and/or the output device 1914).

The communication network interface 1912 may be coupled to a network (e.g., network 1304) via the link 1918. The communication network interface 1912 may support communication over an Ethernet connection, a serial connection, a parallel connection, and/or an ATA connection. The communication network interface 1912 may also support wireless communication (e.g., 802.11 a/b/g/n, WiMax, LTE, WiFi). It will be apparent that the communication network interface 1912 may support many wired and wireless standards.

It will be appreciated that the hardware elements of the computing device 1902 are not limited to those depicted in FIG. 19. A computing device 1902 may comprise more or less hardware, software and/or firmware components than those depicted (e.g., drivers, operating systems, touch screens, biometric analyzers, and/or the like). Further, hardware elements may share functionality and still be within various embodiments described herein. In one example, encoding and/or decoding may be performed by the processor 1904 and/or a co-processor located on a GPU (i.e., NVidia).

It will be appreciated that an "engine," "system," "datastore," and/or "database" may comprise software, hardware, firmware, and/or circuitry. In one example, one or more software programs comprising instructions capable of being executable by a processor may perform one or more of the functions of the engines, datastores, databases, or systems described herein. In another example, circuitry may perform the same or similar functions. Alternative embodiments may comprise more, less, or functionally equivalent engines, systems, datastores, or databases, and still be within the scope of present embodiments. For example, the functionality of the various systems, engines, datastores, and/or databases may be combined or divided differently. The datastore or database may include cloud storage. It will further be appreciated that the term "or," as used herein, may be construed in either an inclusive or exclusive sense. Moreover, plural instances may be provided for resources, operations, or structures described herein as a single instance.

The datastores described herein may be any suitable structure (e.g., an active database, a relational database, a self-referential database, a table, a matrix, an array, a flat file, a documented-oriented storage system, a non-relational No-SQL system, and the like), and may be cloud-based or otherwise.

The systems, methods, engines, datastores, and/or databases described herein may be at least partially processor-implemented, with a particular processor or processors being an example of hardware. For example, at least some of the operations of a method may be performed by one or more processors or processor-implemented engines. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some example embodiments, the processors or processor-implemented engines may be located in a single geographic location (e.g., within a home environment, an office environment, or a server farm). In other example embodiments, the processors or processor-implemented engines may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

The present invention(s) are described above with reference to example embodiments. It will be apparent to those skilled in the art that various modifications may be made and other embodiments may be used without departing from the scope of the claims.

## Claims

1. A computing system (102) comprising:
one or more processors; and
memory storing instructions that, when executed by the one or more processors, cause the computing system (102) to perform:
receiving, by a central controller engine (202), a user request to perform one or more operations associated with user data (120), wherein the user data (120) includes first data (120a) and second data (120b);
selecting, by the central controller engine (202) based on the user request, a first service provider interface SPI, (208a) integrated into a first service (206a), the first SPI (208a) being configured to operate on the first data (120a) in a first datastore (114a) associated with the first service (206a), the first SPI (208a) including a common interface component (304) configured to facilitate communication between the central controller engine (202) and the first SPI (208a), and the first SPI (208a) including a first service interface component (302) configured based on a uniform access specification;
obtaining, by the first service (206a) using the first SPI (208a), at least a portion of the first data (120a) from the first datastore (114a) associated with the first service (206a), the at least a portion of the first data (120a) being formatted according to a first service data specification;
transforming, by the first SPI (208a) based on the uniform access specification, the at least a portion of the first data (120a), thereby generating transformed first data formatted according to the uniform access specification; and
providing, by the first service (206a) using the first SPI (208a), the transformed first data to a target service;
storing, by the central controller engine (202), a first state of the first service (206a);
determining, by the central controller engine (202), a failure of the first service (206a); and
relaunching, by the central controller engine (202), in response to the determining the failure of the first service (206a), the first service (206a) based on the stored first state of the first service (206a).

2. The system (102) of claim 1, wherein the instructions further cause the system (102) to perform: selecting, by the central controller engine (202) based on the user request, a second service provider interface (SPI) (208b) integrated into a second service (206b), the second SPI (208b) being configured to operate on the second data (120b) in a second datastore (114b) associated with the second service (206b), the second SPI (208b) including the common interface component (304) configured to facilitate communication between the central controller engine and the second SPI (208b), and the second SPI (208b) including a second service interface component (302) configured based on the uniform access specification;
obtaining, by the second service (206b) using the second SPI (208b), at least a portion of the second data (120b) from the second datastore (114b) associated with the second service (206b), the at least a portion of the second data (120b) being formatted according to a second service data specification;
transforming, by the second SPI (208b) based on the uniform access specification, the at least a portion of the second data (120b), thereby generating transformed second data formatted according to the uniform access specification; and
providing, by the second service (206b) using the second SPI (208b), the transformed second data to the target service.

3. The system (102) of claim 1 or claim 2, wherein the user data (120) comprises tenant data, the first data (120a) comprises usage data, and the second data (120b) comprises subscription data.

4. The system of claim 2, or of claim 3 when dependent upon claim 2, wherein the first service (206a) comprises a usage service, and the second service (206b) comprises a subscription service.

5. The system (102) of any preceding claim, wherein the central controller engine (202) comprises a different service from the target service.

6. The system (102) of any preceding claim, wherein the central controller engine (202) comprises the target service.

7. The system (102) of claim 2, of any of claims 3 to 6 when dependent upon claim 2, wherein the instructions further cause the system (102) to perform:
storing, by the central controller engine (202), a second state of the second service (206b).

8. The system (102) of claim 7, wherein the instructions further cause the system (102) to perform: determining, by central controller engine (202), a failure of the second service (206b); and
relaunching, by the central controller engine (202) in response to the determining the failure of the second service (206b), the second service (206b) based on the stored second state of the second service (206b).

9. The system of claim 2, or of any of claims 3 to 8 when dependent upon claim 2, wherein the providing, by the first service (206a) using the first SPI (208a), the transformed first data to the target service, comprises:
streaming, by a common communication component (312) of the first service (206a) using the first SPI (208a), the transformed first data to the target service; and
wherein the providing, by the second service (206b) using the second SPI (208b), the transformed second data (120b) to the target service, comprises:
streaming, by a common communication component (312) of the second service (206b) using the first SPI (208a), the transformed second data to the target service, the common communication component of the first service (206a) being the same as the common communication component (312) of the second service (206b).

10. A method (500) being implemented by a computing system including one or more physical processors and storage media storing machine-readable instructions, the method comprising:
receiving (502), by a central controller engine, a user request to perform one or more operations associated with user data, wherein the user data includes first data and second data;
selecting (504), by the central controller engine based on the user request, a first service provider interface, SPI,
integrated into a first service, the first SPI being configured to operate on the first data in a first datastore associated with the first service, the first SPI including a common interface component configured to facilitate communication between the central controller engine and the first SPI, and the first SPI including a first service interface component configured based on a uniform access specification;
obtaining (506), by the first service using the first SPI, at least a portion of the first data from the first datastore associated with the first service, the at least a portion of the first data being formatted according to a first service data specification;
transforming (508), by the first SPI based on the uniform access specification, the at least a portion of the first data, thereby generating transformed first data formatted according to the uniform access specification;
providing (510), by the first service using the first SPI, the transformed first data to a target service
storing, by the central controller engine, a first state of the first service;
determining, by central controller engine, a failure of the first service; and
relaunching, by the central controller engine in response to the determining the failure of the first service, the first service based on the stored first state of the first service.

11. The method (500) of claim 10, further comprising:
Selecting (512), by the central controller engine based on the user request, a second service provider interface (SPI) integrated into a second service, the second SPI being configured to operate on the second data in a second datastore associated with the second service, the second SPI including the common interface component configured to facilitate communication between the central controller engine and the second SPI, and the second SPI including a second service interface component configured based on the uniform access specification;
Obtaining (514), by the second service using the second SPI, at least a portion of the second data from the second datastore associated with the second service, the at least a portion of the second data being formatted according to a second service data specification;
Transforming (516), by the second SPI based on the uniform access specification, the at least a portion of the second data, thereby generating transformed second data formatted according to the uniform access specification; and
Providing (518), by the second service using the second SPI, the transformed second data to the target service.

12. The method (500) of claim 10 or claim 11, wherein the user data comprises tenant data, the first data comprises usage data, and the second data comprises subscription data.

13. The method (500) of claim 11 or of claim 12 when dependent upon claim 11, wherein the first service comprises a usage service, and the second service comprises a subscription service.

14. The method (500) of any of claims 10 to 13, wherein the central controller engine comprises a different service from the target service.

15. The method (500) of any of claims 10 to 14, wherein the central controller engine comprises the target service.

16. The method (500) of claim 11, or of any of claims 12 to 15 when dependent upon claim 11, further comprising:
storing, by the central controller engine, a second state of the second service.

17. The method (500) of claim 16, further comprising: determining, by central controller engine, a failure of the second service; and relaunching, by the central controller engine in response to the determining the failure of the second service, the second service based on the stored second state of the second service.

18. The method (500) of claim 11, or of any of claims 12 to 17 when dependent upon claim 11, wherein the providing, by the first service using the first SPI, the transformed first data to the target service, comprises:
streaming, by a common communication component of the first service using the first SPI, the transformed first data to the target service; and
wherein the providing, by the second service using the second SPI, the transformed second data to the target service, comprises:
streaming, by a common communication component of the second service using the first SPI, the transformed data to the target service, the common communication component of the first service being the same as the common communication component of the second service.

19. A non-transitory computer readable medium comprising instructions that, when executed, cause one or more processors to perform:
receiving (502), by a central controller engine, a user request to perform one or more operations associated with user data, wherein the user data includes first data and second data;
selecting (504), by the central controller engine based on the user request, a first service provider interface, SPI,
integrated into a first service, the first SPI being configured to operate on the first data in a first datastore associated with the first service, the first SPI including a common interface component configured to facilitate communication between the central controller engine and the first SPI, and the first SPI including a first service interface component configured based on a uniform access specification;
obtaining (506), by the first service using the first SPI, at least a portion of the first data from the first datastore associated with the first service, the at least a portion of the first data being formatted according to a first service data specification;
transforming (508), by the first SPI based on the uniform access specification, the at least a portion of the first data, thereby generating transformed first data formatted according to the uniform access specification;
providing (510), by the first service using the first SPI, the transformed first data to a target service;
storing, by the central controller engine, a first state of the first service;
determining, by central controller engine, a failure of the first service; and
relaunching, by the central controller engine in response to the determining the failure of the first service, the first service based on the stored first state of the first service.

20. The non-transitory computer readable medium of claim 19, wherein the instructions further cause the one or more processors to perform:
selecting (512), by the central controller engine based on the user request, a second service provider interface (SPI) integrated into a second service, the second SPI being configured to operate on the second data in a second datastore associated with the second service, the second SPI including the common interface component configured to facilitate communication between the central controller engine and the second SPI, and the second SPI including a second service interface component configured based on the uniform access specification;
obtaining (514), by the second service using the second SPI, at least a portion of the second data from the second datastore associated with the second service, the at least a portion of the second data being formatted according to a second service data specification;
transforming (516), by the second SPI based on the uniform access specification, the at least a portion of the second data, thereby generating transformed second data formatted according to the uniform access specification; and
providing (518), by the second service using the second SPI, the transformed second data to the target service.

## Patentansprüche

1. Computersystem (102), das Folgendes umfasst:
einen oder mehrere Prozessoren; und
Speicher, der Befehle speichert, die bei Ausführung durch den einen oder die mehreren Prozessoren das Computersystem (102) veranlassen, Folgendes durchzuführen:
Empfangen, durch eine zentrale Controller-Engine (202), einer Benutzeranforderung zum Durchführen einer oder mehrerer Benutzerdaten (120) zugeordneter Operationen, wobei die Benutzerdaten (120) erste Daten (120a) und zweite Daten (120b) einschließen;
Auswählen, durch die zentrale Controller-Engine (202) auf der Basis der Benutzeranforderung, einer in einen ersten Dienst (206a) integrierten ersten Dienstanbieterschnittstelle, SPI, (208a), wobei die erste SPI (208a) zum Arbeiten an den ersten Daten (120a) in einem dem ersten Dienst (206a) zugeordneten ersten Datenspeicher (114a) konfiguriert ist, wobei die erste SPI (208a) eine gemeinsame Schnittstellenkomponente (304) einschließt, die zum Erleichtern der Kommunikation zwischen der zentralen Controller-Engine (202) und der ersten SPI (208a) konfiguriert ist, und wobei die erste SPI (208a) eine erste Dienstschnittstellenkomponente (302) einschließt, die auf der Basis einer einheitlichen Zugriffsspezifikation konfiguriert ist;
Erhalten, durch den ersten Dienst (206a) unter Verwendung der ersten SPI (208a), mindestens eines Teils der ersten Daten (120a) von dem dem ersten Dienst (206a) zugeordneten ersten Datenspeicher (114a), wobei der mindestens eine Teil der ersten Daten (120a) gemäß einer ersten Dienstdatenspezifikation formatiert ist;
Transformieren, durch die erste SPI (208a) auf der Basis der einheitlichen Zugriffsspezifikation, des mindestens einen Teils der ersten Daten (120a), um dadurch transformierte erste Daten zu erzeugen, die gemäß der einheitlichen Zugriffsspezifikation formatiert sind; und
Bereitstellen, durch den ersten Dienst (206a) unter Verwendung der ersten SPI (208a), der transformierten ersten Daten an einen Zieldienst;
Speichern, durch die zentrale Controller-Engine (202), eines ersten Zustands des ersten Dienstes (206a);
Feststellen, durch die zentrale Controller-Engine (202), eines Ausfalls des ersten Dienstes (206a); und
erneutes Starten, durch die zentrale Controller-Engine (202) als Reaktion auf das Feststellen des Ausfalls des ersten Dienstes (206a), des ersten Dienstes (206a) auf der Basis des gespeicherten ersten Zustands des ersten Dienstes (206a).

2. System (102) nach Anspruch 1, wobei die Befehle ferner das System (102) veranlassen, Folgendes durchzuführen: Auswählen, durch die zentrale Controller-Engine (202) auf der Basis der Benutzeranforderung, einer in einen zweiten Dienst (206b) integrierten zweiten Dienstanbieterschnittstelle (SPI) (208b), wobei die zweite SPI (208b) zum Arbeiten an den zweiten Daten (120b) in einem dem zweiten Dienst (206b) zugeordneten zweiten Datenspeicher (114b) konfiguriert ist, wobei die zweite SPI (208b) die gemeinsame Schnittstellenkomponente (304) einschließt, die zum Erleichtern der Kommunikation zwischen der zentralen Controller-Engine und der zweiten SPI (208b) konfiguriert ist, und wobei die zweite SPI (208b) eine zweite Dienstschnittstellenkomponente (302) einschließt, die auf der Basis der einheitlichen Zugriffsspezifikation konfiguriert ist;
Erhalten, durch den zweiten Dienst (206b) unter Verwendung der zweiten SPI (208b), mindestens eines Teils der zweiten Daten (120b) von dem dem zweiten Dienst (206b) zugeordneten zweiten Datenspeicher (114b), wobei der mindestens eine Teil der zweiten Daten (120b) gemäß einer zweiten Dienstdatenspezifikation formatiert ist;
Transformieren, durch die zweite SPI (208b) auf der Basis der einheitlichen Zugriffsspezifikation, des mindestens einen Teils der zweiten Daten (120b), um dadurch transformierte zweite Daten zu erzeugen, die gemäß der einheitlichen Zugriffsspezifikation formatiert sind; und
Bereitstellen, durch den zweiten Dienst (206b) unter Verwendung der zweiten SPI (208b), der transformierten zweiten Daten an den Zieldienst.

3. System (102) nach Anspruch 1 oder Anspruch 2, wobei die Benutzerdaten (120) Mandantendaten, die ersten Daten (120a) Nutzungsdaten und die zweiten Daten (120b) Abonnementdaten umfassen.

4. System nach Anspruch 2 oder nach Anspruch 3 in Abhängigkeit von Anspruch 2, wobei der erste Dienst (206a) einen Nutzungsdienst und der zweite Dienst (206b) einen Abonnementdienst umfasst.

5. System (102) nach einem vorhergehenden Anspruch, wobei die zentrale Controller-Engine (202) einen anderen Dienst als den Zieldienst umfasst.

6. System (102) nach einem vorhergehenden Anspruch, wobei die zentrale Controller-Engine (202) den Zieldienst umfasst.

7. System (102) nach Anspruch 2 oder nach einem der Ansprüche 3 bis 6 in Abhängigkeit von Anspruch 2, wobei die Befehle das System (102) ferner veranlassen, Folgendes durchzuführen:
Speichern, durch die zentrale Controller-Engine (202), eines zweiten Zustands des zweiten Dienstes (206b).

8. System (102) nach Anspruch 7, wobei die Befehle das System (102) ferner veranlassen, Folgendes durchzuführen: Feststellen, durch die zentrale Controller-Engine (202), eines Ausfalls des zweiten Dienstes (206b); und
erneutes Starten, durch die zentrale Steuermaschine (202) als Reaktion auf das Feststellen des Ausfalls des zweiten Dienstes (206b), des zweiten Dienstes (206b) auf der Basis des gespeicherten zweiten Zustands des zweiten Dienstes (206b).

9. System nach Anspruch 2 oder nach einem der Ansprüche 3 bis 8 in Abhängigkeit von Anspruch 2, wobei das Bereitstellen, durch den ersten Dienst (206a) unter Verwendung der ersten SPI (208a), der transformierten ersten Daten an den Zieldienst Folgendes umfasst:
Streamen, durch eine gemeinsame Kommunikationskomponente (312) des ersten Dienstes (206a) unter Verwendung der ersten SPI (208a), der transformierten ersten Daten zum Zieldienst; und
wobei das Bereitstellen, durch den zweiten Dienst (206b) unter Verwendung der zweiten SPI (208b), der transformierten zweiten Daten (120b) an den Zieldienst Folgendes umfasst:
Streamen, durch eine gemeinsame Kommunikationskomponente (312) des zweiten Dienstes (206b) unter Verwendung der ersten SPI (208a), der transformierten zweiten Daten zum Zieldienst, wobei die gemeinsame Kommunikationskomponente des ersten Dienstes (206a) dieselbe ist wie die gemeinsame Kommunikationskomponente (312) des zweiten Dienstes (206b).

10. Verfahren (500), das durch ein Computersystem implementiert wird, das einen oder mehrere physische Prozessoren und maschinenlesbare Befehle speichernde Speichermedien einschließt, wobei das Verfahren Folgendes umfasst:
Empfangen (502), durch eine zentrale Controller-Engine, einer Benutzeranforderung zum Durchführen einer oder mehrerer Benutzerdaten zugeordneter Operationen, wobei die Benutzerdaten erste Daten und zweite Daten einschließen;
Auswählen (504), durch die zentrale Controller-Engine auf der Basis der Benutzeranforderung, einer in einen ersten Dienst integrierten ersten Dienstanbieterschnittstelle, SPI, wobei die erste SPI zum Arbeiten an den ersten Daten in einem dem ersten Dienst zugeordneten ersten Datenspeicher konfiguriert ist, wobei die erste SPI eine gemeinsame Schnittstellenkomponente einschließt, die zum Erleichtern der Kommunikation zwischen der zentralen Controller-Engine und der ersten SPI konfiguriert ist, und wobei die erste SPI eine erste Dienstschnittstellenkomponente einschließt, die auf der Basis einer einheitlichen Zugriffsspezifikation konfiguriert ist;
Erhalten (506), durch den ersten Dienst unter Verwendung der ersten SPI, mindestens eines Teils der ersten Daten aus dem dem ersten Dienst zugeordneten ersten Datenspeicher, wobei der mindestens eine Teil der ersten Daten gemäß einer ersten Dienstdatenspezifikation formatiert ist;
Transformieren (508), durch die erste SPI auf der Basis der einheitlichen Zugriffsspezifikation, des mindestens einen Teils der ersten Daten, um dadurch transformierte erste Daten zu erzeugen, die gemäß der einheitlichen Zugriffsspezifikation formatiert sind;
Bereitstellen (510), durch den ersten Dienst unter Verwendung der ersten SPI, der transformierten ersten Daten an einen Zieldienst
Speichern, durch die zentrale Controller-Engine, eines ersten Zustands des ersten Dienstes;
Feststellen, durch die zentrale Controller-Engine, eines Ausfalls des ersten Dienstes; und
erneutes Starten, durch die zentrale Controller-Engine als Reaktion auf das Feststellen des Ausfalls des ersten Dienstes, des ersten Dienstes auf der Basis des gespeicherten ersten Zustands des ersten Dienstes.

11. Verfahren (500) nach Anspruch 10, das ferner Folgendes umfasst:
Auswählen (512), durch die zentrale Controller-Engine auf der Basis der Benutzeranforderung, einer in einen zweiten Dienst integrierten zweiten Dienstanbieterschnittstelle (SPI), wobei die zweite SPI zum Arbeiten an den zweiten Daten in einem dem zweiten Dienst zugeordneten zweiten Datenspeicher konfiguriert ist, wobei die zweite SPI die gemeinsame Schnittstellenkomponente einschließt, die zum Erleichtern der Kommunikation zwischen der zentralen Controller-Engine und der zweiten SPI konfiguriert ist, und wobei die zweite SPI eine zweite Dienstschnittstellenkomponente einschließt, die auf der Basis der einheitlichen Zugriffsspezifikation konfiguriert ist;
Erhalten (514), durch den zweiten Dienst unter Verwendung der zweiten SPI, mindestens eines Teils der zweiten Daten aus dem dem zweiten Dienst zugeordneten zweiten Datenspeicher, wobei der mindestens eine Teil der zweiten Daten gemäß einer zweiten Dienstdatenspezifikation formatiert ist;
Transformieren (516), durch die zweite SPI auf der Basis der einheitlichen Zugriffsspezifikation, des mindestens einen Teils der zweiten Daten, um dadurch transformierte zweite Daten zu erzeugen, die gemäß der einheitlichen Zugriffsspezifikation formatiert sind; und
Bereitstellen (518), durch den zweiten Dienst unter Verwendung der zweiten SPI, der transformierten zweiten Daten an den Zieldienst.

12. Verfahren (500) nach Anspruch 10 oder Anspruch 11, wobei die Benutzerdaten Mandantendaten, die ersten Daten Nutzungsdaten und die zweiten Daten Abonnementdaten umfassen.

13. Verfahren (500) nach Anspruch 11 oder nach Anspruch 12 in Abhängigkeit von Anspruch 11, wobei der erste Dienst einen Nutzungsdienst und der zweite Dienst einen Abonnementdienst umfasst.

14. Verfahren (500) nach einem der Ansprüche 10 bis 13, wobei die zentrale Controller-Engine einen anderen Dienst als den Zieldienst umfasst.

15. Verfahren (500) nach einem der Ansprüche 10 bis 14, bei dem die zentrale Controller-Engine den Zieldienst umfasst.

16. Verfahren (500) nach Anspruch 11 oder nach einem der Ansprüche 12 bis 15 in Abhängigkeit von Anspruch 11, das ferner Folgendes umfasst:
Speichern, durch die zentrale Controller-Engine, eines zweiten Zustands des zweiten Dienstes.

17. Verfahren (500) nach Anspruch 16, das ferner Folgendes umfasst: Feststellen, durch die zentrale Controller-Engine, eines Ausfalls des zweiten Dienstes; und erneutes Starten, durch die zentrale Controller-Engine als Reaktion auf das Feststellen des Ausfalls des zweiten Dienstes, des zweiten Dienstes auf der Basis des gespeicherten zweiten Zustands des zweiten Dienstes.

18. Verfahren (500) nach Anspruch 11 oder nach einem der Ansprüche 12 bis 17 in Abhängigkeit von Anspruch 11, wobei das Bereitstellen, durch den ersten Dienst unter Verwendung der ersten SPI, der transformierten ersten Daten an den Zieldienst Folgendes umfasst:
Streamen, durch eine gemeinsame Kommunikationskomponente des ersten Dienstes unter Verwendung der ersten SPI, der transformierten ersten Daten zum Zieldienst; und
wobei das Bereitstellen, durch den zweiten Dienst unter Verwendung der zweiten SPI, der transformierten zweiten Daten an den Zieldienst Folgendes umfasst:
Streamen, durch eine gemeinsame Kommunikationskomponente des zweiten Dienstes unter Verwendung der ersten SPI, der transformierten Daten zum Zieldienst, wobei die gemeinsame Kommunikationskomponente des ersten Dienstes dieselbe ist wie die gemeinsame Kommunikationskomponente des zweiten Dienstes.

19. Nichtflüchtiges computerlesbares Medium, das Befehle umfasst, die bei Ausführung einen oder mehrere Prozessoren veranlassen, Folgendes durchzuführen:
Empfangen (502), durch eine zentrale Controller-Engine, einer Benutzeranforderung zum Durchführen einer oder mehrerer Benutzerdaten zugeordneter Operationen, wobei die Benutzerdaten erste Daten und zweite Daten einschließen;
Auswählen (504), durch die zentrale Controller-Engine auf der Basis der Benutzeranforderung, einer in einen ersten Dienst integrierten ersten Dienstanbieterschnittstelle, SPI, wobei die erste SPI zum Arbeiten an den ersten Daten in einem dem ersten Dienst zugeordneten ersten Datenspeicher konfiguriert ist, wobei die erste SPI eine gemeinsame Schnittstellenkomponente einschließt, die zum Erleichtern der Kommunikation zwischen der zentralen Controller-Engine und der ersten SPI konfiguriert ist, und wobei die erste SPI eine erste Dienstschnittstellenkomponente einschließt, die auf der Basis einer einheitlichen Zugriffsspezifikation konfiguriert ist;
Erhalten (506), durch den ersten Dienst unter Verwendung der ersten SPI, mindestens eines Teils der ersten Daten aus dem dem ersten Dienst zugeordneten ersten Datenspeicher, wobei der mindestens eine Teil der ersten Daten gemäß einer ersten Dienstdatenspezifikation formatiert ist;
Transformieren (508), durch die erste SPI auf der Basis der einheitlichen Zugriffsspezifikation, des mindestens einen Teils der ersten Daten, um dadurch transformierte erste Daten zu erzeugen, die gemäß der einheitlichen Zugriffsspezifikation formatiert sind;
Bereitstellen (510), durch den ersten Dienst unter Verwendung der ersten SPI, der transformierten ersten Daten an einen Zieldienst;
Speichern, durch die zentrale Controller-Engine, eines ersten Zustands des ersten Dienstes;
Feststellen, durch die zentrale Controller-Engine, eines Ausfalls des ersten Dienstes; und
erneutes Starten, durch die zentrale Controller-Engine als Reaktion auf das Feststellen des Ausfalls des ersten Dienstes, des ersten Dienstes auf der Basis des gespeicherten ersten Zustands des ersten Dienstes.

20. Nichtflüchtiges computerlesbares Medium nach Anspruch 19, wobei die Befehle ferner den einen oder die mehreren Prozessoren veranlassen, Folgendes durchzuführen:
Auswählen (512), durch die zentrale Controller-Engine auf der Basis der Benutzeranforderung, einer in einen zweiten Dienst integrierten zweiten Dienstanbieterschnittstelle (SPI), wobei die zweite SPI zum Arbeiten an den zweiten Daten in einem dem zweiten Dienst zugeordneten zweiten Datenspeicher konfiguriert ist, wobei die zweite SPI die gemeinsame Schnittstellenkomponente einschließt, die zum Erleichtern der Kommunikation zwischen der zentralen Controller-Engine und der zweiten SPI konfiguriert ist, und wobei die zweite SPI eine zweite Dienstschnittstellenkomponente einschließt, die auf der Basis der einheitlichen Zugriffsspezifikation konfiguriert ist;
Erhalten (514), durch den zweiten Dienst unter Verwendung der zweiten SPI, mindestens eines Teils der zweiten Daten aus dem dem zweiten Dienst zugeordneten zweiten Datenspeicher, wobei der mindestens eine Teil der zweiten Daten gemäß einer zweiten Dienstdatenspezifikation formatiert ist;
Transformieren (516), durch die zweite SPI auf der Basis der einheitlichen Zugriffsspezifikation, des mindestens einen Teils der zweiten Daten, um dadurch transformierte zweite Daten zu erzeugen, die gemäß der einheitlichen Zugriffsspezifikation formatiert sind; und
Bereitstellen (518), durch den zweiten Dienst unter Verwendung der zweiten SPI, der transformierten zweiten Daten an den Zieldienst.

## Revendications

1. Système informatique (102) comprenant :
un ou plusieurs processeurs ; et
une mémoire stockant des instructions qui, lorsqu'elles sont exécutées par les un ou plusieurs processeurs, amènent le système informatique (102) à réaliser :
la réception, par un moteur de contrôleur central (202), d'une demande d'utilisateur pour réaliser une ou plusieurs opérations associées à des données d'utilisateur (120), dans lequel les données d'utilisateur (120) incluent des premières données (120a) et des deuxièmes données (120b) ;
la sélection, par le moteur de contrôleur central (202) sur la base de la demande d'utilisateur, d'une première interface de fournisseur de service, SPI, (208a) intégrée dans un premier service (206a), la première SPI (208a) étant configurée pour fonctionner sur les premières données (120a) dans un premier entrepôt de données (114a) associé au premier service (206a), la première SPI (208a) incluant un composant d'interface commun (304) configuré pour faciliter la communication entre le moteur de contrôleur central (202) et la première SPI (208a), et la première SPI (208a) incluant un premier composant d'interface de service (302) configuré sur la base d'une spécification d'accès uniforme ;
l'obtention, par le premier service (206a) utilisant la première SPI (208a), d'au moins une partie des premières données (120a) provenant du premier entrepôt de données (114a) associé au premier service (206a), l'au moins une partie des premières données (120a) étant formatée selon une première spécification de données de service ;
la transformation, par la première SPI (208a) sur la base de la spécification d'accès uniforme, de l'au moins une partie des premières données (120a), générant ainsi des premières données transformées formatées selon la spécification d'accès uniforme ; et
la fourniture, par le premier service (206a) utilisant la première SPI (208a), des premières données transformées à un service cible ;
le stockage, par le moteur de contrôleur central (202), d'un premier état du premier service (206a) ;
la détermination, par le moteur de contrôleur central (202), d'un échec du premier service (206a) ; et
la relance, par le moteur de contrôleur central (202), en réponse à la détermination de l'échec du premier service (206a), du premier service (206a) sur la base du premier état stocké du premier service (206a).

2. Système (102) selon la revendication 1, dans lequel les instructions amènent en outre le système (102) à réaliser : la sélection, par le moteur de contrôleur central (202) sur la base de la demande d'utilisateur, d'une deuxième interface de fournisseur de service (SPI) (208b) intégrée dans un deuxième service (206b), la deuxième SPI (208b) étant configurée pour fonctionner sur les deuxièmes données (120b) dans un deuxième entrepôt de données (114b) associé au deuxième service (206b), la deuxième SPI (208b) incluant le composant d'interface commun (304) configuré pour faciliter la communication entre le moteur de contrôleur central et la deuxième SPI (208b), et la deuxième SPI (208b) incluant un deuxième composant d'interface de service (302) configuré sur la base de la spécification d'accès uniforme ;
l'obtention, par le deuxième service (206b) utilisant la deuxième SPI (208b), d'au moins une partie des deuxièmes données (120b) provenant du deuxième entrepôt de données (114b) associé au deuxième service (206b), l'au moins une partie des deuxièmes données (120b) étant formatée selon une deuxième spécification de données de service ;
la transformation, par la deuxième SPI (208b) sur la base de la spécification d'accès uniforme, de l'au moins une partie des deuxièmes données (120b), générant ainsi des deuxièmes données transformées formatées selon la spécification d'accès uniforme ; et
la fourniture, par le deuxième service (206b) utilisant la deuxième SPI (208b), des deuxièmes données transformées au service cible.

3. Système (102) selon la revendication 1 ou la revendication 2, dans lequel les données d'utilisateur (102) comprennent des données de locataire, les premières données (120a) comprennent des données d'utilisation et les deuxièmes données (120b) comprennent des données d'abonnement.

4. Système selon la revendication 2, ou selon la revendication 3 lorsqu'elle dépend de la revendication 2, dans lequel le premier service (206a) comprend un service d'utilisation et le deuxième service (206b) comprend un service d'abonnement.

5. Système (102) selon une quelconque revendication précédente, dans lequel le moteur de contrôleur central (202) comprend un service différent du service cible.

6. Système (102) selon une quelconque revendication précédente, dans lequel le moteur de contrôleur central (202) comprend le service cible.

7. Système (102) selon la revendication 2, selon l'une quelconque des revendications 3 à 6 lorsqu'elles dépendent de la revendication 2, dans lequel les instructions amènent en outre le système (102) à réaliser :
le stockage, par le moteur de contrôleur central (202), d'un deuxième état du deuxième service (206b).

8. Système (102) selon la revendication 7, dans lequel les instructions amènent en outre le système (102) à réaliser : la détermination, par le moteur de contrôleur central (202), d'un échec du deuxième service (206b) ; et
la relance, par le moteur de contrôleur central (202) en réponse à la détermination de l'échec du deuxième service (206b), du deuxième service (206b) sur la base du deuxième état stocké du deuxième service (206b).

9. Système selon la revendication 2, ou selon l'une quelconque des revendications 3 à 8 lorsqu'elles dépendent de la revendication 2, dans lequel la fourniture, par le premier service (206a) utilisant la première SPI (208a), des premières données transformées au service cible, comprend :
la diffusion en continu, par un composant de communication commun (312) du premier service (206a) utilisant la première SPI (208a), des premières données transformées au service cible ; et
dans lequel la fourniture, par le deuxième service (206b) utilisant la deuxième SPI (208b), des deuxièmes données transformées (120b) au service cible, comprend :
la diffusion en continu, par un composant de communication commun (312) du deuxième service (206b) utilisant la première SPI (208a), des deuxièmes données transformées au service cible, le composant de communication commun du premier service (206a) étant identique au composant de communication commun (312) du deuxième service (206b).

10. Procédé (500) qui est mis en oeuvre par un système informatique incluant un ou plusieurs processeurs physiques et supports de stockage stockant des instructions lisibles par machine, le procédé comprenant :
la réception (502), par un moteur de contrôleur central, d'une demande d'utilisateur pour réaliser une ou plusieurs opérations associées à des données d'utilisateur, dans lequel les données d'utilisateur incluent des premières données et des deuxièmes données ;
la sélection (504), par le moteur de contrôleur central sur la base de la demande d'utilisateur, d'une première interface de fournisseur de service, SPI, intégrée dans un premier service, la première SPI étant configurée pour fonctionner sur les premières données dans un premier entrepôt de données associé au premier service, la première SPI incluant un composant d'interface commun configuré pour faciliter la communication entre le moteur de contrôleur central et la première SPI, et la première SPI incluant un premier composant d'interface de service configuré sur la base d'une spécification d'accès uniforme ;
l'obtention (506), par le premier service utilisant la première SPI, d'au moins une partie des premières données provenant du premier entrepôt de données associé au premier service, l'au moins une partie des premières données étant formatée selon une première spécification de données de service ;
la transformation (508), par la première SPI sur la base de la spécification d'accès uniforme, de l'au moins une partie des premières données, générant ainsi des premières données transformées formatées selon la spécification d'accès uniforme ;
la fourniture (510), par le premier service utilisant la première SPI, des premières données transformées à un service cible
le stockage, par le moteur de contrôleur central, d'un premier état du premier service ;
la détermination, par le moteur de contrôleur central, d'un échec du premier service ; et
la relance, par le moteur de contrôleur central en réponse à la détermination de l'échec du premier service, du premier service sur la base du premier état stocké du premier service.

11. Procédé (500) selon la revendication 10, comprenant en outre :
la sélection (512), par le moteur de contrôleur central sur la base de la demande d'utilisateur, d'une deuxième interface de fournisseur de service (SPI) intégrée dans un deuxième service, la deuxième SPI étant configurée pour fonctionner sur les deuxièmes données dans un deuxième entrepôt de données associé au deuxième service, la deuxième SPI incluant le composant d'interface commun configuré pour faciliter la communication entre le moteur de contrôleur central et la deuxième SPI, et la deuxième SPI incluant un deuxième composant d'interface de service configuré sur la base de la spécification d'accès uniforme ;
l'obtention (514), par le deuxième service utilisant la deuxième SPI, d'au moins une partie des deuxièmes données provenant du deuxième entrepôt de données associé au deuxième service, l'au moins une partie des deuxièmes données étant formatée selon une deuxième spécification de données de service ;
la transformation (516), par la deuxième SPI sur la base de la spécification d'accès uniforme, de l'au moins une partie des deuxièmes données, générant ainsi des deuxièmes données transformées formatées selon la spécification d'accès uniforme ; et
la fourniture (518), par le deuxième service utilisant la deuxième SPI, des deuxièmes données transformées au service cible.

12. Procédé (500) selon la revendication 10 ou la revendication 11, dans lequel les données d'utilisateur comprennent des données de locataire, les premières données comprennent des données d'utilisation et les deuxièmes données comprennent des données d'abonnement.

13. Procédé (500) selon la revendication 11 ou selon la revendication 12 lorsqu'elle dépend de la revendication 11, dans lequel le premier service comprend un service d'utilisation et le deuxième service comprend un service d'abonnement.

14. Procédé (500) selon l'une quelconque des revendications 10 à 13, dans lequel le moteur de contrôleur central comprend un service différent du service cible.

15. Procédé (500) selon l'une quelconque des revendications 10 à 14, dans lequel le moteur de contrôleur central comprend le service cible.

16. Procédé (500) selon la revendication 11, ou selon l'une quelconque des revendications 12 à 15 lorsqu'elles dépendent de la revendication 11, comprenant en outre :
le stockage, par le moteur de contrôleur central, d'un deuxième état du deuxième service.

17. Procédé (500) selon la revendication 16, comprenant en outre : la détermination, par le moteur de contrôleur central, d'un échec du deuxième service ; et la relance, par le moteur de contrôleur central en réponse à la détermination de l'échec du deuxième service, du deuxième service sur la base du deuxième état stocké du deuxième service.

18. Procédé (500) selon la revendication 11, ou selon l'une quelconque des revendications 12 à 17 lorsqu'elles dépendent de la revendication 11, dans lequel la fourniture, par le premier service utilisant la première SPI, des premières données transformées au service cible, comprend :
la diffusion en continu, par un composant de communication commun du premier service utilisant la première SPI, des premières données transformées au service cible ; et
dans lequel la fourniture, par le deuxième service utilisant la deuxième SPI, des deuxièmes données transformées au service cible comprend :
la diffusion en continu, par un composant de communication commun du deuxième service utilisant la première SPI, des données transformées au service cible, le composant de communication commun du premier service étant identique au composant de communication commun du deuxième service.

19. Support non transitoire lisible par ordinateur comprenant des instructions qui, lorsqu'elles sont exécutées, amènent les un ou plusieurs processeurs à réaliser :
la réception (502), par un moteur de contrôleur central, d'une demande d'utilisateur pour réaliser une ou plusieurs opérations associées à des données d'utilisateur, dans lequel les données d'utilisateur incluent des premières données et des deuxièmes données ;
la sélection (504), par le moteur de contrôleur central sur la base de la demande d'utilisateur, d'une première interface de fournisseur de service, SPI, intégrée dans un premier service, la première SPI étant configurée pour fonctionner sur les premières données dans un premier entrepôt de données associé au premier service, la première SPI incluant un composant d'interface commun configuré pour faciliter la communication entre le moteur de contrôleur central et la première SPI, et la première SPI incluant un premier composant d'interface de service configuré sur la base d'une spécification d'accès uniforme ;
l'obtention (506), par le premier service utilisant la première SPI, d'au moins une partie des premières données provenant du premier entrepôt de données associé au premier service, l'au moins une partie des premières données étant formatée selon une première spécification de données de service ;
la transformation (508), par la première SPI sur la base de la spécification d'accès uniforme, de l'au moins une partie des premières données, générant ainsi des premières données transformées formatées selon la spécification d'accès uniforme ;
la fourniture (510), par le premier service utilisant la première SPI, des premières données transformées à un service cible ;
le stockage, par le moteur de contrôleur central, d'un premier état du premier service ;
la détermination, par le moteur de contrôleur central, d'un échec du premier service ; et
la relance, par le moteur de contrôleur central en réponse à la détermination de l'échec du premier service, du premier service sur la base du premier état stocké du premier service.

20. Support non transitoire lisible par ordinateur selon la revendication 19, dans lequel les instructions amènent en outre les un ou plusieurs processeurs à réaliser :
la sélection (512), par le moteur de contrôleur central sur la base de la demande d'utilisateur, d'une deuxième interface de fournisseur de service (SPI) intégrée dans un deuxième service, la deuxième SPI étant configurée pour fonctionner sur les deuxièmes données dans un deuxième entrepôt de données associé au deuxième service, la deuxième SPI incluant le composant d'interface commun configuré pour faciliter la communication entre le moteur de contrôleur central et la deuxième SPI, et la deuxième SPI incluant un deuxième composant d'interface de service configuré sur la base de la spécification d'accès uniforme ;
l'obtention (514), par le deuxième service utilisant la deuxième SPI, d'au moins une partie des deuxièmes données provenant du deuxième entrepôt de données associé au deuxième service, l'au moins une partie des deuxièmes données étant formatée selon une deuxième spécification de données de service ;
la transformation (516), par la deuxième SPI sur la base de la spécification d'accès uniforme, de l'au moins une partie des deuxièmes données, générant ainsi des deuxièmes données transformées formatées selon la spécification d'accès uniforme ; et
la fourniture (518), par le deuxième service utilisant la deuxième SPI, des deuxièmes données transformées au service cible.
